# EUROPEAN PATENT SPECIFICATION

(11) **EP 2 326 674 B1**
(45) Date of publication and mention of the grant of the patent: **05.03.2014**
(21) Application number: 09789295.4
(22) Date of filing: 11.09.2009
(51) Int. Cl.: C09D 139/02

(54) **IMPROVED BARRIER LAYER**
VERBESSERTE BARRIERESCHICHT
COUCHE AMÉLIORÉE FORMANT UNE BARRIÈRE

(30) Priority: 12.09.2008 US 96742 P
(43) Date of publication of application: 01.06.2011
(73) Proprietor: Sekisui Specialty Chemicals America, LLC, Dallas, TX 75234 (US)
(72) Inventor: BRONDSEMA, Philip, J., Houston TX 77059 (US); COULSON, Nancy, S., League City TX 77573 (US); CUPTA, Mark, G., Dallas TX 75219 (US); VICARI, Richard, Pearland TX 77584 (US)
(74) Representative: Ackermann, Joachim
(86) International application number: PCT/US2009/005097
(87) International publication number: WO 2010/030371

(56) References cited:
- WO-A1-98/04411
- WO-A2-03/054030
- US-A- 5 300 566

## Description

### BACKGROUND OF THE INVENTION

The present invention generally relates to a barrier layer, a method of producing a barrier layer, and articles comprising a barrier layer.

Numerous referenced are directed to barrier layers and/or packages comprising barrier layers. For example, U.S. Patent Publication No. 2006/0246241 is generally directed to a packaging material which comprises a polymeric base component and a barrier component which coats and lines a surface of the base component, the barrier component inhibiting migration of gases, vapors and liquids through the base component The barrier component comprises a polymeric layer comprising at least two different polymeric species which are polar and which are water-soluble. The different species have different chemical compositions and are complementary in that they are bound together physically by interpolymer complexation to form an interpenetrating physical network. The disclosure also provides a process for producing the packaging material which comprises coating at least one surface of the base component with the barrier component and causing the complementary species to interact together physically by interpolymer complexation to form an interpenetrating physical network.

US 5300566 is directed to polyvinyl alcohol-polyvinyl amine copolymers containing a low level of amine functionality. WO 03/054030 is directed to coating layers comprising polyvinyl alcohol-polyvinyl amine polymers.

WO2007/002322 is generally directed to a coating composition for providing substrates with oxygen barrier properties is disclosed. The substrate may be, for instance, a film, such as a polyester film. The coating composition includes a copolymer of maleic acid and acrylic acid and a copolymer of vinyl alcohol and a vinylamine. The barrier coating formed from the coating composition is typically less than about (1) micron in thickness and provides reduced oxygen transmission even at relatively high relative humidities.

While numerous referenced are directed to barrier layers, their production and use, barrier layers applied as water-soluble solutions which are effective against carbon dioxide and oxygen transmission have been largely ignored.

As can be seen, there is a need for barrier layers, which are applied as water-soluble compositions, which provide improved CO₂ and/or O₂ barrier properties, in particular, to rigid substrates.

### SUMMARY OF THE INVENTION

In one aspect of the present invention, a barrier layer comprises a polyvinyl amine-polyvinyl alcohol copolymer applied to a substrate as a water-soluble composition, wherein the polyvinyl amine-polyvinyl alcohol copolymer is formed by copolymerizing: (a) from 99 to 1 mol% of N-vinylformamide and (b) from 1 to 99 mol% of one or more vinyl C₁-C₁₀- alkyl esters, and then hydrolyzing from 30 to 100 mol% of the formyl groups from the copolymerized units (a) to form amino groups and from 30 to 100 mol% of the C₁-C₁₀ alkyl ester groups from the copolymerized units (b) to form hydroxyl groups, wherein the copolymer has a unimodal compositional distribution as evidenced by essentially one peak in a gel permeation gradient elution chromatographic analysis and wherein the polyvinyl amine-polyvinyl alcohol copolymer is essentially free of amidine rings as evidenced by a lack of an absorption in a ¹³C NMR spectrum of the copolymer consistent with an amidine carbon atom absorption.

The foregoing has outlined rather broadly the features and technical advantages of the present invention in order that the detailed description of the invention that follows may be better understood. Additional features and advantages of the invention will be described hereinafter which form the subject of the claims of the invention.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

In the following description, numerous specific details are set forth to provide a thorough understanding of the present invention. However, it will be obvious to those skilled in the art that the present invention may be practiced without such specific details. In other instances, well-known devices have been shown in block diagram form in order not to obscure the present invention in unnecessary detail. For the most part, details unnecessary to obtain a complete understanding of the present invention have been omitted in as much as such details are within the skills of persons of ordinary skill in the relevant art.

Terms used herein include a reactor, which is defined as any container(s) in which a chemical reaction occurs. As used herein, the new numbering scheme for the Periodic Table Groups are used as in CHEMICAL AND ENGINEERING NEWS, 63(5), 27 (1985). Polymer may be used to refer to homopolymers, copolymers, interpolymers, and terpolymers. Likewise, a copolymer may refer to a polymer comprising at least two monomers, optionally with other monomers.

When a polymer is referred to as comprising a monomer, the monomer is present in the polymer in the polymerized form of the monomer or in the derivative form of the monomer. Likewise, when catalyst components are described as comprising neutral stable forms of the components, it is well understood by one skilled in the art, that the ionic form of the component is the form that reacts with the monomers to produce polymers.

As used herein, structural formulas are employed as is commonly understood in the chemical arts; lines ("-") used to represent associations between atoms, as well as the phrases "associated with", "bonded to" and "bonding", are not limited to representing a certain type of chemical bond, as these lines and phrases are meant to represent a "chemical bond"; a "chemical bond," defined as an attractive force between atoms that is strong enough to permit the combined aggregate to function as a unit, or "compound".

Broadly, the present invention generally provides a barrier layer, a method of producing a barrier layer, and articles comprising a barrier layer.

### Barrier Layer Composition

The barrier layer comprises a copolymer comprising vinyl alcohol and a vinyl amine, which may be referred to herein simply as the polyvinyl amine copolymer, and/or by the abbreviation PVAm, wherein the polyvinyl amine-polyvinyl alcohol copolymer is formed by copolymerizang: (a) from 99 to 1 mol% of N-vinylformamide and (b) from 1 to 99 mol% of one or more vinyl C₁-C₁₀-alkyl esters, and then hydrolyzing from 30 to 100 mol% of the formyl groups from the copolymerized units (a) to form amino groups and from 30 to 100 mol% of the C₁-C₁₀ alkyl ester groups from the copolymerized units (b) to form hydroxyl groups, wherein the copolymer has a unimodal compositional distribution as evidenced by essentially one peak in a gel permeation gradient elution chromatographic analysis and wherein the polyvinyl amine-polyvinyl alcohol copolymer is essentially free of amidine rings as evidenced by a lack of an absorption in a ¹³C NMR spectrum of the copolymer consistent with an amidine carbon atom absorption.

The polyvinyl amine copolymer comprises vinyl amine residues and vinyl alcohol residues as a random copolymer.

The process to produce a water-soluble copolymer suitable for use in the instant application may comprise the steps of:
a) charging a first portion of a total amount of N-vinylformamide into a reactor;
b) charging a first portion of a total amount of at least one vinyl C₁-C₁₀ alkyl ester into the reactor;
c) continuously feeding a first portion of a total amount of a free radical polymerization catalyst at a first catalyst flow rate into the reactor;
d) contacting the first portion of N-vinylformamide, the first portion of at least one vinyl C₁-C₁₀ alkyl ester, in the presence of the free radical polymerization catalyst under polymerization conditions for a first period of time;
e) after the first period of time, continuously feeding for a second period of time, a second portion of the n-vinylformamide at a n-vinylformamide flow rate into the reactor while simultaneously feeding a second portion of at least one vinyl C₁-C₁₀ alkyl ester into the reactor at an ester flow rate, while simultaneously feeding a second portion of the free radical polymerization catalyst at a second catalyst flow rate into the reactor under polymerization conditions until the total amount of the N-vinylformamide, the total amount of the vinyl C₁-C₁₀ alkyl ester, and the total amount of the free radical polymerization catalyst have been fed into the reactor;
f) followed by contacting for a third period of time, the n-vznylformamide and the at least one vinyl C₁-C₁₀ alkyl ester in the presence of the free radical polymerization catalyst in the reactor under polymerization conditions to produce an intermediate copolymer comprising polyvinyl formamide and one or more polyvinyl C₁-C₁₀ alkyl esters, wherein the third period of time expires when the solids content of the intermediate copolymer in the reactor is greater than or equal to about 20 wt% and less than or equal to about 70 wt%; followed by
g) saponifying the copolymer under either acidic or basic conditions to produce an intermediate polyvinyl amide-polyvinyl alcohol copolymer; followed by
h) hydrolyzing the intermediate polyvinyl amide-polyvinyl alcohol copolymer under either acidic or basic conditions to produce the water-soluble copolymer. The barrier layer is formed by applying the polyvinyl amine-polyvinyl alcohol copolymer to a substrate as a water soluble composition.

### Properties of the Polyvinyl Amine Copolymer

The polyvinyl amine copolymer of the instant application comprises residues of vinyl amine and vinyl alcohol. In an embodiment, the polyvinyl amine copolymer comprises greater than or equal to about 0.5 mol% vinyl amine, and less than or equal to about 99 mol% vinyl amine, based on the total amount of the polyvinyl amine copolymer present. Within this range, the polyvinyl amine copolymer preferably comprises greater than or equal to about 1 mol% vinyl amine, preferably greater than or equal to about 2 mol%, preferably greater than or equal to about 3 mol%, preferably greater than or equal to about 4 mol%, preferably greater than or equal to about 5 mol%, preferably greater than or equal to about 6 mol%, preferably greater than or equal to about 7 mol%, preferably greater than or equal to about 8 mol%, preferably greater than or equal to about 9 mol%, preferably greater than or equal to about 10 mol%, preferably greater than or equal to about 15 mol%, preferably greater than or equal to about 20 mol%, preferably greater than or equal to about 25 mol%, preferably greater than or equal to about 30 mol%, preferably greater than or equal to about 35 mol%, preferably greater than or equal to about 40 mol%, preferably greater than or equal to about 45 mol%, preferably greater than or equal to about 50 mol% polyvinyl amine, based on the total amount of the polyvinyl amine copolymer present.

Also within this range, the polyvinyl amine copolymer preferably comprises less than or equal to about 90 mol% vinyl amine, preferably less than or equal to about 80 mol%, preferably less than or equal to about 70 mol%, preferably less than or equal to about 60 mol%, preferably less than or equal to about 50 mol%, preferably less than or equal to about 30 mol%, preferably less than or equal to about 25 mol%, preferably less than or equal to about 20 mol%, preferably less than or equal to about 15 mol%, preferably less than or equal to about 10 mol%, preferably less than or equal to about 9 mol%, preferably less than or equal to about 8 mol%, preferably less than or equal to about 7 mol%, preferably less than or equal to about 6 mol%, preferably less than or equal to about 5 mol%, preferably less than or equal to about 4 mol%, preferably less than or equal to about 3 mol%, preferably less than or equal to about 2 mol% polyvinyl amine, based on the total amount of the polyvinyl amine copolymer present.

In one embodiment, the weight average molecular weight of the polyvinyl amine copolymer may be greater than or equal to about 5,000g/mol, and less than or equal to about 2,000,000 g/mol. Within this range, the weight average molecular weight of the polyvinyl amine copolymer preferably is greater than about 10, 000, more preferably greater than about 20,000, more preferably greater than about 30,000, more preferably greater than about 40,000, more preferably greater than about 50,000, more preferably greater than about 60,000, more preferably greater than about 70,000, more preferably greater than about 80,000, more preferably greater than about 90,000, more preferably greater than about 100,000, more preferably greater than about 150,000 g/mol.

Also within this range the weight average molecular weight of the polyvinyl amine copolymer preferably is less than about 1,500,000, more preferably less than about 1,000,000, more preferably less than about 500,000, more preferably less than about 100,000, more preferably less than about 90,000, more preferably less than about 80,000, more preferably less than about 70,000, more preferably less than about 60,000, more preferably less than about 50,000, more preferably less than about 40,000, more preferably less than about 20,000 g/mol.

In an embodiment, the polyvinyl amine copolymer may include a copolymer having a unimodal distribution. In another embodiment, the polyvinyl amine copolymer may include a copolymer having a bimodal distribution or a multimodal distribution.

In an embodiment, the polyvinyl amine copolymer may have a polydispersity, determined as the weight average molecular weight (Mw) divided by the number average molecular weight (Mn) of from 1 to about 200. Within the range, the polyvinyl amine copolymer may have a polydispersity of greater than or equal to about 2, more preferably greater than or equal to about 3, more preferably greater than or equal to about 4, more preferably greater than or equal to about 5, more preferably greater than or equal to about 6, more preferably greater than or equal to about 7, more preferably greater than or equal to about 8, more preferably greater than or equal to about 9, more preferably greater than or equal to about 10, more preferably greater than or equal to about 15, more preferably greater than or equal to about 20, more preferably greater than or equal to about 25, more preferably greater than or equal to about 30, more preferably greater than or equal to about 35, more preferably greater than or equal to about 40.

Also within this range, the polyvinyl amine copolymer may have a polydispersity of less than or equal to about 45, more preferably less than or equal to about 40, more preferably less than or equal to about 35, more preferably less than or equal to about 30, more preferably less than or equal to about 25, more preferably less than or equal to about 20 more preferably less than or equal to about 15, more preferably less than or equal to about 10, more preferably less than or equal to about 9, more preferably less than or equal to about 15, more preferably less than or equal to about 8, more preferably less than or equal to about 7, more preferably less than or equal to about 6, more preferably less than or equal to about 5, more preferably less than or equal to about 4.

The instant polyvinyl amine copolymer has a unimodal composition distribution as evidenced by essentially one peak in a gel permeation gradient elution chromatographic analysis. A suitable gel permeation gradient elution chromatographic analysis may be found in Waters Corporation Publication No. WA10192 entitled "Waters Alliance System: Gradient Analysis of Polymer Blends" Published by Waters Corporation, Milford, Ma. Available at: http://www.waters.com/waters/library.h-tm?cid=511436&lid=1536540

In an embodiment, the gel permeation gradient elution chromatographic analysis includes the following steps and conditions:

### HPLC conditions:

10 minute run time with a 5 minute post-run equilibrium.
Solvent starts with 99% Water / 1% acetonitrile (ACN) at time 0 minutes, and finishes with 80 % ACN and 20% of 99% Water / 1% ACN at 10 minutes. The ramp is uniform with the time.
Flow: 1.0 ml/min
Column: PLRP-S, 4000A, 8 Micron, 50 x 4.6 mm, temperature at 40°C
Injection volume: 20 Microliters
Sample flows into an evaporative light scattering detector (ELS) after passing through the HPLC column.

### ELS conditions:

Nitrogen gas flow at 2.0 ml/min
Nebulizer temperature at 90°C
Evaporation temperature at 120°C

### Data

Data acquisition is through Atlas chromatography system.

### Sample Reparation

Sample preparation takes a 1-2 percent solution and heats at 85°C for an hour while stirring, then cool back down to room temperature (i.e., 25°C.)

Filter through a 0.45 Micron filter into a crimp vial.

In an embodiment, instant polyvinyl amine copolymer has a unimodal molecular weight distribution as evidenced by a 4 wt% aqueous solution having a turbidity of less than 100 turbidity units (NTU.) For purposes herein, turbidity units indicate Nephelometric Turbidity Units (NTU). Turbidity is measured using a nephelometer, the use of which is commonly known to one of minimal skill in the art.

In an embodiment, the turbidity of a 4 wt% solution is preferably less than or equal to about 95, preferably less than or equal to about 90, preferably less than or equal to about 85, preferably less than or equal to about 80, preferably less than or equal to about 75, preferably less than or equal to about 70, preferably less than or equal to about 65, preferably less than or equal to about 60, preferably less than or equal to about 55, preferably less than or equal to about 50, preferably less than or equal to about 45, preferably less than or equal to about 40, preferably less than or equal to about 35, preferably less than or equal to about 30, preferably less than or equal to about 25, preferably less than or equal to about 20, with less than or equal to about 15 NTU being still more preferred.

The polyvinyl amine copolymer is essentially free of amidine rings. This indicates a random distribution of the amide in the intermediate copolymer prior to hydrolysis and thus, a random polyvinyl amine copolymer. The amine copolymer is essentially free of amidine rings as evidenced by a lack of an absorption in a ¹³C NMR spectrum of the copolymer consistent with an amidine carbon atom absorption.

The process by which amidine rings form in the copolymer is represented as follows:

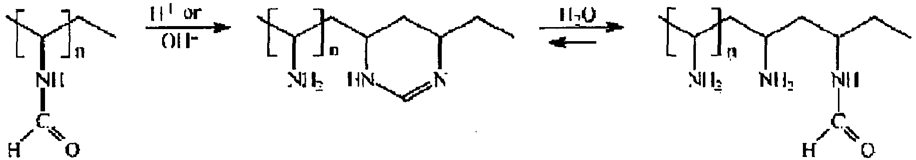

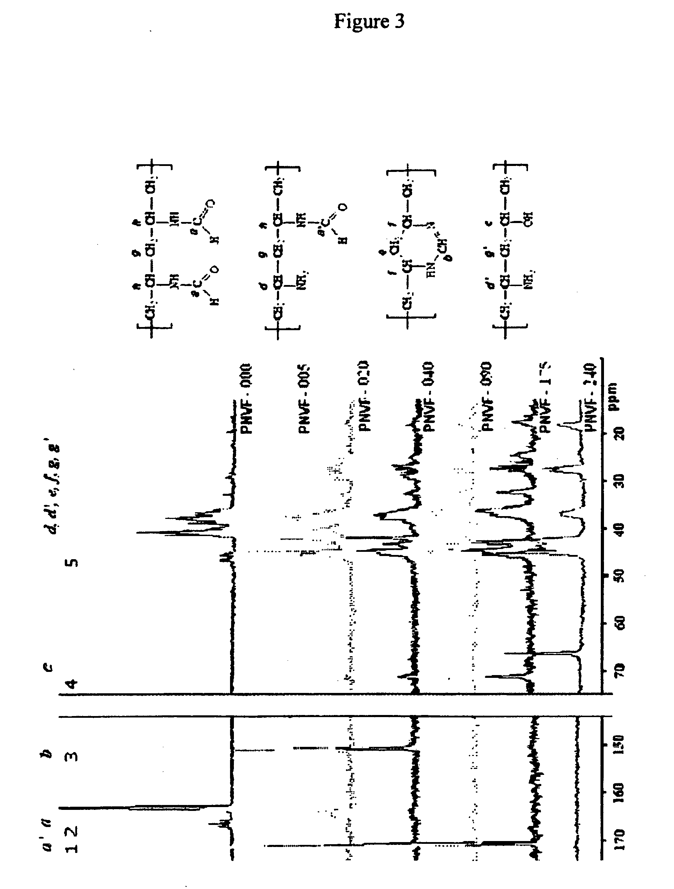

Wherein amide moieties in the copolymer react via intramolecular reaction to produce the amidine rings. The presence of such rings may be determined by ¹³CNMR as shown in Figure 3.

Accordingly, in an embodiment, the presence of an absorption in the range of 150 ppm may indicate an amidine ring is present in a copolymer. In an embodiment, the instant copolymer is essentially free of amidine rings as evidenced by a lack of an absorption in a ¹³C NMR spectrum of the copolymer consistent with an amidine carbon atom absorption (e.g., 150 ppm or equivalent.) For more information see Witek, Ewa, Pazdro, Marcin and Bortel, Edgar (2007) 'Mechanism for Base Hydrolysis of Poly(N-vinylformamide)', Journal of Macromolecular Science, Part A, 44:5, 503 - 507
DOI: 10.1080/10601320701235461 URL:http://dx.doi.org/10.1080/10601320701235461

In an embodiment the instant copolymer has less color than a copolymer produced according to the prior art. This is thought to be the result of a more random copolymer of the instant invention, as compared to copolymers known in the art. In an embodiment, a 4% solution of the copolymer has an APHA color value of less than or equal to about 100 APHA units, determined according to ASTM D 1209 or a comparable method. Preferably, a 4% solution of the copolymer has an APHA color value of less than or equal to 10, preferably less than or equal to 5 APHA units determined according to ASTM D 1209 or a comparable method.

The instant copolymer also has less of an odor than do comparative polyvinyl amine copolymers. However, odor is essentially impossible to quantify and thus, a general statement of reduced odor compared to known copolymers is offered herein.

The barrier layer comprises a water-soluble copolymer formed by copolymerizing:
(a) from 99 to 1 mol% of N-vinylformamide and
(b) from 1 to 99 mol% of one or more vinyl C₁-C₁₀ alkyl esters, and then hydrolyzing from 30 to 100 mol% of the formyl groups from the copolymerized units (a) to form amino groups and from 30 to 100 mol% of the C₁-C₁₀ alkyl ester groups from the copolymerized units (b) to form hydroxyl groups, wherein the copolymer has a unimodal compositional distribution as evidenced by essentially one peak in a gel permeation gradient elution chromatographic analysis; and/or wherein an aqueous 4% solution of the copolymer measured at 10 mm cell has an APHA color value of less than or equal to 10 APHA units determined according to ASTM D1209 or a comparable method; and/or
   wherein the copolymer has a unimodal molecular weight distribution as evidenced by a 4 wt% aqueous solution having a turbidity of less than 100 NTU; and/or
   wherein the copolymer is essentially free of amidine rings as evidenced by a lack of an absorption in a ¹³C NMR spectrum of the copolymer consistent with an amidine carbon atom absorption; and/or
   wherein the copolymer is produced by a process comprising the steps of:
   a) charging a first portion of a total amount of N-vinyiformamide into a reactor;
   b) charging a first portion of a total amount of at least one vinyl C₁-C₁₀ alkyl ester into the reactor;
   c) continuously feeding a first portion of a total amount of a free radical polymerization catalyst at a first catalyst flow rate into the reactor;
   d) contacting the first portion of N-vinylformamide, the first portion of at least one vinyl C₁-C₁₀ alkyl ester, in the presence of the free radical polymerization catalyst under polymerization conditions for a first period of time;
   e) after the first period of time, continuously feeding for a second period of time, a second portion of the n-vinylformamide at a n-vinylformamide flow rate into the reactor while simultaneously feeding a second portion of at least one vinyl C₁-C₁₀ alkyl ester into the reactor at an ester flow rate, while simultaneously feeding a second portion of the free radical polymerization catalyst at a second catalyst flow rate into the reactor under polymerization conditions until the total amount of the N-vinylformamide, the total amount of the vinyl C₁-C₁₀ alkyl ester, and the total amount of the free radical polymerization catalyst have been fed into the reactor;
   f) followed by contacting for a third period of time, the n-vinylformamide and the at least one vinyl C₁-C₁₀ alkyl ester in the presence of the free radical polymerization catalyst in the reactor under polymerization conditions to produce an intermediate copolymer comprising polyvinyl formamide and one or more polyvinyl C₁-C₁₀ alkyl esters, wherein the third period of time expires when the solids content of the intermediate copolymer in the reactor is greater than or equal to 20 wt% and less than or equal to 70 wt%; followed by
   g) saponifying the copolymer under either acidic or basic conditions to produce an intermediate polyvinyl amide-polyvinyl alcohol copolymer; followed by
   h) hydrolyzing the intermediate polyvinyl amide-polyvinyl alcohol copolymer under either acidic or basic conditions to produce the water-soluble copolymer.

### Other Components of the Barrier Coating

In addition to the polyvinyl amine copolymer, the barrier coating of the instant application may further include other components that modify the water solubility and/or barrier properties of the barrier coating. In an embodiment, the barrier coating may include crosslinked polymers, preferably crosslinking involving the polyvinyl amine copolymer. Crosslinking of the barrier coating may be formed by chemical reactions that are initiated by heat, pressure, and/or radiation. In an embodiment, crosslinking may be induced through exposure of the barrier layer material to a radiation source, e.g., electron beam exposure, gamma-radiation, and/or UV light. In another embodiment, the barrier layer may include one or more crosslinking reagents which results in a chemical reaction that forms crosslinks comprising intermolecular and/or intramolecular linkages with the polyvinyl amine copolymer. Crosslinking of the polyvinyl amine copolymer with the crosslinking agent may be initiated by application of a catalyst, an activating reagent, heat, removal of solvent, irradiation with electromagnetic energy (e.g., UV and gamma-radiation), or any combination thereof.

The barrier layer is preferably applied as an aqueous solution, however, the barrier layer, once applied and/or cured to a substrate, preferably has an adhesion to the substrate that prevents the barrier layer from being removed by any subsequent processing of the article being coated. Accordingly, after being applied and fixed to the substrate (e.g., by crosslinking, heating, irradiation, and/or the like), the solubility of the barrier layer in subsequent processing steps, typically aqueous based, is preferably reduced.

Suitable crosslinking reagents include multi-functional monomers reactive with the amine and/or the alcohol functional group of the polyvinyl amine copolymer. Examples include multi-functional monomers having at least two members selected from the group consisting of a vinyl group, an acryloyl group, a methacryloyl group, an aldehyde group, an isocyanate group and/or an allyl group. Examples of multi-functional monomer include divinyl benzene, trimethylol propane triacrylate, 1,6-hexanediol diacrylate, 1,9-nonanediol diacrylate, 1,10-decanediol diacrylate, trimethylol propane trimethacrylate, 1,6-hexanediol dimethacrylate, 1,9-nonanediol dimethacrylate, 1,10-decanediol dimethacrylate, 1,2,4-triallyl trimellitate, triethylene glycol diacrylate, tetraethylene glycol diacrylate, cyanoethyl acrylate, bis(4-acryloxy polyethoxy phenyl) propane, triallyl isocyanurate and other similar compounds.

Other suitable crosslinking agents include organic titanate complexes, epichlorohydrin, hexamethylene diisocyanate, glyoxal, butanediol diacrylate, terephthaldehyde and/or glutaraldehyde. In addition, the polyvinyl amine copolymer may be crosslinked with other various multi-functional organic compounds such as dialdehydes, polyepoxides, di- or triacrylates, di- or triisocyanates or dihalides, or inorganic compounds containing multi-valent anions or inorganic cations which are capable of complexing with polyvinyl amine. Examples include butanediol diacrylate, diisocyanatohexane, diepoxides, hexamethoxymethyl melamine resin, N,N'dihydroxymethyl-4,5-dihydroxyethylene urea, butanediol diacrylate, dimethyl adipate, sodium formate, and poly(ethylene glycol) diglycidyl ethers.

Inorganic crosslinking agents include compounds containing multivalent anions including titanates, zirconates, phosphates, silicates, and/or inorganic cations from Group 4-13, preferably Cu²⁺, Fe³⁺, and Zn²⁺.

In an embodiment, the crosslinking agent is a non-acidic crosslinking agent comprising a modified glyoxal compound. Such modified glyoxal compounds are represented by the general formula: 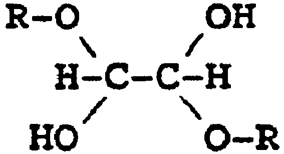 where R represents C₁-C₁₀ lower alkyl groups. The molecular weight of such materials is typically below 500. Preferred modified glyoxal compounds are modified polyhydroxy alkyl ether acetal compounds commercially available from BASF under the trade name CURESAN™. Preferred CURESAN™ compounds include CURESAN™ 199, 200 and 300, which are blocked aldehydes.

In an embodiment, the crosslinking agents are selected from the group consisting of monoaldehydes e.g. formaldehyde, acetaldehyde, and benzaldehyde; dialdehydes e.g., glutaraldehyde, glyoxal, and succinic dialdehyde, trimethylol melamine, urea-formaldehyde, blocked aldehydes, polyacrolein, boric acid and borates e.g., borates, methyl borate, boron trifluoride, boric anhydride, pyroborates, peroxoborates, and boranes.

Other potential crosslinking agents include N-lactam carboxylates, dicarboxylic acids e.g., maleic acid, and oxalic acid, di-isocyanates, divinyl sulphate, and/or inorganic compounds such as germanic acids, germanates, titanium salts and esters, chromates, vanadates, cupric salts and other Group 4-12 salts.

The crosslinking agents may be present in the barrier layer at a concentration sufficient to at least partially crosslink the polyvinyl amine copolymer. In an embodiment, the barrier layer is only partially crosslinked. In another embodiment, the barrier layer is essentially completely crosslinked.

The crosslinking reagent or reagents may be present in the barrier layer at between about 0.001 wt% to about 50 wt%, based on the total amount of the crosslinking reagent and the polyvinyl amine copolymer present. Within this range, the concentration of the crosslinking reagent in the barrier layer is greater than or equal to about 0.005 wt%, preferably greater than or equal to about 0.01 wt%, preferably greater than or equal to about 0.015 wt%, preferably greater than or equal to about 0.02 wt%, preferably greater than or equal to about 0.03 wt%, preferably greater than or equal to about 0.04 wt%, preferably greater than or equal to about 0.05 wt%, preferably greater than or equal to about 0.06 wt%, preferably greater than or equal to about 0.07 wt%, preferably greater than or equal to about 0.08 wt%, preferably greater than or equal to about 0.09 wt%, preferably greater than or equal to about 0.1 wt%, preferably greater than or equal to about 0.2 wt%, preferably greater than or equal to about 0.3 wt%, preferably greater than or equal to about 0.4 wt%, preferably greater than or equal to about 0.5 wt%, preferably greater than or equal to about 0.6 wt%, preferably greater than or equal to about 0.7 wt%, preferably greater than or equal to about 0.8 wt%, preferably greater than or equal to about 0.9 wt%, preferably greater than or equal to about 1 wt%, preferably greater than or equal to about 2 wt%, preferably greater than or equal to about 3 wt%, preferably greater than or equal to about 4 wt%, preferably greater than or equal to about 5 wt%, preferably greater than or equal to about 6 wt%, preferably greater than or equal to about 7 wt%, preferably greater than or equal to about 8 wt%, preferably greater than or equal to about 9 wt%, preferably greater than or equal to about 10 wt%, preferably greater than or equal to about 20 wt%, preferably greater than or equal to about 30 wt%, preferably greater than or equal to about 40 wt%, based on the total amount of the crosslinking reagent and the polyvinyl amine copolymer present.

Also within this range, the concentration of the crosslinking reagent in the barrier layer is less than or equal to about 40 wt%, preferably less than or equal to about 30 wt%, preferably less than or equal to about 20 wt%, preferably less than or equal to about 10 wt%, preferably less than or equal to about 9 wt%, preferably less than or equal to about 8 wt%, preferably less than or equal to about 7 wt%, preferably less than or equal to about 6 wt%, preferably less than or equal to about 5 wt%, preferably less than or equal to about 4 wt%, preferably less than or equal to about 3 wt%, preferably less than or equal to about 2 wt%, preferably less than or equal to about 1 wt%, preferably less than or equal to about 0.9 wt%, preferably less than or equal to about 0.8 wt%, preferably less than or equal to about 0.7 wt%, preferably less than or equal to about 0.6 wt%, preferably less than or equal to about 0.5 wt%, preferably less than or equal to about 0.4 wt%, preferably less than or equal to about 0.3 wt%, preferably less than or equal to about 0.2 wt%, preferably less than or equal to about 0.1 wt%, preferably less than or equal to about 0.09 wt%, preferably less than or equal to about 0.08 wt%, preferably less than or equal to about 0.07 wt%, preferably less than or equal to about 0.06 wt%, preferably less than or equal to about 0.05 wt%, preferably less than or equal to about 0.04 wt%, preferably less than or equal to about 0.03 wt%, preferably less than or equal to about 0.02 wt%, preferably less than or equal to about 0.015 wt%, preferably less than or equal to about 0.01 wt%, preferably less than or equal to about 0.005 wt%, based on the total amount of the crosslinking reagent and the polyvinyl amine copolymer present.

It is important to mention that the mechanical properties of the instant barrier layer are related to the ability to control crosslinking, which in view of the instant barrier layer composition, do not significantly impact tensile, modulus, and elongation. This unexpected property of the instant barrier layer is demonstrated in the accompanying examples.

In an embodiment, the instant barrier layer comprises one or more oxygen scavengers, which are chemicals that react with oxygen (O₂) to reduce the concentration of oxygen. Examples include sulfite (SO₃⁻²), bisulfite (HSO₃⁻) ions that combine with oxygen to form sulfate (SO₄⁻²) and a nickel or cobalt catalyst. Various oxygen scavenging systems which include various polymers in combination with active components may also be used.

### Other Polymers

In addition to the polyvinyl amine copolymer, the instant barrier layer may include various homopolymers and/or copolymers that improve particular properties of the barrier layer performance. In an embodiment, the barrier layer may include water-soluble copolymers ofN-vinyl pyridine, ethylenically unsaturated mono, di, or trialkyl ammonium salts, such as vinylbenzene trimethyl ammonium chloride, aminoethyl acrylate hydrochloride, N-methylamino ethylacrylate, N,N-dimethylaminoethyl methacrylate, NN-dimethylaminomethyl-N-acrylamide, and N,N-dimethylaminoethyl-N-acrylamide. Preferred are polymers containing a plurality of aminoalkyl nitrogen-substituted acrylamide mers, preferably wherein the aminoalkyl substituent is hydrophilic, e.g., contains less than about 8 carbons.

In an embodiment, the barrier coating may include polyvinyl alcohol polymers of various levels of hydrolysis. Suitable polyvinyl alcohol copolymers have a level of hydrolysis preferably greater than or equal to about 85% up to about 99.9%, with a level of hydrolysis of between 86.0-89.0% preferred, 91.0-93.0% still more preferred, 92.0-94.0% still more preferred, 95.5-96.5% still more preferred, 92.5-95.5% still more preferred, 98.0-98.8% still more preferred, with greater than or equal to about 99.3+ being still more preferred.

In an embodiment, the barrier coating may further include alpha-olefin-vinyl alcohol copolymers, wherein the alpha-olefin has from 2 to 10 carbon atoms; preferably EVOH.

The viscosity of a 4% solution of the polyvinyl alcohol polymer may be from about 2 to about 80 cps at 20°C. In an embodiment, the polyvinyl alcohol polymer has a viscosity of about 45-72 cps, a degree of polymerization of about 1600 to 2200, and a Mw of about 146,000 to 186,000. In another embodiment, the polyvinyl alcohol polymer has a viscosity of about 5-6 cps, a degree of polymerization of about 350 to 650, and a Mw of about 31,000 to 50,000. In another embodiment, the polyvinyl alcohol polymer has a viscosity of about 22-30 cps, a degree of polymerization of about 1000 to 1500, and a Mw of about 85,000 to 124,000. In a preferred embodiment, the polyvinyl alcohol polymer has a viscosity of about 3-4 cps, a degree of polymerization of about 150 to 300, and a Mw of about 13,000 to 23,000.

In an embodiment, the barrier layer may also include aqueous soluble or dispersible polymers such as latex, polyurethane or polyester, inorganic oxide dispersions, aqueous solutions containing polymers such as cellulose derivatives (e.g., cellulose esters), monosaccharides, disaccharides, polysaccharides, casein, and synthetic water permeable colloids including poly(vinyl lactams), acrylamide polymers, poly(vinyl alcohol) and its derivatives, hydrolyzed polyvinyl acetates, polymers of alkyl and sulfoalkyl acrylates and methacrylates, polyamides, polyvinyl pyridine, acrylic acid polymers, maleic anhydride copolymers, polyalkylene oxide, methacrylamide copolymers, polyvinyl oxazolidinones, maleic acid copolymers, other vinyl amine copolymers, methacrylic acid copolymers, acryloyloxyalkyl sulfonic acid copolymers, vinyl imidazole copolymers, vinyl sulfide copolymers and homopolymer or copolymers containing styrene sulfonic acid.

Further additives may also be included in the composition to impart properties desired for the particular article being manufactured. Such additives include, but are not necessarily limited to, fillers, pigments, dyestuffs, antioxidants, stabilizers, processing aids, plasticizers, fire retardants, anti-fog agents, and scavengers. In an embodiment, the barrier layer includes nano platelets.

The barrier layer may include up to about 99 wt% of materials other than the polyvinyl amine copolymer.

The instant barrier layer may have a thickness of about 0.1 micrometers to about 1000 micrometers. Within this range, the barrier layer thickness is preferably greater than or equal to about 1, preferably greater than or equal to about 2, preferably greater than or equal to about 2.5, preferably greater than or equal to about 3, preferably greater than or equal to about 3.5, preferably greater than or equal to about 4, preferably greater than or equal to about 4.5, preferably greater than or equal to about 5, preferably greater than or equal to about 10, preferably greater than or equal to about 20, preferably greater than or equal to about 30, preferably greater than or equal to about 35, preferably greater than or equal to about 40 micrometers, preferably greater than or equal to about 50, preferably greater than or equal to about 60, preferably greater than or equal to about 70, preferably greater than or equal to about 80, preferably greater than or equal to about 90, preferably greater than or equal to about 100 micrometers, preferably greater than or equal to about 200, preferably greater than or equal to about 300, preferably greater than or equal to about 400, preferably greater than or equal to about 500, preferably greater than or equal to about 600, preferably greater than or equal to about 700 micrometers, preferably greater than or equal to about 800, preferably greater than or equal to about 900 micrometers. Also within this range, the barrier layer thickness is preferably less than or equal to about 900, preferably less than or equal to about 800, preferably less than or equal to about 700, preferably less than or equal to about 600, preferably less than or equal to about 500, preferably less than or equal to about 400, preferably less than or equal to about 300 micrometers, preferably less than or equal to about 200, preferably less than or equal to about 100, preferably less than or equal to about 90, preferably less than or equal to about 80, preferably less than or equal to about 70, preferably less than or equal to about 60 micrometers, preferably less than or equal to about 50, preferably less than or equal to about 40, preferably less than or equal to about 30, preferably less than or equal to about 20, preferably less than or equal to about 10, preferably less than or equal to about 5, preferably less than or equal to about 4.5, preferably less than or equal to about 4, preferably less than or equal to about 3.5, preferably less than or equal to about 3, preferably less than or equal to about 2.5, preferably less than or equal to about 2, preferably less than or equal to about 1.5, preferably less than or equal to about 1 micrometer.

### Coating Composition

The barrier layer is formed by contacting a coating composition comprising the components and/or the precursors of the components of the barrier layer with the substrate. In an embodiment, the coating composition is preferably an aqueous solution, dispersion, or slurry comprising the polyvinyl amine copolymer. In another embodiment, the coating composition is preferably a nonaqueous solution, dispersion, or slurry comprising the polyvinyl amine copolymer. In addition to the polyvinyl amine copolymer, the coating composition may include the herein described crosslinking reagent(s), other polymers, and additives. In addition, the aqueous coating composition may include one more co-solvents. Preferred co-solvents include lower alkyl (i.e., C₁-C₁₀) alcohols, esters, ethers, ketones, and alkanes.

The viscosity of the coating composition is preferably about 5 to about 200 cps @20°C. Within this range, the viscosity is preferably greater than or equal to about 10, preferably greater than or equal to about 20, preferably greater than or equal to about 30, preferably greater than or equal to about 40, preferably greater than or equal to about 50, preferably greater than or equal to about 60, preferably greater than or equal to about 70 cps at 20°C. Also within this range, the viscosity is preferably less than or equal to about 190, preferably less than or equal to about 180, preferably less than or equal to about 170, preferably less than or equal to about 160, preferably less than or equal to about 150, preferably less than or equal to about 140, preferably less than or equal to about 130 cps at 20°C.

The coating composition may have a total solids content of about 1 to about 90 wt%. Within this range, the total solids content is preferably greater than or equal to about 2, preferably greater than or equal to about 5, preferably greater than or equal to about 10, preferably greater than or equal to about 15, preferably greater than or equal to about 20, preferably greater than or equal to about 25, preferably greater than or equal to about 30%. Also within this range, the total solids content is preferably less than or equal to about 80, preferably less than or equal to about 85, preferably less than or equal to about 70, preferably less than or equal to about 60, preferably less than or equal to about 50, preferably less than or equal to about 40, preferably less than or equal to about 35 wt%.

The coating composition may further include surfactants, preservatives, and/or other processing aids to improve the application and/or adhesion of the coating composition onto a particular substrate.

In an embodiment, the instant barrier layer has improved adhesion properties over barrier layers known in the art. In an embodiment, the adhesion of the instant barrier layer to a particular substrate is at least 10% greater than the adhesion of a comparative barrier layer when determined under the "Washed Adhesion Test" as described herein. Preferably, the adhesion of the instant barrier layer to a particular substrate is at least 20% greater, preferably at least 30% greater, preferably at least 40% greater, preferably at least 50% greater, preferably at least 60% greater, preferably at least 70% greater, preferably at least 80% greater, preferably at least 90% greater, preferably at least 100% greater, preferably at least 150% greater, preferably at least 200% greater, preferably at least 250% greater, preferably at least 300% greater, than the adhesion of a comparative barrier layer when determined under the "Washed Adhesion Test."

In the Wash Adhesion Test, a test substrate is coated with a barrier layer in a manner consistent with processes known in the art, and/or which mimics a particular end use. The amount of a barrier layer is determined on a substrate coated with the barrier layer using HPLC, FTIR, NMR, and/or wet chemical methods. The coated substrate is then washed with an aqueous washing solution, e.g., water, consistent with washing steps of commercial processes known in the art, and/or which mimics a particular end use. The amount of barrier layer on the substrate is once again determined and calculated as a percentage of retained barrier layer to measure the adhesion properties of the barrier layer to the substrate. However, other comparable methods of determining adhesion may be used.

### Formation of the Barrier Layer

The coating composition may be produced by simple mixing, melt-blending, or kneading, depending on the intended application. The coating composition is preferably prepared at a temperature in the range of 20°C up to about 300°C. The blending may immediately precede the formation of the finished article or preform or precede the formation of a feedstock or masterbatch for later use in the production of finished packaging articles. When film layers or multi-layer articles are produced, (co)extrusion, solvent casting, injection molding, stretch blow molding, orientation, thermoforming, extrusion coating, coating and curing, lamination, extrusion-lamination, blow-molding, co-extrusion injection molding or combinations thereof would typically follow the blending.

The coating composition may comprise about 1 wt% up to about 99 wt% polyvinyl amine copolymer, based on the total amount of the coating composition present. Within this range, the coating composition may comprise greater than or equal to about 10 wt%, preferably greater than or equal to about 20 wt%, preferably greater than or equal to about 30 wt%, preferably greater than or equal to about 40 wt%, preferably greater than or equal to about 50 wt%, preferably greater than or equal to about 60 wt%, preferably greater than or equal to about 70 wt%, preferably greater than or equal to about 80 wt%, preferably greater than or equal to about 90 wt% polyvinyl amine copolymer, based on the total amount of the coating composition present.

Also within this range, the coating composition may comprise less than or equal to about 90 wt%, preferably less than or equal to about 80 wt%, preferably less than or equal to about 70 wt%, preferably less than or equal to about 60 wt%, preferably less than or equal to about 50 wt%, preferably less than or equal to about 40 wt%, preferably less than or equal to about 30 wt%, preferably less than or equal to about 20 wt%, preferably less than or equal to about 10 wt% polyvinyl amine copolymer, based on the total amount of the coating composition present.

In a preferred embodiment, the coating composition may be applied to the substrate by dipping (dip coating), spraying (spray coating), roller coating, curtain coating, metering rod coating, reverse roll coating, gravure coating, extrusion/co-extrusion, injection molding, blow molding, and/or the like. In a preferred embodiment, the coating composition is applied to the substrate followed by solvent evaporation, and/or heating, and/or irradiation, and/or the like to fix the coating composition to the substrate and/or induce crosslinking to produce the barrier layer.

### Substrates

In an embodiment, the coating composition is applied to a substrate comprising one or more polymeric resins and/or inorganic substrates. Preferred polymeric resins include polyolefin resins and/or polyester resins. Substrates may thus include high density polyethylene, linear low-density polyethylene, super-low-density polyethylene; ethylene-vinyl acetate copolymer, ethylene-acrylate copolymer, ethylene-acrylic acid copolymer, ethylene-methacrylic acid copolymer, ethylene-carbon monoxide copolymer, amorphous polystyrene, crystalline polystyrene, vinyl chloride resin, polyamide resin, polyacetal resin, polycarbonate resin, ethylene-propylene rubber, ethylene-1-butene rubber, propylene-1-butene rubber, styrene-butadiene rubber, styrene-butadiene block copolymer, paper, resin-coated paper, poly(ethylene terephthalate) (PET), cellulose diacetate, cellulose triacetate, poly(ethylene naphthalate), polyester diacetate, poly(ethylene vinyl alcohol) ("EVOH"), polyacrylonitrile, polyvinyl chloride, polyvinylchloride ("PVC"), poly(vinylidene dichloride) ("PVDC"), and/or the like.

Preferred inorganic substrates may comprise SiO₂ glass, TiO₂ glass, various metal layers comprising Group 1 to Group 16 metals and/or metal alloys thereof, preferably layers comprising aluminum, and combinations thereof

Suitable substrates include flexible and/or rigid single layer or multilayer laminated articles. The layers comprising the composition may be in several forms. They may be in the form of stock films, including "oriented" or "heat shrinkable" films, which may ultimately be processed as bags, or coverings. The layers may also be in the form of sheet inserts to be placed in a packaging cavity. In rigid articles such as beverage containers, thermoformed trays or cups, the layer may be within the container's walls and may furthermore be foamed. Even further, the layer may also be in the form of a liner placed with or in the container's lid or cap. The layer may even be coated or laminated onto any one of the articles mentioned above.

The substrates may be surface treated and/or untreated. Surface treatments include flame treatment, corona treatment, irradiation, and/or physical abradement.

In an embodiment, the barrier layer is present within an article such that the barrier layer is disposed between at least two layers. For example, the barrier layer may be present in-between the substrate and an outer layer, or between one or more layers disposed on the substrate. In an embodiment, the barrier layer is present in at least two layers of the article.

The additional layers may also include one or more layers which are permeable and/or impermeable to various gases including oxygen and carbon dioxide.

In an embodiment, the substrate is a blank which after having the barrier coating applied to it, is subsequently blow molded to produce a final article. In another embodiment, the substrate is a previously blow molded article.

### Barrier Layer Properties

The instant barrier layer provides barrier properties to prevent effusion of carbon dioxide and/or oxygen there through. The improvement in CO₂ barrier properties may be measured in terms of a CO₂ reduction index, wherein the CO₂ effusion through a coated substrate is expressed as a percentage of the CO₂ effusion through an essentially identical uncoated substrate under essentially identical conditions. Accordingly, a barrier coating with a CO₂ reduction index of 1% represents a barrier wherein the CO₂ effusion rate is 1% of an uncoated substrate. A barrier coating with a CO₂ reduction index greater than 100% indicates a substrate which is more permeable to CO₂ than the uncoated substrate. Likewise, a barrier coating with a CO₂ reduction index of zero (0) represents a substrate which is impermeable to CO₂ under the test conditions. In an embodiment, the instant barrier layer has a CO₂ reduction index of less than 100% on a particular substrate under a particular set of conditions. Preferably, the instant barrier layer has a CO₂ reduction index of less than or equal to about 95%, preferably less than or equal to about 90%, preferably less than or equal to about 85%, preferably less than or equal to about 80%, preferably less than or equal to about 75%, preferably less than or equal to about 70%, preferably less than or equal to about 65%, preferably less than or equal to about 60%, preferably less than or equal to about 55%, preferably less than or equal to about 50%, preferably less than or equal to about 45%, preferably less than or equal to about 40%, preferably less than or equal to about 35%, preferably less than or equal to about 30%, preferably less than or equal to about 25%, preferably less than or equal to about 20%, preferably less than or equal to about 15%, preferably less than or equal to about 10%, preferably less than or equal to about 5%, preferably less than or equal to about 4%, preferably less than or equal to about 3%, preferably less than or equal to about 2%, preferably less than or equal to about 1 %, preferably less than or equal to about 0.9%, preferably less than or equal to about 0.8%, preferably less than or equal to about 0.7%, preferably less than or equal to about 0.6%, preferably less than or equal to about 0.5%, preferably less than or equal to about 0.4%, preferably less than or equal to about 0.3%, preferably less than or equal to about 0.2%, preferably less than or equal to about 0.1%, preferably less than or equal to about 0.05%, preferably less than or equal to about 0.01% under similar conditions.

In another embodiment, the instant barrier layer has a CO₂ reduction index sufficient to provide the same or better level of barrier properties to a particular substrate when the thickness of the substrate is reduced relative to a comparative substrate without the barrier layer disposed thereon. In other words, application of the barrier layer allows for a reduction in the thickness of the substrate. In an embodiment, the instant barrier layer has a CO₂ reduction index sufficient to provide CO₂ permeability of less than or equal to an uncoated substrate wherein the coated substrate has a thickness which is 90% the thickness of the uncoated substrate, preferably wherein the coated substrate has a thickness which is 80% the thickness of the uncoated substrate, preferably wherein the coated substrate has a thickness which is 70% the thickness of the uncoated substrate, preferably wherein the coated substrate has a thickness which is 60% the thickness of the uncoated substrate, preferably wherein the coated substrate has a thickness which is 50% the thickness of the uncoated substrate, preferably wherein the coated substrate has a thickness which is 40% the thickness of the uncoated substrate, preferably wherein the coated substrate has a thickness which is 30% the thickness of the uncoated substrate, preferably wherein the coated substrate has a thickness which is 20% the thickness of the uncoated substrate, preferably wherein the coated substrate has a thickness which is 10% the thickness of the uncoated substrate.

In an embodiment, the instant barrier layer has at least one of the above disclosed CO₂ reduction indexes at greater than or equal to about 0% Relative Humidity (RH) at room temperature (i.e., a temperature between about 20 and 25°C), preferably greater than or equal to about 25% RH at room temperature, more preferably greater than or equal to about 50% RH at room temperature, more preferably greater than or equal to about 75% RH at room temperature, with greater than or equal to about 90% RH at room temperature being more preferred.

Likewise, the improvement in O₂ barrier properties may be measured in terms of an O₂ reduction index, wherein the O₂ effusion through a coated substrate is expressed as a percentage of the O₂ effusion through an essentially identical uncoated substrate under essentially identical conditions. Accordingly, a barrier coating with an O₂ reduction index of 1% represents a barrier wherein the O₂ effusion rate is 1% of an uncoated substrate. A barrier coating with an O₂ reduction index greater than 100% indicates a substrate which is more permeable to O₂ than the uncoated substrate. Likewise, a barrier coating with an O₂ reduction index of zero (0) represents a substrate which is impermeable to O₂ under the test conditions. In an embodiment, the instant barrier layer has an O₂ reduction index of less than 100% on a particular substrate under a particular set of conditions. Preferably, the instant barrier layer has an O₂ reduction index of less than or equal to about 95%, preferably less than or equal to about 90%, preferably less than or equal to about 85%, preferably less than or equal to about 80%, preferably less than or equal to about 75%, preferably less than or equal to about 70%, preferably less than or equal to about 65%, preferably less than or equal to about 60%, preferably less than or equal to about 55%, preferably less than or equal to about 50%, preferably less than or equal to about 45%, preferably less than or equal to about 40%, preferably less than or equal to about 35%, preferably less than or equal to about 30%, preferably less than or equal to about 25%, preferably less than or equal to about 20%, preferably less than or equal to about 15%, preferably less than or equal to about 10%, preferably less than or equal to about 5%, preferably less than or equal to about 4%, preferably less than or equal to about 3%, preferably less than or equal to about 2%, preferably less than or equal to about 1%, preferably less than or equal to about 0.9%, preferably less than or equal to about 0.8%, preferably less than or equal to about 0.7%, preferably less than or equal to about 0.6%, preferably less than or equal to about 0.5%, preferably less than or equal to about 0.4%, preferably less than or equal to about 0.3%, preferably less than or equal to about 0.2%, preferably less than or equal to about 0.1%, preferably less than or equal to about 0.05%, preferably less than or equal to about 0.01% under similar conditions.

In another embodiment, the instant barrier layer has an O₂ reduction index sufficient to provide the same or better level of barrier properties to a particular substrate when the thickness of the substrate is reduced relative to a comparative substrate without the barrier layer disposed thereon. In other words, application of the barrier layer allows for a reduction in the thickness of the substrate. In an embodiment, the instant barrier layer has an O₂ reduction index sufficient to provide O₂ permeability of less than or equal to an uncoated substrate wherein the coated substrate has a thickness which is 90% the thickness of the uncoated substrate, preferably wherein the coated substrate has a thickness which is 80% the thickness of the uncoated substrate, preferably wherein the coated substrate has a thickness which is 70% the thickness of the uncoated substrate, preferably wherein the coated substrate has a thickness which is 60% the thickness of the uncoated substrate, preferably wherein the coated substrate has a thickness which is 50% the thickness of the uncoated substrate, preferably wherein the coated substrate has a thickness which is 40% the thickness of the uncoated substrate, preferably wherein the coated substrate has a thickness which is 30% the thickness of the uncoated substrate, preferably wherein the coated substrate has a thickness which is 20% the thickness of the uncoated substrate, preferably wherein the coated substrate has a thickness which is 10% the thickness of the uncoated substrate.

In an embodiment, the instant barrier layer has at least one of the above disclosed O₂ reduction indexes at greater than or equal to about 0% Relative Humidity (RH) at room temperature (i.e., a temperature between about 20 and 25°C), preferably greater than or equal to about 25% RH at room temperature, more preferably greater than or equal to about 50% RH at room temperature, more preferably greater than or equal to about 75% RH at room temperature, with greater than or equal to about 90% RH at room temperature being more preferred.

### Examples

Testing was conducted to determine the ability to decrease the re-solubility of PVOH-VAm films (the polyvinyl amine copolymer) in a water-based solution.

### Method:

A PVOH-VAm polymer was produced according to the process for producing an NVF copolymer as described supra. The PVOH-VAm solution at 5% solids was contacted with variety of crosslinking reagents. The solution was then cast as a film with a thickness of 100um. Water was removed in a 30°C oven for 24 hours. A heat history was then applied to the dried film samples as a residence time of 60 seconds under an IR oven wherein the surface of the film reached about 200°F during this time.

### Film Testing

In these tests, the dissolution times is used to determine the solubility of the film comprising the PVOH-VAm polymer produced according to the process for producing an NVF copolymer described supra. Tensile testing was used to determine any embrittlement of the film. Color testing was used to determine the acceptability of film appearance.

The Inventive PVOH-VAm copolymer used for testing was selected from grades M6 and L12, (Sekisui Specialty Chemicals America, LLC), and was produced using the process for producing an NVF copolymer described supra unless otherwise noted. In addition, a comparative co-polymer was produced by Comparative Process D and Comparative Process E as discussed herein. The Inventive and Comparative copolymers utilized herein had the following characteristics:

| Grade | Reaction Solids Wt% | 4% Viscosity at 20°C (cps) | 15% Viscosity at 20°C (cps) | Ash (% Na₂O) | Amine Mol% |
|---|---|---|---|---|---|
| Inventive M6 | 52.04 | 13.37 | 35.58 | 0.89 | 5.0 |
| Inventive L12 | 56.28 | 7.30 | 13.54 | 1.02 | 10.5 |
| M6 Comparative Process D | ∼52 | ∼13 | ∼35 | ∼1 | 5.0 |
| M6 Comparative Process E | ∼52 | ∼13 | ∼35 | ~1 | ∼5 |

Crosslinking reagents used were:
Curesan 199 - Blocked Glyoxal (BASF)
Carbodilite - Carbodiimide
SMA - Styrene Malaic Anyhydride
Borate - Boric acid (Lab Stock).

The crosslinking reagents are presented as a ratio of crosslinking reagent to molar amine functional groups on the PVOH-VAm copolymer.
0.001:1
0.01:1
0.1:1
1:1

The PVOH-VAm copolymer without crosslinking reagent was used as a standard control. In addition, a 50/50 by weight blend of L12 PVOH grade C-325 was used, along with L12 in combination with glyoxal.

### Film Dissolution Time Procedure

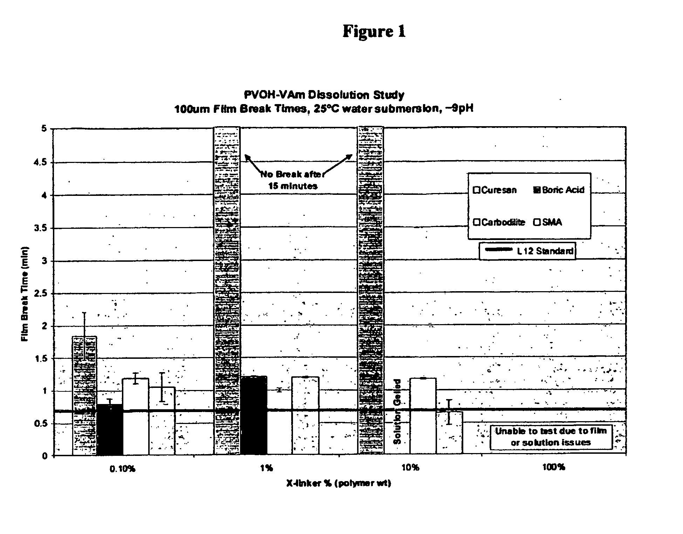

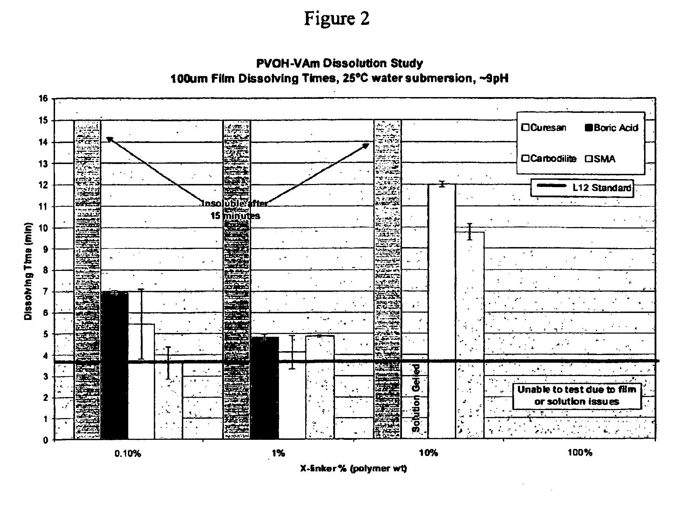

500mL of water were placed in a glass beaker;
Adjust temperature to 25°C;
Adjust pH to 9;
Set a controlled stirring rate;
Submerge a 1"x1" sample in water (supported); and
Record the time when a hole forms in the film to represent the break time; and
Record the time when 95% of the film dissolves as the Dissolution time. The results are shown in Figures 1 and 2.

Accordingly, Curesan 199 (blocked glyoxal) outperformed all other crosslinking reagents insoluble even after 15 minutes at all crosslinker levels below 10%. Control L-12 was 3.61 minutes. No Film break with crosslinker level of 1% and above 130% improvement in film break at crosslinker level of 0.1%. Control L-12 was 0.80 minutes. Other crosslinkers showed only a minor improvement. However, 50/50 Blend of L12 and C-325 had no break or dissolution at 15 minutes (not shown.)

As the data shows, Curesan 199 (Blocked Glyoxal) with L12 PVOH-VAm had the largest impact on improving film dissolution time. Addition levels of 1% and above (based on polymer amine functional groups) were completely insoluble. Other crosslinkers only showed minor improvements in dissolution time and higher levels of addition were needed.

Color Testing: Curesan 199 showed no significant color difference than L12 Control with films of 100um thickness with 1% and lower addition levels.

Mechanical Testing: Curesan 199 had similar mechanical properties to L12 control at addition levels of 1% and lower.

Blending PVOH with PVOH-VAm is an alternative option to adding a crosslinker. Adding a fully hydrolyzed grade of PVOH (ex. C325, C107) can greatly improve the solubility of PVOH-VAm.

Film dissolution testing was conducted using M6 grade PVOH-VAm copolymer produced according to the Improved NVF Copolymer Process. An 100um film was used herein as the standard of comparison.

| | |
|---|---|
| M6:C325 | **Over 400% improvement** |
| 90:10 | of solubility break time (min) |
| M6:C325 | Totally insoluble |
| 75:25 | **Over 600% improvement** |
| M6:C325 | Totally insoluble |
| 50:50 | **Over 600% improvement** |

At 25% added PVOH the film is completely insoluble. Simply adding 10% of fully hydrolyzed PVOH can have a 400% improvement in the re-solubility of the PVOH-VAm film.

### Barrier Properties Testing

An inventive polyvinyl alcohol - polyvinyl amine copolymer (PVOH-PVAm) was produced using the process for producing an NVF copolymer described supra (Inventive M6). Two comparative M6 PVOH-PVAm copolymers were produced using Comparative Process' D and E. Comparative Process D is essentially the same as Comparative Process E, yet produced using different equipment.

In the Inventive Improved NVF Copolymer Process, the initiator is fed for 30 minutes followed by the delay feeds of initiator and monomer feeds for a total of 180 minutes followed by another 120 minutes of reaction after the feeds have finished. Total lab reaction time is 5 hours. Importantly, the process for producing an NVF copolymer described supra does not stop the initiator feed during the initial polymerization phase.

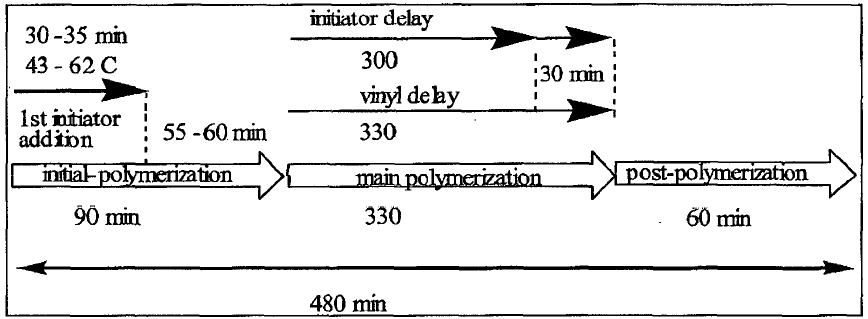

The Comparative Process D and E are shown above and referred to herein as Comparative Process D for simplicity. In the Comparative Process D, the initiator is fed for 30-35 minutes then stopped for 55-60 minutes then the initiator and monomer feeds are started. The initiator feed is stopped after 300 minutes and the monomer feed is continued for another 30 minutes (330 minutes). At this time all feeds are stopped and the reaction is heated for another 60 minutes, which results in a total reaction time of 8 hours.

Films of the PVOH-PVAm copolymers were produced and subjected to 02 barrier testing by MOCON Inc., 7500 Boone Ave. N. Minneapolis. MN 55428 U.S. according to barrier testing parameters well known to one of minimal skill in the art. The PVOH-PVAm copolymers were cross-linked using Polycup 172 (Hercules/Ashland) which is an adduct of epichlorohydrin well known in the art.

### Method of Preparing: Films for Oxygen Barrier Testing

A 7% wt/wt solution of the PVOH-PVAm copolymer was heated to ensure complete dissolution, cooled to room temperature, and then filtered through a 140 mesh screen to remove unsolubilized gels.

The cross-linking compound Polycup 172 was then added to the filtered solutions under gentle agitation. The cross-linking compound was added at 2.5% and 5% wt/wt, based on calculations relative to the activity of the cross-linking compound and the composition of the PVOH-PVAm copolymer.

The solutions were then centrifuged 10' @ 1200 rpm to remove entrapped air bubbles and then cast on a 3 mil PET film (the test substrate) using a Gardco 1.5 wet mil bar applicator.

The films were dried in a forced air oven for 2 minutes at 121°C.

The coated PET films were then tested for oxygen transmission rate (OTR) according to MOCON testing standards using a MOCON Oxtran 2/21 Instrument according to:
ASTM-F3985 used to determine the rate of transmission of oxygen gas, at steady-state, at 23°C 0% RH;
ASTM-F-1927 used to determine the rate of transmission of oxygen gas, at steady-state, at a given temperature and %RH level, through film, sheeting, laminates, co-extrusions, or plastic-coated papers or fabrics;
DIN 53380 used to determine gas transmission rate through plastic films or other materials depending on temperature and testing gas;
JIS-7126 used to determine the gas transmission rate of any plastic material in the form of film, sheeting, laminate, co-extruded material or flexible plastic-coated material under a differential pressure;
ISO CD 15105-2 used to determine the gas transmission rate of any plastic material in the form of film, sheeting, laminate, co-extruded material or flexible plastic-coated material; and/or an equivalent standard testing procedure.

In a first round of testing, the samples were evaluated for OTR at 40°C and 50% RH as follows:

| **OTR (Oxygen Transmission Rate) MOCON Testing** | **OTR @ 40°C 50% RH [cm³/(100 in²**-**day)]** | **Film Thickness [microns]** |
|---|---|---|
| Comparative PET substrate (no coating) 3 mils | 1.8900 | 2.67 |
| Inventive Copolymer Neat | 0.0029 | 2.67 |
| Comparative Celvol 310 | 0.0086 | 2.67 |
| Comparative Oxibloc 1322 | 1.4424 | 2.67 |
| Comparative AQ-4104 EVOH | 0.3395 | 2.67 |
| Inventive Copolymer + C-310 (50/50) | 0.0029 | 2.67 |
| Inventive Copolymer + AQ-4104 (70/30) pH=10.5 | 0.0038 | 2.67 |
| Inventive Copolymer + AQ-4104 (70/30) pH=5.1 | 0.0086 | 2.67 |

In a second round of testing, the effect of humidity on the oxygen transmission rate was determined using the Inventive copolymer film as follows:

| | OTR 23°C 0% RH [cm³ / (100 in²-day)] | OTR 23 °C 50% RH [cm³ / (100 in²-day)] | OTR 23 °C 75% RH [cm³/ (100 in² -day)] | OTR 23 °C 85% RH [cm³ / (100 in-day)] | Film Thickness [microns] |
|---|---|---|---|---|---|
| Inventive Copolymer Neat | 0.0034 | 0.0055 | 0.0036 | 0.0063 | 2.67 |
| Inventive Copolymer + 0.5% P172 | 0.0021 | 0.0014 | 0.0009 | 0.0069 | 2.67 |
| Inventive Copolymer + 1.5% P172 | 0.0006 | 0.0003 | 0.0003 | 0.0066 | 2.67 |
| Comparative AQ-4104 EVOH | 0.0241 | 0.0245 | 0.0263 | 0.0260 | 2.67 |
| Inventive Copolymer + AQ-4104 (70/30) | 0.0029 | 0.0005 | 0.0029 | 0.0063 | 2.67 |

OTR Lower End Detection Limit < 0.0003 cm³/100in²-day
Test Gas concentration 100% O₂
Test Gas Pressure: 760 mm Hg
Carrier gas 98% N₂, 2% H₂

As the data shows, the instant barrier layer may further comprise an additional polymer or copolymer (e.g., ethylene-vinyl alcohol, EVOH) which provides a further benefit over the individual components alone.

In a third round of testing, the OTR of PVOH-PVAM polymers produced by different processes were evaluated.

| | **OTR 23C 50% RH [cm³/ (100 in²-day)]** | **OTR 23C 75% RH [cm³/ (100 in²-day)]** | **OTR 23C 90% RH [cm³/ (100 in²-day)]** | **Film Thickness [microns]** |
|---|---|---|---|---|
| M6 Inventive Copolymer Neat | 0.0016 | 0.0016 | 0.0014 | 2.67 |
| M6 Comparative Process D Neat | 0.0030 | 0.0178 | 0.0298 | 2.67 |
| M6 Comparative Process E Neat | 0.0034 | 0.0164 | 0.0253 | 2.67 |

In addition, the viscosity of the PVOH-PVAm solutions cross-linked with epichlorohydrin (Polycup 172) was evaluated over time.

| **Brookfield Viscosity, cps at 25°C** | **Day 1** | **Day 2** | **Day 3** | **Day 4** | **Day 5** |
|---|---|---|---|---|---|
| M6 Inventive Copolymer + 5% P172 | 70 | 120 | 270 | 1100 | gelled/cuttable |
| M6 Comparative Process D+5%P172 | 70 | 100 | 160 | 360 | almost gelled/very thick |

As the data show, the Inventive copolymer produced according to the process for producing an NVF copolymer described supra shows a marked improvement in OTR relative to the untreated substrate, and an improvement in properties relative to the Comparative Process D and E materials. In addition, the Inventive copolymer produced via the "process for producing an NVF copolymer described supra" demonstrates higher reactivity with crosslinkers as compared to Process D. In addition to barrier properties, the inventive copolymer films have greatly improved color properties. To demonstrate this, the APHA color of an 8% solution of the copolymer was measured using a Hunter Lab Colorquest colorimeter. The data are as follows:
APHA Color Analysis using Hunter Lab
Colorquest equipment - 10mm sample size
diluted to 8% TS

| | | |
|---|---|---|
| M6 Inventive Copolymer Neat | 3.88 | clear white |
| M6 Comparative Process D Neat | 128.52 | very yellow |
| M6 Comparative Process E Neat | 93.6 | yellow |

| | | |
|---|---|---|
| *The lower the number - the less yellow in color. | | |

Accordingly, the inventive copolymer produces an essentially "water white" film, whereas the comparative films have an unacceptable yellow color.

### BACKGROUND OF THE INVENTION

The present invention generally relates to a barrier layer, a method of producing a barrier layer, and articles comprising a barrier layer.

Numerous referenced are directed to barrier layers and/or packages comprising barrier layers. For example, U.S. Patent Publication No. 2006/0246241 is generally directed to a packaging material which comprises a polymeric base component and a barrier component which coats and lines a surface of the base component, the barrier component inhibiting migration of gases, vapors and liquids through the base component. The barrier component comprises a polymeric layer comprising at least two different polymeric species which are polar and which are water-soluble. The different species have different chemical compositions and are complementary in that they are bound together physically by interpolymer complexation to form an interpenetrating physical network. The disclosure also provides a process for producing the packaging material which comprises coating at least one surface of the base component with the barrier component and causing the complementary species to interact together physically by interpolymer complexation to form an interpenetrating physical network.

US 5300566 is directed to polyvinyl alcohol-polyvinyl amine copolymers containing a low level of amine functionality. WO 03/054030 is directed to coating layers comprising polyvinyl alcohol-polyvinyl amine polymers.

WO2007/002322 is generally directed to a coating composition for providing substrates with oxygen barrier properties is disclosed. The substrate may be, for instance, a film, such as a polyester film. The coating composition includes a copolymer ofmaleic acid and acrylic acid and a copolymer of vinyl alcohol and a vinylamine. The barrier coating formed from the coating composition is typically less than about (1) micron in thickness and provides reduced oxygen transmission even at relatively high relative humidities.

While numerous referenced are directed to barrier layers, their production and use, barrier layers applied as water-soluble solutions which are effective against carbon dioxide and oxygen transmission have been largely ignored.

As can be seen, there is a need for barrier layers, which are applied as water-soluble compositions, which provide improved CO₂ and/or O₂ barrier properties, in particular, to rigid substrates.

### SUMMARY OF THE INVENTION

In one aspect of the present invention, a barrier layer comprises a polyvinyl amine-polyvinyl alcohol copolymer applied to a substrate as a water-soluble composition, wherein the polyvinyl amine-polyvinyl alcohol copolymer is formed by copolymerizing: (a) from 99 to 1 mol% of N-vinylformamide and (b) from 1 to 99 mol% of one or more vinyl C₁-C₁₀- alkyl esters, and then hydrolyzing from 30 to 100 mol% of the formyl groups from the copolymerized units (a) to form amino groups and from 30 to 100 mol% of the C₁-C₁₀ alkyl ester groups from the copolymerized units (b) to form hydroxyl groups, wherein the copolymer has a unimodal compositional distribution as evidenced by essentially one peak in a gradient elution chromatographic analysis and wherein the polyvinyl amine-polyvinyl alcohol copolymer is essentially free of amidine rings as evidenced by a lack of an absorption in a ¹³C NMR spectrum of the copolymer consistent with an amidine carbon atom absorption.

The foregoing has outlined rather broadly the features and technical advantages of the present invention in order that the detailed description of the invention that follows may be better understood. Additional features and advantages of the invention will be described hereinafter which form the subject of the claims of the invention.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

In the following description, numerous specific details are set forth to provide a thorough understanding of the present invention. However, it will be obvious to those skilled in the art that the present invention may be practiced without such specific details. In other instances, well-known devices have been shown in block diagram form in order not to obscure the present invention in unnecessary detail. For the most part, details unnecessary to obtain a complete understanding of the present invention have been omitted in as much as such details are within the skills of persons of ordinary skill in the relevant art.

Terms used herein include a reactor, which is defined as any container(s) in which a chemical reaction occurs. As used herein, the new numbering scheme for the Periodic Table Groups are used as in CHEMICAL AND ENGINEERING NEWS, 63(5), 27 (1985). Polymer maybe used to refer to homopolymers, copolymers, interpolymers, and terpolymers. Likewise, a copolymer may refer to a polyner comprising at least two monomers, optionally with other monomers.

When a polymer is referred to as comprising a monomer, the monomer is present in the polymer in the polymerized form of the monomer or in the derivative form of the monomer. Likewise, when catalyst components are described as comprising neutral stable forms of the components, it is well understood by one skilled in the art, that the ionic form of the component is the form that reacts with the monomers to produce polymers.

As used herein, structural formulas are employed as is commonly understood in the chemical arts; lines ("—") used to represent associations between atoms, as well as the phrases "associated with", "bonded to" and "bonding", are not limited to representing a certain type of chemical bond, as these lines and phrases are meant to represent a "chemical bond"; a "chemical bond" defined as an attractive force between atoms that is strong enough to permit the combined aggregate to function as a unit, or "compound".

Broadly, the present invention generally provides a barrier layer, a method of producing a barrier layer, and articles comprising a barrier layer.

### Barrier Layer Composition

The barrier layer comprises a copolymer comprising vinyl alcohol and a vinyl amine, which may be referred to herein simply as the polyvinyl amine copolymer, and/or by the abbreviation PVAm, wherein the polyvinyl amine-polyvinyl alcohol copolymer is formed by copolymerizing: (a) from 99 to 1 mol% of N-vinylformamide and (b) from 1 to 99 mol% of one or more vinyl C₁-C₁₀-alkyl esters, and then hydrolyzing from 30 to 100 mol% of the formyl groups from the copolymerized units (a) to form amino groups and from 30 to 100 mol% of the C₁-C₁₀ alkyl ester groups from the copolymerized units (b) to form hydroxyl groups, wherein the copolymer has a unimodal compositional distribution as evidenced by essentially one peak in a gradient elution chromatographic analysis and wherein the polyvinyl amine-polyvinyl alcohol copolymer is essentially free of amidine rings as evidenced by a lack of an absorption in a ¹³C NMR spectrum of the copolymer consistent with an amidine carbon atom absorption.

The polyvinyl amine copolymer comprises vinyl amine residues and vinyl alcohol residues as a random copolymer.

The process to produce a water-soluble copolymer suitable for use in the instant application may comprise the steps of:
a) charging a first portion of a total amount of N-vinylformamide into a reactor;
b) charging a first portion of a total amount of at least one vinyl C₁-C₁₀ alkyl ester into the reactor;
c) continuously feeding a first portion of a total amount of a free radical polymerization catalyst at a first catalyst flow rate into the reactor;
d) contacting the first portion of N-vinylformamide, the first portion of at least one vinyl C₁-C₁₀ alkyl ester, in the presence of the free radical polymerization catalyst under polymerization conditions for a first period of time;
e) after the first period of time, continuously feeding for a second period of time, a second portion of the n-vinylformamide at a n-vinylformamide flow rate into the reactor while simultaneously feeding a second portion of at least one vinyl C₁-C₁₀ alkyl ester into the reactor at an ester flow rate, while simultaneously feeding a second portion of the free radical polymerization catalyst at a second catalyst flow rate into the reactor under polymerization conditions until the total amount of the N-vinylformamide, the total amount of the vinyl C₁-C₁₀ alkyl ester, and the total amount of the free radical polymerization catalyst have been fed into the reactor;
f) followed by contacting for a third period of time, the n-vinylformamide and the at least one vinyl C₁-C₁₀ alkyl ester in the presence of the free radical polymerization catalyst in the reactor under polymerization conditions to produce an intermediate copolymer comprising polyvinyl formamide and one or more polyvinyl C₁-C₁₀ alkyl esters, wherein the third period of time expires when the solids content of the intermediate copolymer in the reactor is greater than or equal to about 20 wt% and less than or equal to about 70 wt%; followed by
g) saponifying the copolymer under either acidic or basic conditions to produce an intermediate polyvinyl amide-polyvinyl alcohol copolymer; followed by
h) hydrolyzing the intermediate polyvinyl amide-polyvinyl alcohol copolymer under either acidic or basic conditions to produce the water-soluble copolymer. The barrier layer is formed by applying the polyvinyl amine-polyvinyl alcohol copolymer to a substrate as a water soluble composition.

### Properties of the Polyvinyl Amine Copolymer

The polyvinyl amine copolymer of the instant application comprises residues of vinyl amine and vinyl alcohol. In an embodiment, the polyvinyl amine copolymer comprises greater than or equal to about 0.5 mol% vinyl amine, and less than or equal to about 99 mol% vinyl amine, based on the total amount of the polyvinyl amine copolymer present. Within this range, the polyvinyl amine copolymer preferably comprises greater than or equal to about 1 mol% vinyl amine, preferably greater than or equal to about 2 mol%, preferably greater than or equal to about 3 mol%, preferably greater than or equal to about 4 mol%, preferably greater than or equal to about 5 mol%, preferably greater than or equal to about 6 mol%, preferably greater than or equal to about 7 mol%, preferably greater than or equal to about 8 mol%, preferably greater than or equal to about 9 mol%, preferably greater than or equal to about 10 mol%, preferably greater than or equal to about 15 mol%, preferably greater than or equal to about 20 mol%, preferably greater than or equal to about 25 mol%, preferably greater than or equal to about 30 mol%, preferably greater than or equal to about 35 mol%, preferably greater than or equal to about 40 mol%, preferably greater than or equal to about 45 mol%, preferably greater than or equal to about 50 mol% polyvinyl amine, based on the total amount of the polyvinyl amine copolymer present.

Also within this range, the polyvinyl amine copolymer preferably comprises less than or equal to about 90 mol% vinyl amine, preferably less than or equal to about 80 mol%, preferably less than or equal to about 70 mol%, preferably less than or equal to about 60 mol%, preferably less than or equal to about 50 mol%, preferably less than or equal to about 30 mol%, preferably less than or equal to about 25 mol%, preferably less than or equal to about 20 mol%, preferably less than or equal to about 15 mol%, preferably less than or equal to about 10 mol%, preferably less than or equal to about 9 mol%, preferably less than or equal to about 8 mol%, preferably less than or equal to about 7 mol%, preferably less than or equal to about 6 mol%, preferably less than or equal to about 5 mol%, preferably less than or equal to about 4 mol%, preferably less than or equal to about 3 mol%, preferably less than or equal to about 2 mol% polyvinyl amine, based on the total amount of the polyvinyl amine copolymer present.

In one embodiment, the weight average molecular weight of the polyvinyl amine copolymer may be greater than or equal to about 5,000g/mol, and less than or equal to about 2,000,000 g/mol. Within this range, the weight average molecular weight of the polyvinyl amine copolymer preferably is greater than about 10, 000, more preferably greater than about 20,000, more preferably greater than about 30,000, more preferably greater than about 40,000, more preferably greater than about 50,000, more preferably greater than about 60,000, more preferably greater than about 70,000, more preferably greater than about 80,000, more preferably greater than about 90,000, more preferably greater than about 100,000, more preferably greater than about 150,000 g/mol.

Also within this range the weight average molecular weight of the polyvinyl amine copolymer preferably is less than about 1,500,000, more preferably less than about 1,000,000, more preferably less than about 500,000, more preferably less than about 100,000, more preferably less than about 90,000, more preferably less than about 80,000, more preferably less than about 70,000, more preferably less than about 60,000, more preferably less than about 50,000, more preferably less than about 40,000, more preferably less than about 20,000 g/mol.

In an embodiment, the polyvinyl amine copolymer may include a copolymer having a unimodal distribution. In another embodiment, the polyvinyl amine copolymer may include a copolymer having a bimodal distribution or a multimodal distribution.

In an embodiment, the polyvinyl amine copolymer may have a polydispersity, determined as the weight average molecular weight (Mw) divided by the number average molecular weight (Mn) of from 1 to about 200. Within the range, the polyvinyl amine copolymer may have a polydispersity of greater than or equal to about 2, more preferably greater than or equal to about 3, more preferably greater than or equal to about 4, more preferably greater than or equal to about 5, more preferably greater than or equal to about 6, more preferably greater than or equal to about 7, more preferably greater than or equal to about 8, more preferably greater than or equal to about 9, more preferably greater than or equal to about 10, more preferably greater than or equal to about 15, more preferably greater than or equal to about 20, more preferably greater than or equal to about 25, more preferably greater than or equal to about 30, more preferably greater than or equal to about 35, more preferably greater than or equal to about 40.

Also within this range, the polyvinyl amine copolymer may have a polydispersity of less than or equal to about 45, more preferably less than or equal to about 40, more preferably less than or equal to about 35, more preferably less than or equal to about 30, more preferably less than or equal to about 25, more preferably less than or equal to about 20 more preferably less than or equal to about 15, more preferably less than or equal to about 10, more preferably less than or equal to about 9, more preferably less than or equal to about 15, more preferably less than or equal to about 8, more preferably less than or equal to about 7, more preferably less than or equal to about 6, more preferably less than or equal to about 5, more preferably less than or equal to about 4.

The instant polyvinyl amine copolymer has a unimodal composition distribution as evidenced by essentially one peak in a gel permeation gradient elution chromatographic analysis. A suitable gel permeation gradient elution chromatographic analysis may be found in Waters Corporation Publication No. WA10192 entitled, "Waters Alliance System: Gradient Analysis of Polymer Blends" Published by Waters Corporation, Milford, Ma. Available at: http://www.waters.com/waters/library.htm?cid=511436&lid=1536540

In an embodiment, the gel permeation gradient elution chromatographic analysis includes the following steps and conditions:

### HPLC conditions:

10 minute run time with a 5 minute post-run equilibrium.
Solvent starts with 99% Water / 1% acetonitrile (ACN) at time 0 minutes, and finishes with 80 % ACN and 20% of 99% Water / 1% ACN at 10 minutes. The ramp is uniform with the time.
Flow: 1.0 ml/min
Column: PLRP-S, 4000A, 8 Micron, 50 x 4.6 mm, temperature at 40°C
Injection volume: 20 Microliters
Sample flows into an evaporative light scattering detector (ELS) after passing through the HPLC column.

### ELS conditions:

Nitrogen gas flow at 2.0 ml/min
Nebulizer temperature at 90°C
Evaporation temperature at 120°C

### Data

Data acquisition is through Atlas chromatography system.

### Sample Preparation

Sample preparation takes a 1-2 percent solution and heats at 85°C for an hour while stirring, then cool back down to room temperature (i.e., 25°C.)

Filter through a 0.45 Micron filter into a crimp vial.

In an embodiment, instant polyvinyl amine copolymer has a unimodal molecular weight distribution as evidenced by a 4 wt% aqueous solution having a turbidity of less than 100 turbidity units (NTU.) For purposes herein, turbidity units indicate Nephelometric Turbidity Units (NTU). Turbidity is measured using a nephelometer, the use of which is commonly known to one of minimal skill in the art.

In an embodiment, the turbidity of a 4 wt% solution is preferably less than or equal to about 95, preferably less than or equal to about 90, preferably less than or equal to about 85, preferably less than or equal to about 80, preferably less than or equal to about 75, preferably less than or equal to about 70, preferably less than or equal to about 65, preferably less than or equal to about 60, preferably less than or equal to about 55, preferably less than or equal to about 50, preferably less than or equal to about 45, preferably less than or equal to about 40, preferably less than or equal to about 35, preferably less than or equal to about 30, preferably less than or equal to about 25, preferably less than or equal to about 20, with less than or equal to about 15 NTU being still more preferred.

The polyvinyl amine copolymer is essentially free of amidine rings. This indicates a random distribution of the amide in the intermediate copolymer prior to hydrolysis and thus, a random polyvinyl amine copolymer. The amine copolymer is essentially free of amidine rings as evidenced by a lack of an absorption in a ¹³C NMR spectrum of the copolymer consistent with an amidine carbon atom absorption.

The process by which amidine rings form in the copolymer is represented as follows:

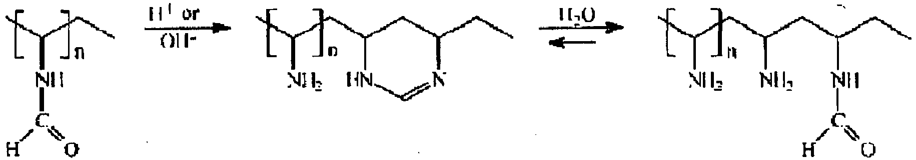

Wherein amide moieties in the copolymer react via intramolecular reaction to produce the amidine rings. The presence of such rings may be determined by ¹³CNMR as shown in Figure 3.

Accordingly, in an embodiment, the presence of an absorption in the range of 150 ppm may indicate an amidine ring is present in a copolymer. In an embodiment, the instant copolymer is essentially free of amidine rings as evidenced by a lack of an absorption in a¹³C NMR spectrum of the copolymer consistent with an amidine carbon atom absorption (e.g., 150 ppm or equivalent.) For more information see Witek, Ewa, Pazdro, Marcin and Bortel, Edgar (2007) 'Mechanism for Base Hydrolysis of Poly(N-vinylformamide)', Journal of Macromolecular Science, Part A, 44:5, 503 - 507

### DOI: 10.1080/10601320701235461 URL:http://dx.doi.org/10.1080/10601320701235461

In an embodiment the instant copolymer has less color than a copolymer produced according to the prior art. This is thought to be the result of a more random copolymer of the instant invention, as compared to copolymers known in the art. In an embodiment, a 4% solution of the copolymer has an APHA color value of less than or equal to about 100 APHA units, determined according to ASTM D1209 or a comparable method. Preferably, a 4% solution of the copolymer has an APHA color value of less than or equal to 10, preferably less than or equal to 5 APHA units determined according to ASTM D 1209 or a comparable method.

The instant copolymer also has less of an odor than do comparative polyvinyl amine copolymers. However, odor is essentially impossible to quantify and thus, a general statement of reduced odor compared to known copolymers is offered herein.

The barrier layer comprises a water-soluble copolymer formed by copolymerizing:
(a) from 99 to 1 mol% of N-vinylformanaide and
(b) from 1 to 99 mol% of one or more vinyl C₁-C₁₀ alkyl esters, and then hydrolyzing from 30 to 100 mol% of the formyl groups from the copolymerized units (a) to form amino groups and from 30 to 100 mol% of the C₁-C₁₀ alkyl ester groups from the copolymerized units (b) to form hydroxyl groups, wherein the copolymer has a unimodal compositional distribution as evidenced by essentially one peak in a gel permeation gradient elution chromatographic analysis; and/or
   wherein an aqueous 4% solution of the copolymer measured at 10 mm cell has an APHA color value of less than or equal to 10 APHA units determined according to ASTM D1209 or a comparable method; and/or
   wherein the copolymer has a unimodal molecular weight distribution as evidenced by a 4 wt% aqueous solution having a turbidity of less than 100 NTU; and/or
   wherein the copolymer is essentially free of amidine rings as evidenced by a lack of an absorption in a ¹³C NMR spectrum of the copolymer consistent with an amidine carbon atom absorption; and/or
wherein the copolymer is produced by a process comprising the steps of:
a) charging a first portion of a total amount of N-vinylformamide into a reactor;
b) charging a first portion of a total amount of at least one vinyl C₁-C₁₀ alkyl ester into the reactor;
c) continuously feeding a first portion of a total amount of a free radical polymerization catalyst at a first catalyst flow rate into the reactor;
d) contacting the first portion of N-vinylformamide, the first portion of at least one vinyl C₁-C₁₀ alkyl ester, in the presence of the free radical polymerization catalyst under polymerization conditions for a first period of time;
e) after the first period of time, continuously feeding for a second period of time, a second portion of the n-vinylformamide at a n-vinylformamide flow rate into the reactor while simultaneously feeding a second portion of at least one vinyl C₁-C₁₀ alkyl ester into the reactor at an ester flow rate, while simultaneously feeding a second portion of the free radical polymerization catalyst at a second catalyst flow rate into the reactor under polymerization conditions until the total amount of the N-vinylformamide, the total amount of the vinyl C₁-C₁₀ alkyl ester, and the total amount of the free radical polymerization catalyst have been fed into the reactor;
f) followed by contacting for a third period of time, the n-vinylformamide and the at least one vinyl C₁-C₁₀ alkyl ester in the presence of the free radical polymerization catalyst in the reactor under polymerization conditions to produce an intermediate copolymer comprising polyvinyl formamide and one or more polyvinyl C₁-C₁₀ alkyl esters, wherein the third period of time expires when the solids content of the intermediate copolymer in the reactor is greater than or equal to 20 wt% and less than or equal to 70 wt%; followed by
g) saponifying the copolymer under either acidic or basic conditions to produce an intermediate polyvinyl amide-polyvinyl alcohol copolymer; followed by
h) hydrolyzing the intermediate polyvinyl amide-polyvinyl alcohol copolymer under either acidic or basic conditions to produce the water-soluble copolymer.

### Other Components of the Barrier Coating

In addition to the polyvinyl amine copolymer, the barrier coating of the instant application may further include other components that modify the water solubility and/or barrier properties of the barrier coating. In an embodiment, the barrier coating may include crosslinked polymers, preferably crosslinking involving the polyvinyl amine copolymer. Crosslinking of the barrier coating may be formed by chemical reactions that are initiated by heat, pressure, and/or radiation. In an embodiment, crosslinking may be induced through exposure of the barrier layer material to a radiation source, e.g., electron beam exposure, gamma-radiation, and/or UV light. In another embodiment, the barrier layer may include one or more crosslinking reagents which results in a chemical reaction that forms crosslinks comprising intermolecular and/or intramolecular linkages with the polyvinyl amine copolymer. Crosslinking of the polyvinyl amine copolymer with the crosslinking agent maybe initiated by application of a catalyst, an activating reagent, heat, removal of solvent, irradiation with electromagnetic energy (e.g., UV and gamma-radiation), or any combination thereof.

The barrier layer is preferably applied as an aqueous solution, however, the barrier layer, once applied and/or cured to a substrate, preferably has an adhesion to the substrate that prevents the barrier layer from being removed by any subsequent processing of the article being coated. Accordingly, after being applied and fixed to the substrate (e.g., by crosslinking, heating, irradiation, and/or the like), the solubility of the barrier layer in subsequent processing steps, typically aqueous based, is preferably reduced.

Suitable crosslinking reagents include multi-functional monomers reactive with the amine and/or the alcohol functional group of the polyvinyl amine copolymer. Examples include multi-functional monomers having at least two members selected from the group consisting of a vinyl group, an acryloyl group, a methacryloyl group, an aldehyde group, an isocyanate group and/or an allyl group. Examples of multi-functional monomer include divinyl benzene, trimethylol propane triacrylate, 1,6-hexanediol diacrylate, 1,9-nonanediol diacrylate, 1,10-decanediol diacrylate, trimethylol propane trimethacrylate, 1,6-hexanediol dimethacrylate, 1,9-nonanediol dimethacrylate, 1,10-decanediol dimethacrylate, 1,2,4-triallyl trimellitate, triethylene glycol diacrylate, tetraethylene glycol diacrylate, cyanoethyl acrylate, bis(4-acryloxy polyethoxy phenyl) propane, triallyl isocyanurate and other similar compounds.

Other suitable crosslinking agents include organic titanate complexes, epichlorohydrin, hexamethylene diisocyanate, glyoxal, butanediol diacrylate, terephthaldehyde and/or glutaraldehyde. In addition, the polyvinyl amine copolymer may be crosslinked with other various multi-functional organic compounds such as dialdehydes, polyepoxides, di- or triacrylates, di- or triisocyanates or dihalides, or inorganic compounds containing multi-valent anions or inorganic cations which are capable of complexing with polyvinyl amine. Examples include butanediol diacrylate, diisocyanatohexane, diepoxides, hexamethoxymethyl melamine resin, N,N'dihydroxymethyl-4,5-dihydroxyethylene urea, butanediol diacrylate, dimethyl adipate, sodium formate, and poly(ethylene glycol) diglycidyl ethers.

Inorganic crosslinking agents include compounds containing multivalent anions including titanates, zirconates, phosphates, silicates, and/or inorganic cations from Group 4-13, preferably Cu²⁺, Fe³⁺, and Zn²⁺.

In an embodiment, the crosslinking agent is a non-acidic crosslinking agent comprising a modified glyoxal compound. Such modified glyoxal compounds are represented by the general formula: 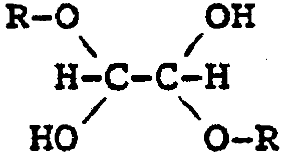 where R represents C₁-C₁₀ lower alkyl groups. The molecular weight of such materials is typically below 500. Preferred modified glyoxal compounds are modified polyhydroxy alkyl ether acetal compounds commercially available from BASF under the trade name CURESAN™. Preferred CURESAN™ compounds include CURESAN™ 199, 200 and 300, which are blocked aldehydes.

In an embodiment, the crosslinking agents are selected from the group consisting of monoaldehydes e.g. formaldehyde, acetaldehyde, and benzaldehyde; dialdehydes e.g., glutaraldehyde, glyoxal, and succinic dialdehyde, trimethylol melamine, urea-formaldehyde, blocked aldehydes, polyacrolein, boric acid and borates e.g., borates, methyl borate, boron trifluoride, boric anhydride, pyroborates, peroxoborates, and boranes.

Other potential crosslinking agents include N-lactam carboxylates, dicarboxylic acids e.g., maleic acid, and oxalic acid, di-isocyanates, divinyl sulphate, and/or inorganic compounds such as germanic acids, germanates, titanium salts and esters, chromates, vanadates, cupric salts and other Group 4-12 salts.

The crosslinking agents may be present in the barrier layer at a concentration sufficient to at least partially crosslink the polyvinyl amine copolymer. In an embodiment, the barrier layer is only partially crosslinked. In another embodiment, the barrier layer is essentially completely crosslinked.

The crosslinking reagent or reagents may be present in the barrier layer at between about 0.001 wt% to about 50 wt%, based on the total amount of the crosslinking reagent and the polyvinyl amine copolymer present. Within this range, the concentration of the crosslinking reagent in the barrier layer is greater than or equal to about 0.005 wt%, preferably greater than or equal to about 0.01 wt%, preferably greater than or equal to about 0.015 wt%, preferably greater than or equal to about 0.02 wt%, preferably greater than or equal to about 0.03 wt%, preferably greater than or equal to about 0.04 wt%, preferably greater than or equal to about 0.05 wt%, preferably greater than or equal to about 0.06 wt%, preferably greater than or equal to about 0.07 wt%, preferably greater than or equal to about 0.08 wt%, preferably greater than or equal to about 0.09 wt%, preferably greater than or equal to about 0.1 wt%, preferably greater than or equal to about 0.2 wt%, preferably greater than or equal to about 0.3 wt%, preferably greater than or equal to about 0.4 wt%, preferably greater than or equal to about 0.5 wt%, preferably greater than or equal to about 0.6 wt%, preferably greater than or equal to about 0.7 wt%, preferably greater than or equal to about 0.8 wt%, preferably greater than or equal to about 0.9 wt%, preferably greater than or equal to about 1 wt%, preferably greater than or equal to about 2 wt%, preferably greater than or equal to about 3 wt%, preferably greater than or equal to about 4 wt%, preferably greater than or equal to about 5 wt%, preferably greater than or equal to about 6 wt%, preferably greater than or equal to about 7 wt%, preferably greater than or equal to about 8 wt%, preferably greater than or equal to about 9 wt%, preferably greater than or equal to about 10 wt%, preferably greater than or equal to about 20 wt%, preferably greater than or equal to about 30 wt%, preferably greater than or equal to about 40 wt%, based on the total amount of the crosslinking reagent and the polyvinyl amine copolymer present.

Also within this range, the concentration of the crosslinking reagent in the barrier layer is less than or equal to about 40 wt%, preferably less than or equal to about 30 wt%, preferably less than or equal to about 20 wt%, preferably less than or equal to about 10 wt%, preferably less than or equal to about 9 wt%, preferably less than or equal to about 8 wt%, preferably less than or equal to about 7 wt%, preferably less than or equal to about 6 wt%, preferably less than or equal to about 5 wt%, preferably less than or equal to about 4 wt%, preferably less than or equal to about 3 wt%, preferably less than or equal to about 2 wt%, preferably less than or equal to about 1 wt%, preferably less than or equal to about 0.9 wt%, preferably less than or equal to about 0-8 wt%, preferably less than or equal to about 0.7 wt%, preferably less than or equal to about 0.6 wt%, preferably less than or equal to about 0.5 wt%, preferably less than or equal to about 0.4 wt%, preferably less than or equal to about 0.3 wt%, preferably less than or equal to about 0.2 wt%, preferably less than or equal to about 0.1 wt%, preferably less than or equal to about 0.09 wt%, preferably less than or equal to about 0.08 wt%, preferably less than or equal to about 0.07 wt%, preferably less than or equal to about 0.06 wt%, preferably less than or equal to about 0.05 wt%, preferably less than or equal to about 0.04 wt%, preferably less than or equal to about 0.03 wt%, preferably less than or equal to about 0.02 wt%, preferably less than or equal to about 0.015 wt%, preferably less than or equal to about 0.01 wt%, preferably less than or equal to about 0.005 wt%, based on the total amount of the crosslinking reagent and the polyvinyl amine copolymer present.

It is important to mention that the mechanical properties of the instant barrier layer are related to the ability to control crosslinking, which in view of the instant barrier layer composition, do not significantly impact tensile, modulus, and elongation. This unexpected property of the instant barrier layer is demonstrated in the accompanying examples.

In an embodiment, the instant barrier layer comprises one or more oxygen scavengers, which are chemicals that react with oxygen (O₂) to reduce the concentration of oxygen. Examples include sulfite (SO₃⁻²), bisulfite (HSO₃⁻) ions that combine with oxygen to form sulfate (SO₄⁻²) and a nickel or cobalt catalyst. Various oxygen scavenging systems which include various polymers in combination with active components may also be used.

### Other Polymers

In addition to the polyvinyl amine copolymer, the instant barrier layer may include various homopolymers and/or copolymers that improve particular properties of the barrier layer performance. In an embodiment, the barrier layer may include water-soluble copolymers of N-vinyl pyridine, ethylenically unsaturated mono, di, or trialkyl ammonium salts, such as vinylbenzene trimethyl ammonium chloride, aminoethyl acrylate hydrochloride, N-methylamino ethylacrylate, N,N-dimethylaminoethyl methacrylate, N,N-dimethylaminomethyl-N-acrylamide, and N,N-dimethylaminoethyl-N-acrylamide. Preferred are polymers containing a plurality of aminoalkyl nitrogen-substituted acrylamide mers, preferably wherein the aminoalkyl substituent is hydrophilic, e.g., contains less than about 8 carbons.

In an embodiment, the barrier coating may include polyvinyl alcohol polymers of various levels of hydrolysis. Suitable polyvinyl alcohol copolymers have a level of hydrolysis preferably greater than or equal to about 85% up to about 99.9%, with a level of hydrolysis of between 86.0-89.0% preferred, 91.0-93.0% still more preferred, 92.0-94.0% still more preferred, 95.5-96.5% still more preferred, 92.5-95.5% still more preferred, 98.0-98.8% still more preferred, with greater than or equal to about 99.3+ being still more preferred.

In an embodiment, the barrier coating may further include alpha-olefin-vinyl alcohol copolymers, wherein the alpha-olefin has from 2 to 10 carbon atoms; preferably EVOH.

The viscosity of a 4% solution of the polyvinyl alcohol polymer may be from about 2 to about 80 cps at 20°C. In an embodiment, the polyvinyl alcohol polymer has a viscosity of about 45-72 cps, a degree of polymerization of about 1600 to 2200, and a Mw of about 146,000 to 186,000. In another embodiment, the polyvinyl alcohol polymer has a viscosity of about 5-6 cps, a degree of polymerization of about 350 to 650, and a Mw of about 31,000 to 50,000. In another embodiment, the polyvinyl alcohol polymer has a viscosity of about 22-30 cps, a degree of polymerization of about 1000 to 1500, and a Mw of about 85,000 to 124,000. In a preferred embodiment, the polyvinyl alcohol polymer has a viscosity of about 3-4 cps, a degree of polymerization of about 150 to 300, and a Mw of about 13,000 to 23,000.

In an embodiment, the barrier layer may also include aqueous soluble or dispersible polymers such as latex, polyurethane or polyester, inorganic oxide dispersions, aqueous solutions containing polymers such as cellulose derivatives (e.g., cellulose esters), monosaccharides, disaccharides, polysaccharides, casein, and the like, and synthetic water permeable colloids including poly(vinyl lactams), acrylamide polymers, poly(vinyl alcohol) and its derivatives, hydrolyzed polyvinyl acetates, polymers of alkyl and sulfoalkyl acrylates and methacrylates, polyamides, polyvinyl pyridine, acrylic acid polymers, maleic anhydride copolymers, polyalkylene oxide, methacrylamide copolymers, polyvinyl oxazolidinones, maleic acid copolymers, other vinyl amine copolymers, methacrylic acid copolymers, acryloyloxyalkyl sulfonic acid copolymers, vinyl imidazole copolymers, vinyl sulfide copolymers and homopolymer or copolymers containing styrene sulfonic acid.

Further additives may also be included in the composition to impart properties desired for the particular article being manufactured. Such additives include, but are not necessarily limited to, fillers, pigments, dyestuffs, antioxidants, stabilizers, processing aids, plasticizers, fire retardants, anti-fog agents, and scavengers. In an embodiment, the barrier layer includes nano platelets.

The barrier layer may include up to about 99 wt% of materials other than the polyvinyl amine copolymer.

The instant barrier layer may have a thickness of about 0.1 micrometers to about 1000 micrometers. Within this range, the barrier layer thickness is preferably greater than or equal to about 1, preferably greater than or equal to about 2, preferably greater than or equal to about 2.5, preferably greater than or equal to about 3, preferably greater than or equal to about 3.5, preferably greater than or equal to about 4, preferably greater than or equal to about 4.5, preferably greater than or equal to about 5, preferably greater than or equal to about 10, preferably greater than or equal to about 20, preferably greater than or equal to about 30, preferably greater than or equal to about 35, preferably greater than or equal to about 40 micrometers, preferably greater than or equal to about 50, preferably greater than or equal to about 60, preferably greater than or equal to about 70, preferably greater than or equal to about 80, preferably greater than or equal to about 90, preferably greater than or equal to about 100 micrometers, preferably greater than or equal to about 200, preferably greater than or equal to about 300, preferably greater than or equal to about 400, preferably greater than or equal to about 500, preferably greater than or equal to about 600, preferably greater than or equal to about 700 micrometers, preferably greater than or equal to about 800, preferably greater than or equal to about 900 micrometers. Also within this range, the barrier layer thickness is preferably less than or equal to about 900, preferably less than or equal to about 800, preferably less than or equal to about 700, preferably less than or equal to about 600, preferably less than or equal to about 500, preferably less than or equal to about 400, preferably less than or equal to about 300 micrometers, preferably less than or equal to about 200, preferably less than or equal to about 100, preferably less than or equal to about 90, preferably less than or equal to about 80, preferably less than or equal to about 70, preferably less than or equal to about 60 micrometers, preferably less than or equal to about 50, preferably less than or equal to about 40, preferably less than or equal to about 30, preferably less than or equal to about 20, preferably less than or equal to about 10, preferably less than or equal to about 5, preferably less than or equal to about 4.5, preferably less than or equal to about 4, preferably less than or equal to about 3.5, preferably less than or equal to about 3, preferably less than or equal to about 2.5, preferably less than or equal to about 2, preferably less than or equal to about 1.5, preferably less than or equal to about 1 micrometer.

### Coating Composition

The barrier layer is formed by contacting a coating composition comprising the components and/or the precursors of the components of the barrier layer with the substrate. In an embodiment, the coating composition is preferably an aqueous solution, dispersion, or slurry comprising the polyvinyl amine copolymer. In another embodiment, the coating composition is preferably a non-aqueous solution, dispersion, or slurry comprising the polyvinyl amine copolymer. In addition to the polyvinyl amine copolymer, the coating composition may include the herein described cross-linking reagent(s), other polymers, and additives. In addition, the aqueous coating composition may include one more co-solvents. Preferred co-solvents include lower alkyl (i.e., C₁-C₁₀) alcohols, esters, ethers, ketones, and alkanes.

The viscosity of the coating composition is preferably about 5 to about 200 cps @20°C. Within this range, the viscosity is preferably greater than or equal to about 10, preferably greater than or equal to about 20, preferably greater than or equal to about 30, preferably greater than or equal to about 40, preferably greater than or equal to about 50, preferably greater than or equal to about 60, preferably greater than or equal to about 70 cps at 20°C. Also within this range, the viscosity is preferably less than or equal to about 190, preferably less than or equal to about 180, preferably less than or equal to about 170, preferably less than or equal to about 160, preferably less than or equal to about 150, preferably less than or equal to about 140, preferably less than or equal to about 130 cps at 20°C.

The coating composition may have a total solids content of about 1 to about 90 wt%. Within this range, the total solids content is preferably greater than or equal to about 2, preferably greater than or equal to about 5, preferably greater than or equal to about 10, preferably greater than or equal to about 15, preferably greater than or equal to about 20, preferably greater than or equal to about 25, preferably greater than or equal to about 30%. Also within this range, the total solids content is preferably less than or equal to about 80, preferably less than or equal to about 85, preferably less than or equal to about 70, preferably less than or equal to about 60, preferably less than or equal to about 50, preferably less than or equal to about 40, preferably less than or equal to about 35 wt%.

The coating composition may further include surfactants, preservatives, and/or other processing aids to improve the application and/or adhesion of the coating composition onto a particular substrate.

In an embodiment, the instant barrier layer has improved adhesion properties over barrier layers known in the art. In an embodiment, the adhesion of the instant barrier layer to a particular substrate is at least 10% greater than the adhesion of a comparative barrier layer when determined under the "Washed Adhesion Test" as described herein. Preferably, the adhesion of the instant barrier layer to a particular substrate is at least 20% greater, preferably at least 30% greater, preferably at least 40% greater, preferably at least 50% greater, preferably at least 60% greater, preferably at least 70% greater, preferably at least 80% greater, preferably at least 90% greater, preferably at least 100% greater, preferably at least 150% greater, preferably at least 200% greater, preferably at least 250% greater, preferably at least 300% greater, than the adhesion of a comparative barrier layer when determined under the "Washed Adhesion Test."

In the Wash Adhesion Test, a test substrate is coated with a barrier layer in a manner consistent with processes known in the art, and/or which mimics a particular end use. The amount of a barrier layer is determined on a substrate coated with the barrier layer using HPLC, FTIR, NMR, and/or wet chemical methods. The coated substrate is then washed with an aqueous washing solution, e.g., water, consistent with washing steps of commercial processes known in the art, and/or which mimics a particular end use. The amount of barrier layer on the substrate is once again determined and calculated as a percentage of retained barrier layer to measure the adhesion properties of the barrier layer to the substrate. However, other comparable methods of determining adhesion may be used.

### Formation of the Barrier Layer

The coating composition may be produced by simple mixing, melt-blending, kneading, or the like, depending on the intended application. The coating composition is preferably prepared at a temperature in the range of 20°C up to about 300°C. The blending may immediately precede the formation of the finished article or preform or precede the formation of a feedstock or masterbatch for later use in the production of finished packaging articles. When film layers or multi-layer articles are produced, (co)extrusion, solvent casting, injection molding, stretch blow molding, orientation, thermoforming, extrusion coating, coating and curing, lamination, extrusion-lamination, blow-molding, co-extrusion injection molding or combinations thereof would typically follow the blending.

The coating composition may comprise about 1 wt% up to about 99 wt% polyvinyl amine copolymer, based on the total amount of the coating composition present. Within this range, the coating composition may comprise greater than or equal to about 10 wt%, preferably greater than or equal to about 20 wt%, preferably greater than or equal to about 30 wt%, preferably greater than or equal to about 40 wt%, preferably greater than or equal to about 50 wt%, preferably greater than or equal to about 60 wt%, preferably greater than or equal to about 70 wt%, preferably greater than or equal to about 80 wt%, preferably greater than or equal to about 90 wt% polyvinyl amine copolymer, based on the total amount of the coating composition present.

Also within this range, the coating composition may comprise less than or equal to about 90 wt%, preferably less than or equal to about 80 wt%, preferably less than or equal to about 70 wt%, preferably less than or equal to about 60 wt%, preferably less than or equal to about 50 wt%, preferably less than or equal to about 40 wt%, preferably less than or equal to about 30 wt%, preferably less than or equal to about 20 wt%, preferably less than or equal to about 10 wt% polyvinyl amine copolymer, based on the total amount of the coating composition present.

In a preferred embodiment, the coating composition may be applied to the substrate by dipping (dip coating), spraying (spray coating), roller coating, curtain coating, metering rod coating, reverse roll coating, gravure coating, extrusion/co-extrusion, injection molding, blow molding, and/or the like. In a preferred embodiment, the coating composition is applied to the substrate followed by solvent evaporation, and/or heating, and/or irradiation, and/or the like to fix the coating composition to the substrate and/or induce crosslinking to produce the barrier layer.

### Substrates

In an embodiment, the coating composition is applied to a substrate comprising one or more polymeric resins and/or inorganic substrates. Preferred polymeric resins include polyolefin resins and/or polyester resins. Substrates may thus include high density polyethylene, linear low-density polyethylene, super-low-density polyethylene; ethylene-vinyl acetate copolymer, ethylene-acrylate copolymer, ethylene-acrylic acid copolymer, ethylene-methacrylic acid copolymer, ethylene-carbon monoxide copolymer, amorphous polystyrene, crystalline polystyrene, vinyl chloride resin, polyamide resin, polyacetal resin, polycarbonate resin, ethylene-propylene rubber, ethylene-1-butene rubber, propylene-1-butene rubber, styrene-butadiene rubber, styrene-butadiene block copolymer, paper, resin-coated paper, poly(ethylene terephthalate) (PET), cellulose diacetate, cellulose triacetate, poly(ethylene naphthalate), polyester diacetate, poly(ethylene vinyl alcohol) ("EVOH"), polyacrylonitrile, polyvinyl chloride, polyvinylchloride ("PVC"), poly(vinylidene dichloride) ("PVDC"), and/or the like.

Preferred inorganic substrates may comprise SiO₂ glass, TiO₂ glass, various metal layers comprising Group 1 to Group 16 metals and/or metal alloys thereof, preferably layers comprising aluminum, and combinations thereof

Suitable substrates include flexible and/or rigid single layer or multilayer laminated articles. The layers comprising the composition may be in several forms. They may be in the form of stock films, including "oriented" or "heat shrinkable" films, which may ultimately be processed as bags, or coverings. The layers may also be in the form of sheet inserts to be placed in a packaging cavity. In rigid articles such as beverage containers, thermoformed trays or cups, the layer may be within the container's walls and may furthermore be foamed. Even further, the layer may also be in the form of a liner placed with or in the container's lid or cap. The layer may even be coated or laminated onto any one of the articles mentioned above.

The substrates may be surface treated and/or untreated. Surface treatments include flame treatment, corona treatment, irradiation, and/or physical abradement.

In an embodiment, the barrier layer is present within an article such that the barrier layer is disposed between at least two layers. For example, the barrier layer may be present in-between the substrate and an outer layer, or between one or more layers disposed on the substrate. In an embodiment, the barrier layer is present in at least two layers of the article.

The additional layers may also include one or more layers which are permeable and/or impermeable to various gases including oxygen and carbon dioxide.

In an embodiment, the substrate is a blank which after having the barrier coating applied to it, is subsequently blow molded to produce a final article. In another embodiment, the substrate is a previously blow molded article.

### Barrier Layer Properties

The instant barrier layer provides barrier properties to prevent effusion of carbon dioxide and/or oxygen there through. The improvement in CO₂ barrier properties may be measured in terms of a CO₂ reduction index, wherein the CO₂ effusion through a coated substrate is expressed as a percentage of the CO₂ effusion through an essentially identical uncoated substrate under essentially identical conditions. Accordingly, a barrier coating with a CO₂ reduction index of 1% represents a barrier wherein the CO₂ effusion rate is 1% of an uncoated substrate. A barrier coating with a CO₂ reduction index greater than 100% indicates a substrate which is more permeable to CO₂ than the uncoated substrate. Likewise, a barrier coating with a CO₂ reduction index of zero (0) represents a substrate which is impermeable to CO₂ under the test conditions. In an embodiment, the instant barrier layer has a CO₂ reduction index of less than 100% on a particular substrate under a particular set of conditions. Preferably, the instant barrier layer has a CO₂ reduction index of less than or equal to about 95%, preferably less than or equal to about 90%, preferably less than or equal to about 85%, preferably less than or equal to about 80%, preferably less than or equal to about 75%, preferably less than or equal to about 70%, preferably less than or equal to about 65%, preferably less than or equal to about 60%, preferably less than or equal to about 55%, preferably less than or equal to about 50%, preferably less than or equal to about 45%, preferably less than or equal to about 40%, preferably less than or equal to about 35%, preferably less than or equal to about 30%, preferably less than or equal to about 25%, preferably less than or equal to about 20%, preferably less than or equal to about 15%, preferably less than or equal to about 10%, preferably less than or equal to about 5%, preferably less than or equal to about 4%, preferably less than or equal to about 3 %, preferably less than or equal to about 2%, preferably less than or equal to about 1 %, preferably less than or equal to about 0.9%, preferably less than or equal to about 0.8%, preferably less than or equal to about 0.7%, preferably less than or equal to about 0.6%, preferably less than or equal to about 0.5%, preferably less than or equal to about 0.4%, preferably less than or equal to about 0.3%, preferably less than or equal to about 0.2%, preferably less than or equal to about 0.1 %, preferably less than or equal to about 0.05%, preferably less than or equal to about 0.01% under similar conditions.

In another embodiment, the instant barrier layer has a CO₂ reduction index sufficient to provide the same or better level of barrier properties to a particular substrate when the thickness of the substrate is reduced relative to a comparative substrate without the barrier layer disposed thereon. In other words, application of the barrier layer allows for a reduction in the thickness of the substrate. In an embodiment, the instant barrier layer has a CO₂ reduction index sufficient to provide CO₂ permeability of less than or equal to an uncoated substrate wherein the coated substrate has a thickness which is 90% the thickness of the uncoated substrate, preferably wherein the coated substrate has a thickness which is 80% the thickness of the uncoated substrate, preferably wherein the coated substrate has a thickness which is 70% the thickness of the uncoated substrate, preferably wherein the coated substrate has a thickness which is 60% the thickness of the uncoated substrate, preferably wherein the coated substrate has a thickness which is 50% the thickness of the uncoated substrate, preferably wherein the coated substrate has a thickness which is 40% the thickness of the uncoated substrate, preferably wherein the coated substrate has a thickness which is 30% the thickness of the uncoated substrate, preferably wherein the coated substrate has a thickness which is 20% the thickness of the uncoated substrate, preferably wherein the coated substrate has a thickness which is 10% the thickness of the uncoated substrate.

In an embodiment, the instant barrier layer has at least one of the above disclosed CO₂ reduction indexes at greater than or equal to about 0% Relative Humidity (RH) at room temperature (i.e., a temperature between about 20 and 25°C), preferably greater than or equal to about 25% RH at room temperature, more preferably greater than or equal to about 50% RH at room temperature, more preferably greater than or equal to about 75% RH at room temperature, with greater than or equal to about 90% RH at room temperature being more preferred.

Likewise, the improvement in O₂ barrier properties may be measured in terms of an O₂ reduction index, wherein the O₂ effusion through a coated substrate is expressed as a percentage of the O₂ effusion through an essentially identical uncoated substrate under essentially identical conditions. Accordingly, a barrier coating with an O₂ reduction index of 1% represents a barrier wherein the O₂ effusion rate is 1% of an uncoated substrate. A barrier coating with an O₂ reduction index greater than 100% indicates a substrate which is more permeable to O₂ than the uncoated substrate. Likewise, a barrier coating with an O₂ reduction index of zero (0) represents a substrate which is impermeable to O₂ under the test conditions. In an embodiment, the instant barrier layer has an O₂ reduction index of less than 100% on a particular substrate under a particular set of conditions. Preferably, the instant barrier layer has an O₂ reduction index of less than or equal to about 95%, preferably less than or equal to about 90%, preferably less than or equal to about 85%, preferably less than or equal to about 80%, preferably less than or equal to about 75%, preferably less than or equal to about 70%, preferably less than or equal to about 65%, preferably less than or equal to about 60%, preferably less than or equal to about 55%, preferably less than or equal to about 50%, preferably less than or equal to about 45%, preferably less than or equal to about 40%, preferably less than or equal to about 35%, preferably less than or equal to about 30%, preferably less than or equal to about 25%, preferably less than or equal to about 20%, preferably less than or equal to about 15%, preferably less than or equal to about 10%, preferably less than or equal to about 5%, preferably less than or equal to about 4%, preferably less than or equal to about 3%, preferably less than or equal to about 2%, preferably less than or equal to about 1%, preferably less than or equal to about 0.9%, preferably less than or equal to about 0.8%, preferably less than or equal to about 0.7%, preferably less than or equal to about 0.6%, preferably less than or equal to about 0.5%, preferably less than or equal to about 0.4%, preferably less than or equal to about 0.3%, preferably less than or equal to about 0.2%, preferably less than or equal to about 0.1 %, preferably less than or equal to about 0.05%, preferably less than or equal to about 0.01% under similar conditions.

In another embodiment, the instant barrier layer has an O₂ reduction index sufficient to provide the same or better level of barrier properties to a particular substrate when the thickness of the substrate is reduced relative to a comparative substrate without the barrier layer disposed thereon. In other words, application of the barrier layer allows for a reduction in the thickness of the substrate. In an embodiment, the instant barrier layer has an O₂ reduction index sufficient to provide O₂ permeability of less than or equal to an uncoated substrate wherein the coated substrate has a thickness which is 90% the thickness of the uncoated substrate, preferably wherein the coated substrate has a thickness which is 80% the thickness of the uncoated substrate, preferably wherein the coated substrate has a thickness which is 70% the thickness of the uncoated substrate, preferably wherein the coated substrate has a thickness which is 60% the thickness of the uncoated substrate, preferably wherein the coated substrate has a thickness which is 50% the thickness of the uncoated substrate, preferably wherein the coated substrate has a thickness which is 40% the thickness of the uncoated substrate, preferably wherein the coated substrate has a thickness which is 30% the thickness of the uncoated substrate, preferably wherein the coated substrate has a thickness which is 20% the thickness of the uncoated substrate, preferably wherein the coated substrate has a thickness which is 10% the thickness of the uncoated substrate.

In an embodiment, the instant barrier layer has at least one of the above disclosed O₂ reduction indexes at greater than or equal to about 0% Relative Humidity (RH) at room temperature (i.e., a temperature between about 20 and 25°C), preferably greater than or equal to about 25% RH at room temperature, more preferably greater than or equal to about 50% RH at room temperature, more preferably greater than or equal to about 75% RH at room temperature, with greater than or equal to about 90% RH at room temperature being more preferred.

### Examples

Testing was conducted to determine the ability to decrease the re-solubility of PVOH-VAm films (the polyvinyl amine copolymer) in a water-based solution.

### Method:

A PVOH-VAm polymer was produced according to the process for producing an NVF copolymer as described supra. The PVOH-VAm solution at 5% solids was contacted with variety of crosslinking reagents. The solution was then cast as a film with a thickness of 100um. Water was removed in a 30°C oven for 24 hours. A heat history was then applied to the dried film samples as a residence time of 60 seconds under an IR oven wherein the surface of the film reached about 200°F during this time.

### Film Testing

In these tests, the dissolution time is used to determine the solubility of the film comprising the PVOH-VAm polymer produced according to the process for producing an NVF copolymer described supra. Tensile testing was used to determine any embrittlement of the film. Color testing was used to determine the acceptability of film appearance.

The Inventive PVOH-VAm copolymer used for testing was selected from grades M6 and L12, (Sekisui Specialty Chemicals America, LLC), and was produced using the process for producing an NVF copolymer described supra unless otherwise noted. In addition, a comparative co-polymer was produced by Comparative Process D and Comparative Process E as discussed herein. The Inventive and Comparative copolymers utilized herein had the following characteristics:

| Grade | Reaction Solids Wt% | 4% Viscosity at 20°C (cps) | 15% Viscosity at 20°C (cps) | Ash (% Na₂O) | Amine Mol% |
|---|---|---|---|---|---|
| Inventive M6 | 52.04 | 13.37 | 35.58 | 0.89 | 5.0 |
| Inventive L12 | 56.28 | 7.30 | 13.54 | 1.02 | 10.5 |
| M6 Comparative Process D | ~52 | ~13 | ~35 | ~1 | 5.0 |
| M6 Comparative Process E | ~52 | ~13 | ~35 | ~1 | ~5 |

Crosslinking reagents used were:
Curesan 199 - Blocked Glyoxal (BASF)
Carbodilite - Carbodiimide
SMA - Styrene Malaic Anyhydride
Borate- Boric acid (Lab Stock).

The crosslinking reagents are presented as a ratio of crosslinking reagent to molar amine functional groups on the PVOH-VAm copolymer.
0.001:1
0.01:1
0.1:1
1:1
The PVOH-VAm copolymer without crosslinking reagent was used as a standard control. In addition, a 50/50 by weight blend of L12 PVOH grade C-325 was used, along with L12 in combination with glyoxal.

### Film Dissolution Time Procedure

500mL of water were placed in a glass beaker;
Adjust temperature to 25°C;
Adjust pH to 9;
Set a controlled stirring rate;
Submerge a 1"x1" sample in water (supported); and
Record the time when a hole forms in the film to represent the break time; and
Record the time when 95% of the film dissolves as the Dissolution time. The results are shown in Figures 1 and 2.

Accordingly, Curesan 199 (blocked glyoxal) outperformed all other crosslinking reagents insoluble even after 15 minutes at all crosslinker levels below 10%. Control L-12 was 3.61 minutes. No Film break with crosslinker level of 1% and above 130% improvement in film break at crosslinker level of 0.1 %. Control L-12 was 0.80 minutes. Other crosslinkers showed only a minor improvement. However, 50/50 Blend of L12 and C-325 had no break or dissolution at 15 minutes (not shown.)

As the data shows, Curesan 199 (Blocked Glyoxal) with L12 PVOH-VAm had the largest impact on improving film dissolution time. Addition levels of 1% and above (based on polymer amine functional groups) were completely insoluble. Other crosslinkers only showed minor improvements in dissolution time and higher levels of addition were needed.

Color Testing: Curesan 199 showed no significant color difference than L12 Control with films of 100um thickness with 1% and lower addition levels.

Mechanical Testing: Curesan 199 had similar mechanical properties to L12 control at addition levels of 1% and lower.

Blending PVOH with PVOH-VAm is an alternative option to adding a crosslinker. Adding a fully hydrolyzed grade of PVOH (ex. C325, C107) can greatly improve the solubility of PVOH-VAm.

Film dissolution testing was conducted using M6 grade PVOH-VAm copolymer produced according to the Improved NVF Copolymer Process. An 100um film was used herein as the standard of comparison.

| | |
|---|---|
| M6:C325 | **Over 400% improvement** |
| 90:10 | of solubility break time (min) |
| M6:C325 | Totally insoluble |
| 75:25 | **Over 600% improvement** |
| M6:C325 | Totally insoluble |
| 50:50 | **Over 600% improvement** |

At 25% added PVOH the film is completely insoluble. Simply adding 10% of fully hydrolyzed PVOH can have a 400% improvement in the re-solubility of the PVOH-VAm film.

### Barrier Properties Testing

An inventive polyvinyl alcohol - polyvinyl amine copolymer (PVOH-PVAm) was produced using the process for producing an NVF copolymer described supra (Inventive M6). Two comparative M6 PVOH-PVAm copolymers were produced using Comparative Process' D and E. Comparative Process D is essentially the same as Comparative Process E, yet produced using different equipment.

In the Inventive Improved NVF Copolymer Process, the initiator is fed for 30 minutes followed by the delay feeds of initiator and monomer feeds for a total of 180 minutes followed by another 120 minutes of reaction after the feeds have finished. Total lab reaction time is 5 hours. Importantly, the process for producing an NVF copolymer described supra does not stop the initiator feed during the initial polymerization phase.

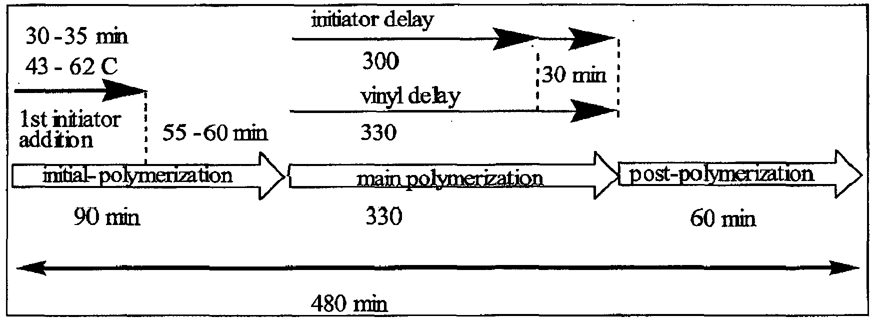

The Comparative Process D and E are shown above and referred to herein as Comparative Process D for simplicity. In the Comparative Process D, the initiator is fed for 30-35 minutes then stopped for 55-60 minutes then the initiator and monomer feeds are started. The initiator feed is stopped after 300 minutes and the monomer feed is continued for another 30 minutes (330 minutes). At this time all feeds are stopped and the reaction is heated for another 60 minutes, which results in a total reaction time of 8 hours.

Films of the PVOH-PVAm copolymers were produced and subjected to 02 barrier testing by MOCON Inc., 7500 Boone Ave. N. Minneapolis. MN 55428 U.S. according to barrier testing parameters well known to one of minimal skill in the art. The PVOH-PVAm copolymers were cross-linked using Polycup 172 (Hercules/Ashland) which is an adduct of epichlorohydrin well known in the art.

### Method of Preparing Films for Oxygen Barrier Testing

A 7% wt/wt solution of the PVOH-PVAm copolymer was heated to ensure complete dissolution, cooled to room temperature, and then filtered through a 140 mesh screen to remove unsolubilized gels.

The cross-linking compound Polycup 172 was then added to the filtered solutions under gentle agitation. The cross-linking compound was added at 2.5% and 5% wt/wt, based on calculations relative to the activity of the cross-linking compound and the composition of the PVOH-PVAm copolymer.

The solutions were then centrifuged 10' @ 1200 rpm to remove entrapped air bubbles and then cast on a 3 mil PET film (the test substrate) using a Gardco 1.5 wet mil bar applicator.

The films were dried in a forced air oven for 2 minutes at 121°C.

The coated PET films were then tested for oxygen transmission rate (OTR) according to MOCON testing standards using a MOCON Oxtran 2/21 Instrument according to:
ASTM-F3985 used to determine the rate of transmission of oxygen gas, at steady-state, at 23 °C 0% RH;
ASTM-F-1927 used to determine the rate of transmission of oxygen gas, at steady-state, at a given temperature and %RH level, through film, sheeting, laminates, co-extrusions, or plastic-coated papers or fabrics;
DIN 53380 used to determine gas transmission rate through plastic films or other materials depending on temperature and testing gas;
JIS-7126 used to determine the gas transmission rate of any plastic material in the form of film, sheeting, laminate, co-extruded material or flexible plastic-coated material under a differential pressure;
ISO CD 15105-2 used to determine the gas transmission rate of any plastic material in the form of film, sheeting, laminate, co-extruded material or flexible plastic-coated material; and/or an equivalent standard testing procedure.

In a first round of testing, the samples were evaluated for OTR at 40°C and 50% RH as follows:

| **OTR (Oxygen Transmission Rate) MOCON Testing** | **OTR @ 40°C 50% RH [cm³/(100 in²**-**day)]** | **Film Thickness [microns]** |
|---|---|---|
| Comparative PET substrate (no coating) 3 mils | 1.8900 | 2.67 |
| Inventive Copolymer Neat | 0.0029 | 2.67 |
| Comparative Celvol 310 | 0.0086 | 2.67 |
| Comparative Oxibloc 1322 | 1.4424 | 2.67 |
| Comparative AQ-4104 EVOH | 0.3395 | 2.67 |
| Inventive Copolymer + C-310 (50/50) | 0.0029 | 2.67 |
| Inventive Copolymer + AQ-4104 (70/30) pH=10.5 | 0.0038 | 2.67 |
| Inventive Copolymer + AQ-4104 (70/30) | 0.0086 | 2.67 |

In a second round of testing, the effect of humidity on the oxygen transmission rate was determined using the Inventive copolymer film as follows:

| | OTR 23°C 0% RH [cm³/ (100 in²-day)] | OTR 23°C 50% RH [cm³ / (100 in²-day)] | OTR 23 °C 75% RH [cm³ / (100 in² -day)] | OTR 23°C 85% RH [cm³ / (100 in² -day)] | Film Thickness [microns] |
|---|---|---|---|---|---|
| Inventive Copolymer Neat | 0.0034 | 0.0055 | 0.0036 | 0.0063 | 2.67 |
| Inventive Copolymer + 0.5% P172 | 0.0021 | 0.0014 | 0.0009 | 0.0069 | 2.67 |
| Inventive Copolymer + 1.5% P172 | 0.0006 | 0.0003 | 0.0003 | 0.0066 | 2.67 |
| Comparative AQ-4104 EVOH | 0.0241 | 0.0245 | 0.0263 | 0.0260 | 2.67 |
| Inventive Copolymer + AQ-4104 (70/30) | 0.0029 | 0.0005 | 0.0029 | 0.0063 | 2.67 |

| | | | | | |
|---|---|---|---|---|---|
| OTR Lower End Detection Limit < 0.0003 cm³/100in²-day Test Gas concentration 100% O₂ Test Gas Pressure: 760 mm Hg Carrier gas 98% N₂, 2% H₂ | | | | | |

As the data shows, the instant barrier layer may further comprise an additional polymer or copolymer (e.g., ethylene-vinyl alcohol, EVOH) which provides a further benefit over the individual components alone.

In a third round of testing, the OTR of PVOH-PVAm polymers produced by different processes were evaluated.

| | **OTR 23C 50% RH [cm³/ (100 in²-day)]** | **OTR 23C 75% RH [cm³/ (100 in²-day)]** | **OTR 23C 90% RH [cm³/ (100 in²-day)]** | **Film Thickness [microns]** |
|---|---|---|---|---|
| M6 Inventive Copolymer Neat | 0.0016 | 0.0016 | 0.0014 | 2.67 |
| M6 Comparative Process D Neat | 0.0030 | 0.0178 | 0.0298 | 2.67 |
| M6 Comparative Process E Neat | 0.0034 | 0.0164 | 0.0253 | 2.67 |

In addition, the viscosity of the PVOH-PVAm solutions cross-linked with epichlorohydrin (Polycup 172) was evaluated over time.

| **Brookfield Viscosity, cps at 25°C** | **Day 1** | **Day 2** | **Day 3** | **Day 4** | **Day 5** |
|---|---|---|---|---|---|
| M6 Inventive Copolymer +5%P172 | 70 | 120 | 270 | 1100 | gelled/cuttable |
| M6 Comparative Process D+5%P172 | 70 | 100 | 160 | 360 | almost gelled/very thick |

As the data show, the Inventive copolymer produced according to the process for producing an NVF copolymer described supra shows a marked improvement in OTR relative to the untreated substrate, and an improvement in properties relative to the Comparative Process D and E materials. In addition, the Inventive copolymer produced via the "process for producing an NVF copolymer described supra" demonstrates higher reactivity with crosslinkers as compared to Process D. In addition to barrier properties, the inventive copolymer films have greatly improved color properties. To demonstrate this, the APHA color of an 8% solution of the copolymer was measured using a Hunter Lab Colorquest colorimeter. The data are as follows:
APHA Color Analysis using Hunter Lab
Colorquest equipment - 10mm sample size
diluted to 8% TS

| | | |
|---|---|---|
| M6 Inventive Copolymer Neat | 3.88 | clear white |
| M6 Comparative Process D Neat | 128.52 | very yellow |
| M6 Comparative Process E Neat | 93.6 | yellow |

| | | |
|---|---|---|
| *The lower the number - the less yellow in color. | | |

Accordingly, the inventive copolymer produces an essentially "water white" film, whereas the comparative films have an unacceptable yellow color.

### BACKGROUND OF THE INVENTION

The present invention generally relates to a barrier layer, a method of producing a barrier layer, and articles comprising a barrier layer.

Numerous referenced are directed to barrier layers and/or packages comprising barrier layers. For example, U.S. Patent Publication No. 2006/0246241 is generally directed to a packaging material which comprises a polymeric base component and a barrier component which coats and lines a surface of the base component, the barrier component inhibiting migration of gases, vapors and liquids through the base component. The barrier component comprises a polymeric layer comprising at least two different polymeric species which are polar and which are water-soluble. The different species have different chemical compositions and are complementary in that they are bound together physically by interpolymer complexation to form an interpenetrating physical network. The disclosure also provides a process for producing the packaging material which comprises coating at least one surface of the base component with the barrier component and causing the complementary species to interact together physically by interpolymer complexation to form an interpenetrating physical network.

WO2007/002322 is generally directed to a coating composition for providing substrates with oxygen barrier properties is disclosed. The substrate may be, for instance, a film, such as a polyester film. The coating composition includes a copolymer of maleic acid and acrylic acid and a copolymer of vinyl alcohol and a vinylamine. The barrier coating formed from the coating composition is typically less than about (1) micron in thickness and provides reduced oxygen transmission even at relatively high relative humidities. US 5300566 is directed to polyvinyl alcohol-polyvinyl amine copolymers containing low level of amine functionality. WO03/054030 is directed to coating layers comprising polyvinyl alcohol-polyvinyl amine polymers.

While numerous referenced are directed to barrier layers, their production and use, barrier layers applied as water-soluble solutions which are effective against carbon dioxide and oxygen transmission have been largely ignored.

As can be seen, there is a need for barrier layers, which are applied as water-soluble compositions, which provide improved CO₂ and/or O₂ barrier properties, in particular, to rigid substrates.

### SUMMARY OF THE INVENTION

In one aspect of the present invention, a barrier layer comprises a polyvinyl amine-polyvinyl alcohol copolymer applied to a substrate as a water-soluble composition, wherein the polyvinyl amine-polyvinyl alcohol copolymer is formed by copolymerizing: (a) from 99 to 1 mol% of N-vinylformamide and (b) from 1 to 99 mol% of one or more vinyl C, -C₁₀ alkyl esters, and then hydrolyzing from 30 to 100 mol% of the formyl groups from the copolymerized units (a) to form amino groups and from 30 to 100 mol% of the C₁ -C₁₀ alkyl ester groups from the copolymerized units (b) to form hydroxyl groups, wherein the copolymer has a unimodal compositional distribution as evidenced by essentially one peak in a gel permeation gradient elution chromatographic analysis and wherein the polyvinyl amine-polyvinyl alcohol copolymer is essentially free of amidine rings as evidenced by a lack of an absorption in a C NMR spectrum of the copolymer consistent with an amidine carbon atom absorption.

The foregoing has outlined rather broadly the features and technical advantages of the present invention in order that the detailed description of the invention that follows may be better understood. Additional features and advantages of the invention will be described hereinafter which form the subject of the claims of the invention.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

In the following description, numerous specific details are set forth to provide a thorough understanding of the present invention. However, it will be obvious to those skilled in the art that the present invention may be practiced without such specific details. In other instances, well-known devices have been shown in block diagram form in order not to obscure the present invention in unnecessary detail. For the most part, details unnecessary to obtain a complete understanding of the present invention have been omitted in as much as such details are within the skills of persons of ordinary skill in the relevant art.

Terms used herein include a reactor, which is defined as any container(s) in which a chemical reaction occurs. As used herein, the new numbering scheme for the Periodic Table Groups are used as in CHEMICAL AND ENGINEERING NEWS, 63(5), 27 (1985). Polymer may be used to refer to homopolymers, copolymers, interpolymers and terpolymers. Likewise, a copolymer may refer to a polymer comprising at least two monomers, optionally with other monomers.

When a polymer is referred to as comprising a monomer, the monomer is present in the polymer in the polymerized form of the monomer or in the derivative form of the monomer. Likewise, when catalyst components are described as comprising neutral stable forms of the components, it is well understood by one skilled in the art, that the ionic form of the component is the form that reacts with the monomers to produce polymers.

As used herein, structural formulas are employed as is commonly understood in the chemical arts; lines ("—") used to represent associations between atoms, as well as the phrases "associated with", "bonded to" and "bonding", are not limited to representing a certain type of chemical bond, as these lines and phrases are meant to represent a "chemical bond"; a "chemical bond" defined as an attractive force between atoms that is strong enough to permit the combined aggregate to function as a unit, or "compound".

Broadly, the present invention generally provides a barrier layer, a method of producing a barrier layer, and articles comprising a barrier layer.

### Barrier Layer Composition

The barrier layer comprises a copolymer comprising vinyl alcohol and a vinyl amine, which may be referred to herein simply as the polyvinyl amine copolymer, and/or by the abbreviation PVAm, wherein the polyvinyl amine-polyvinyl alcohol copolymer is formed by copolymerizing: (a) from 99 to 1 mol% of N-vinylformamide and (b) from 1 to 99 mol% of one or more vinyl C, -C₁₀ alkyl esters, and then hydrolyzing from 30 to 100 mol% of the formyl groups from the copolymerized units (a) to form amino groups and from 30 to 100 mol% of the C₁ -C₁₀ alkyl ester groups from the copolymerized units (b) to form hydroxyl groups, wherein the copolymer has a unimodal compositional distribution as evidenced by essentially one peak in a gel permeation gradient elution chromatographic analysis and wherein the polyvinyl amine-polyvinyl alcohol copolymer is essentially free of amidine rings as evidenced by a lack of an absorption in a C NMR spectrum of the copolymer consistent with an amidine carbon atom absorption.

The polyvinyl amine copolymer comprises vinyl amine residues and vinyl alcohol residues as a random copolymer.

The process to produce a water-soluble copolymer suitable for use in the instant application comprises the steps of:
a) charging a first portion of a total amount of N-vinylformamide into a reactor;
b) charging a first portion of a total amount of at least one vinyl C₁-C₁₀ alkyl ester into the reactor;
c) continuously feeding a first portion of a total amount of a free radical polymerization catalyst at a first catalyst flow rate into the reactor;
d) contacting the first portion of N-vinylformamide, the first portion of at least one vinyl C₁-C₁₀ alkyl ester, in the presence of the free radical polymerization catalyst under polymerization conditions for a first period of time;
e) after the first period of time, continuously feeding for a second period of time, a second portion of the n-vinylformamide at a n-vinylformamide flow rate into the reactor while simultaneously feeding a second portion of at least one vinyl C₁-C₁₀ alkyl ester into the reactor at an ester flow rate, while simultaneously feeding a second portion of the free radical polymerization catalyst at a second catalyst flow rate into the reactor under polymerization conditions until the total amount of the N-vinylformamide, the total amount of the vinyl C₁-C₁₀ alkyl ester, and the total amount of the free radical polymerization catalyst have been fed into the reactor;
f) followed by contacting for a third period of time, the n-vinylformamide and the at least one vinyl C₁-C₁₀ alkyl ester in the presence of the free radical polymerization catalyst in the reactor under polymerization conditions to produce an intermediate copolymer comprising polyvinyl formamide and one or more polyvinyl C₁-C₁₀ alkyl esters, wherein the third period of time expires when the solids content of the intermediate copolymer in the reactor is greater than or equal to about 20 wt% and less than or equal to about 70 wt%; followed by
g) saponifying the copolymer under either acidic or basic conditions to produce an intermediate polyvinyl amide-polyvinyl alcohol copolymer; followed by
h) hydrolyzing the intermediate polyvinyl amide-polyvinyl alcohol copolymer under either acidic or basic conditions to produce the water-soluble copolymer, and wherein the barrier layer is formed by applying the polyvinyl amine - polyvinyl alcohol copolymer to a substrate as a water soluble composition.

### Properties of the Polyvinyl Amine Copolymer

The polyvinyl amine copolymer of the instant application comprises residues of vinyl amine and vinyl alcohol. In an embodiment, the polyvinyl amine copolymer comprises greater than or equal to about 0.5 mol% vinyl amine, and less than or equal to about 99 mol% vinyl amine, based on the total amount of the polyvinyl amine copolymer present. Within this range, the polyvinyl amine copolymer preferably comprises greater than or equal to about 1 mol% vinyl amine, preferably greater than or equal to about 2 mol%, preferably greater than or equal to about 3 mol%, preferably greater than or equal to about 4 mol%, preferably greater than or equal to about 5 mol%, preferably greater than or equal to about 6 mol%, preferably greater than or equal to about 7 mol%, preferably greater than or equal to about 8 mol%, preferably greater than or equal to about 9 mol%, preferably greater than or equal to about 10 mol%, preferably greater than or equal to about 15 mol%, preferably greater than or equal to about 20 mol%, preferably greater than or equal to about 25 mol%, preferably greater than or equal to about 30 mol%, preferably greater than or equal to about 35 mol%, preferably greater than or equal to about 40 mol%, preferably greater than or equal to about 45 mol%, preferably greater than or equal to about 50 mol% polyvinyl amine, based on the total amount of the polyvinyl amine copolymer present.

Also within this range, the polyvinyl amine copolymer preferably comprises less than or equal to about 90 mol% vinyl amine, preferably less than or equal to about 80 mol%, preferably less than or equal to about 70 mol%, preferably less than or equal to about 60 mol%, preferably less than or equal to about 50 mol%, preferably less than or equal to about 30 mol%, preferably less than or equal to about 25 mol%, preferably less than or equal to about 20 mol%, preferably less than or equal to about 15 mol%, preferably less than or equal to about 10 mol%, preferably less than or equal to about 9 mol%, preferably less than or equal to about 8 mol%, preferably less than or equal to about 7 mol%, preferably less than or equal to about 6 mol%, preferably less than or equal to about 5 mol%, preferably less than or equal to about 4 mol%, preferably less than or equal to about 3 mol%, preferably less than or equal to about 2 mol% polyvinyl amine, based on the total amount of the polyvinyl amine copolymer present.

In one embodiment, the weight average molecular weight of the polyvinyl amine copolymer may be greater than or equal to about 5,000g/mol, and less than or equal to about 2,000,000 g/mol. Within this range, the weight average molecular weight of the polyvinyl amine copolymer preferably is greater than about 10, 000, more preferably greater than about 20,000, more preferably greater than about 30,000, more preferably greater than about 40,000, more preferably greater than about 50,000, more preferably greater than about 60,000, more preferably greater than about 70,000, more preferably greater than about 80,000, more preferably greater than about 90,000, more preferably greater than about 100,000, more preferably greater than about 150,000 g/mol.

Also within this range the weight average molecular weight of the polyvinyl amine copolymer preferably is less than about 1,500,000, more preferably less than about 1,000,000, more preferably less than about 500,000, more preferably less than about 100,000, more preferably less than about 90,000, more preferably less than about 80,000, more preferably less than about 70,000, more preferably less than about 60,000, more preferably less than about 50,000, more preferably less than about 40,000, more preferably less than about 20,000 g/mol.

In an embodiment, the polyvinyl amine copolymer may include a copolymer having a unimodal distribution. In another embodiment, the polyvinyl amine copolymer may include a copolymer having a bimodal distribution or a multimodal distribution.

In an embodiment, the polyvinyl amine copolymer may have a polydispersity, determined as the weight average molecular weight (Mw) divided by the number average molecular weight (Mn) of from 1 to about 200. Within the range, the polyvinyl amine copolymer may have a polydispersity of greater than or equal to about 2, more preferably greater than or equal to about 3, more preferably greater than or equal to about 4, more preferably greater than or equal to about 5, more preferably greater than or equal to about 6, more preferably greater than or equal to about 7, more preferably greater than or equal to about 8, more preferably greater than or equal to about 9, more preferably greater than or equal to about 10, more preferably greater than or equal to about 15, more preferably greater than or equal to about 20, more preferably greater than or equal to about 25, more preferably greater than or equal to about 30, more preferably greater than or equal to about 35, more preferably greater than or equal to about 40.

Also within this range, the polyvinyl amine copolymer may have a polydispersity of less than or equal to about 45, more preferably less than or equal to about 40, more preferably less than or equal to about 35, more preferably less than or equal to about 30, more preferably less than or equal to about 25, more preferably less than or equal to about 20 more preferably less than or equal to about 15, more preferably less than or equal to about 10, more preferably less than or equal to about 9, more preferably less than or equal to about 15, more preferably less than or equal to about 8, more preferably less than or equal to about 7, more preferably less than or equal to about 6, more preferably less than or equal to about 5, more preferably less than or equal to about 4.

The instant polyvinyl amine copolymer has a unimodal composition distribution as evidenced by essentially one peak in a gel permeation gradient elution chromatographic analysis. A suitable gel permeation gradient elution chromatographic analysis may be found in Waters Corporation Publication No. WA10192 entitled, "Waters Alliance System: Gradient Analysis of Polymer Blends" Published by Waters Corporation, Milford, Ma. Available at: http://www.waters.com/waters/library.htm?cid=511436&lid=1536540

In an embodiment, the gel permeation gradient elution chromatographic analysis includes the following steps and conditions:

### HPLC conditions:

10 minute run time with a 5 minute post-run equilibrium.
Solvent starts with 99% Water / 1% acetonitrile (ACN) at time 0 minutes, and finishes with 80 % ACN and 20% of 99% Water / 1% ACN at 10 minutes. The ramp is uniform with the time.
Flow: 1.0 ml/min
Column: PLRP-S, 4000A, 8 Micron, 50 x 4.6 mm, temperature at 40°C
Injection volume: 20 Microliters
Sample flows into an evaporative light scattering detector (ELS) after passing through the HPLC column.

### ELS conditions:

Nitrogen gas flow at 2.0 ml/min
Nebulizer temperature at 90°C
Evaporation temperature at 120°C

### Data

Data acquisition is through Atlas chromatography system.

### Sample Preparation

Sample preparation takes a 1-2 percent solution and heats at 85°C for an hour while stirring, then cool back down to room temperature (i.e., 25°C.)

Filter through a 0.45 Micron filter into a crimp vial.

In an embodiment, instant polyvinyl amine copolymer has a unimodal molecular weight distribution as evidenced by a 4 wt% aqueous solution having a turbidity of less than 100 turbidity units (NTU.) For purposes herein, turbidity units indicate Nephelometric Turbidity Units (NTU). Turbidity is measured using a nephelmeter, the use of which is commonly known to one of minimal skill in the art.

In an embodiment, the turbidity of a 4 wt% solution is preferably less than or equal to about 95, preferably less than or equal to about 90, preferably less than or equal to about 85, preferably less than or equal to about 80, preferably less than or equal to about 75, preferably less than or equal to about 70, preferably less than or equal to about 65, preferably less than or equal to about 60, preferably less than or equal to about 55, preferably less than or equal to about 50, preferably less than or equal to about 45, preferably less than or equal to about 40, preferably less than or equal to about 35, preferably less than or equal to about 30, preferably less than or equal to about 25, preferably less than or equal to about 20, with less than or equal to about 15 NTU being still more preferred.

The polyvinyl amine copolymer is essentially free of amidine rings. This indicates a random distribution of the amide in the intermediate copolymer prior to hydrolysis and thus, a random polyvinyl amine copolymer. The amine copolymer is essentially free of amidine rings as evidenced by a lack of an absorption in a ¹³C NMR spectrum of the copolymer consistent with an amidine carbon atom absorption.

The process by which amidine rings form in the copolymer is represented as follows:

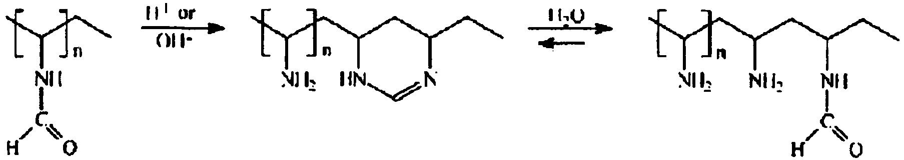

Wherein amide moieties in the copolymer react via intramolecular reaction to produce the amidine rings. The presence of such rings may be determined by ¹³CNMR as shown in Figure 3.

Accordingly, in an embodiment, the presence of an absorption in the range of 150 ppm may indicate an amidine ring is present in a copolymer. In an embodiment, the instant copolymer is essentially free of amidine rings as evidenced by a lack of an absorption in a ¹³C NMR spectrum of the copolymer consistent with an amidine carbon atom absorption (e.g., 150 ppm or equivalent.) For more information see Witek, Ewa, Pazdro, Marcin and Bortel, Edgar (2007) 'Mechanism for Base Hydrolysis of Poly(N-vinylformamide)', Journal of Macromolecular Science, Part A, 44:5, 503 - 507

### DOI: 10.1080/10601320701235461 URL:http://dx.doi.org/10.1080/10601320701235461

In an embodiment the instant copolymer has less color than a copolymer produced according to the prior art. This is thought to be the result of a more random copolymer of the instant invention, as compared to copolymers known in the art. In an embodiment, a 4% solution of the copolymer has an APHA color value of less than or equal to 10, preferably less than or equal to 5 APHA units determined according to ASTM D1209 or a comparable method.

The instant copolymer also has less of an odor than do comparative polyvinyl amine copolymers. However, odor is essentially impossible to quantify and thus, a general statement of reduced odor compared to known copolymers is offered herein.

The barrier layer comprises a water-soluble copolymer formed by copolymerizing:
(a) from 99 to 1 mol% of N-vinylformamide and
(b) from 1 to 99 mol% of one or more vinyl C₁-C₁₀ alkyl esters, and then hydrolyzing from 30 to 100 mol% of the formyl groups from the copolymerized units (a) to form amino groups and from 30 to 100 mol% of the C₁-C₁₀ alkyl ester groups from the copolymerized units (b) to form hydroxyl groups, wherein the copolymer has a unimodal compositional distribution as evidenced by essentially one peak in a gel permeation gradient elution chromatographic analysis; and/or wherein an aqueous 4% solution of the copolymer measured at 10 mm cell has an APHA color value of less than or equal to 10 APHA units determined according to ASTM D1209 or a comparable method; and/or
   wherein the copolymer has a unimodal molecular weight distribution as evidenced by a 4 wt% aqueous solution having a turbidity of less than 100 NTU; and/or
   wherein the copolymer is essentially free of amidine rings as evidenced by a lack of an absorption in a ¹³C NMR spectrum of the copolymer consistent with an amidine carbon atom absorption; and/or
wherein the copolymer is produced by a process comprising the steps of:
a) charging a first portion of a total amount of N-vinylformamide into a reactor;
b) charging a first portion of a total amount of at least one vinyl C₁-C₁₀ alkyl ester into the reactor;
c) continuously feeding a first portion of a total amount of a free radical polymerization catalyst at a first catalyst flow rate into the reactor;
d) contacting the first portion of N-vinylformamide, the first portion of at least one vinyl C₁-C₁₀ alkyl ester, in the presence of the free radical polymerization catalyst under polymerization conditions for a first period of time;
e) after the first period of time, continuously feeding for a second period of time, a second portion of the n-vinylformamide at a n-vinylformamide flow rate into the reactor while simultaneously feeding a second portion of at least one vinyl C₁-C₁₀ alkyl ester into the reactor at an ester flow rate, while simultaneously feeding a second portion of the free radical polymerization catalyst at a second catalyst flow rate into the reactor under polymerization conditions until the total amount of the N-vinylformamide, the total amount of the vinyl C₁-C₁₀ alkyl ester, and the total amount of the free radical polymerization catalyst have been fed into the reactor;
f) followed by contacting for a third period of time, the n-vinylformamide and the at least one vinyl C₁-C₁₀ alkyl ester in the presence of the free radical polymerization catalyst in the reactor under polymerization conditions to produce an intermediate copolymer comprising polyvinyl formamide and one or more polyvinyl C₁-C₁₀ alkyl esters, wherein the third period of time expires when the solids content of the intermediate copolymer in the reactor is greater than or equal to 20 wt% and less than or equal to 70 wt%; followed by
g) saponifying the copolymer under either acidic or basic conditions to produce an intermediate polyvinyl amide-polyvinyl alcohol copolymer; followed by
h) hydrolyzing the intermediate polyvinyl amide-polyvinyl alcohol copolymer under either acidic or basic conditions to produce the water-soluble copolymer.

### Other Components of the Barrier Coating

In addition to the polyvinyl amine copolymer, the barrier coating of the instant application may further include other components that modify the water solubility and/or barrier properties of the barrier coating. In an embodiment, the barrier coating may include crosslinked polymers, preferably crosslinking involving the polyvinyl amine copolymer. Crosslinking of the barrier coating may be formed by chemical reactions that are initiated by heat, pressure, and/or radiation. In an embodiment, crosslinking may be induced through exposure of the barrier layer material to a radiation source, e.g., electron beam exposure, gamma-radiation, and/or UV light. In another embodiment, the barrier layer may include one or more crosslinking reagents which results in a chemical reaction that forms crosslinks comprising intermolecular and/or intramolecular linkages with the polyvinyl amine copolymer. Crosslinking of the polyvinyl amine copolymer with the crosslinking agent may be initiated by application of a catalyst, an activating reagent, heat, removal of solvent, irradiation with electromagnetic energy (e.g., UV and gamma-radiation), or any combination thereof.

The barrier layer is preferably applied as an aqueous solution, however, the barrier layer, once applied and/or cured to a substrate, preferably has an adhesion to the substrate that prevents the barrier layer from being removed by any subsequent processing of the article being coated. Accordingly, after being applied and fixed to the substrate (e.g., by crosslinking, heating, irradiation, and/or the like), the solubility of the barrier layer in subsequent processing steps, typically aqueous based, is preferably reduced.

Suitable crosslinking reagents include multi-functional monomers reactive with the amine and/or the alcohol functional group of the polyvinyl amine copolymer. Examples include multi-functional monomers having at least two members selected from the group consisting of a vinyl group, an acryloyl group, a methacryloyl group, an aldehyde group, an isocyanate group and/or an allyl group. Examples of multi-functional monomer include divinyl benzene, trimethylol propane triacrylate, 1,6-hexanediol diacrylate, 1,9nonanediol diacrylate, 1,10-decanediol diacrylate, trimethylol propane trimethacrylate, 1,6-hexanediol dimethacrylate, 1,9-nonanediol dimethacrylate, 1,10-decanediol dimethacrylate, 1,2,4-triallyl trimellitate, triethylene glycol diacrylate, tetraethylene glycol diacrylate, cyanoethyl acrylate, bis(4-acryloxy polyethoxy phenyl) propane, triallyl isocyanurate and other similar compounds.

Other suitable crosslinking agents include organic titanate complexes, epichlorohydrin, hexamethylene diisocyanate, glyoxal, butanediol diacrylate, terephthaldehyde and/or glutaraldehyde. In addition, the polyvinyl amine copolymer may be crosslinked with other various multi-functional organic compounds such as dialdehydes, polyepoxides, di- or triacrylates, di- or triisocyanates or dihalides, or inorganic compounds containing multi-valent anions or inorganic cations which are capable of complexing with polyvinyl amine. Examples include butanediol diacrylate, diisocyanatohexane, diepoxides, hexamethoxymethyl melamine resin, N,N'dihydroxymethyl-4,5-dihyroxyethylene urea, butanediol diacrylate, dimethyl adipate, sodium formate and poly(ethylene glycol) diglycidyl ethers.

Inorganic crosslinking agents include compound containing multivalent anions including titanates, zirconates, phosphates, silicates, and/or inorganic cations from Group 4-13, preferably Cu²⁺, Fe³⁺, Zn²⁺.

In an embodiment, the crosslinking agent is a non-acidic crosslinking agent comprising a modified glyoxal compound. Such modified glyoxal compounds are represented by the general formula: 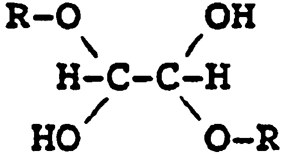 where R represents C₁-C₁₀ lower alkyl groups. The molecular weight of such materials is typically below 500. Preferred modified glyoxal compounds are modified polyhydroxy alkyl ether acetal compounds commercially available from BASF under the trade name CURESAN™. Preferred CURESAN™ compounds include CURESAN™ 199, 200 and 300, which are blocked aldehydes.

In an embodiment, the crosslinking agents are selected from the group consisting of monoaldehydes e.g. formaldehyde, acetaldehyde and benzaldehyde; dialdehydes e.g., glutaraldehyde, glyoxal and succinic dialdehyde, trimethylol melamine, ureaformaldehyde, blocked aldehydes, polyac-rolein, boric acid and borates e.g., borates, methyl borate, boron trifluoride, boric anhydride, pyroborates, peroxoborates, boranes.

Other potential crosslinking agents include N-lactam carboxylates, dicarboxylic acids e.g., maleic acid, oxalic acid, di-isocyanates, divinyl sulphate, and/or inorganic compounds such as germanic acids, germanates, titanium salts and esters, chromates, vanadates, cupric salts and other Group 4-12 salts.

The crosslinking agents may be present in the barrier layer at a concentration sufficient to at least partially crosslink the polyvinyl amine copolymer. In an embodiment, the barrier layer is only partially crosslinked. In another embodiment, the barrier layer is essentially completely crosslinked.

The crosslinking reagent or reagents may be present in the barrier layer at between about 0.001 wt% to about 50 wt%, based on the total amount of the crosslinking reagent and the polyvinyl amine copolymer present. Within this range, the concentration of the crosslinking reagent in the barrier layer is greater than or equal to about 0.005 wt%, preferably greater than or equal to about 0.01 wt%, preferably greater than or equal to about 0.015 wt%, preferably greater than or equal to about 0.02 wt%, preferably greater than or equal to about 0.03 wt%, preferably greater than or equal to about 0.04 wt%, preferably greater than or equal to about 0.05 wt%, preferably greater than or equal to about 0.06 wt%, preferably greater than or equal to about 0.07 wt%, preferably greater than or equal to about 0.08 wt%, preferably greater than or equal to about 0.09 wt%, preferably greater than or equal to about 0.1 wt%, preferably greater than or equal to about 0.2 wt%, preferably greater than or equal to about 0.3 wt%, preferably greater than or equal to about 0.4 wt%, preferably greater than or equal to about 0.5 wt%, preferably greater than or equal to about 0.6 wt%, preferably greater than or equal to about 0.7 wt%, preferably greater than or equal to about 0.8 wt%, preferably greater than or equal to about 0.9 wt%, preferably greater than or equal to about 1 wt%, preferably greater than or equal to about 2 wt%, preferably greater than or equal to about 3 wt%, preferably greater than or equal to about 4 wt%, preferably greater than or equal to about 5 wt%, preferably greater than or equal to about 6 wt%, preferably greater than or equal to about 7 wt%, preferably greater than or equal to about 8 wt%, preferably greater than or equal to about 9 wt%, preferably greater than or equal to about 10 wt%, preferably greater than or equal to about 20 wt%, preferably greater than or equal to about 30 wt%, preferably greater than or equal to about 40 wt%, based on the total amount of the crosslinking reagent and the polyvinyl amine copolymer present.

Also within this range, the concentration of the crosslinking reagent in the barrier layer is less than or equal to about 40 wt%, preferably less than or equal to about 30 wt%, preferably less than or equal to about 20 wt%, preferably less than or equal to about 10 wt%, preferably less than or equal to about 9 wt%, preferably less than or equal to about 8 wt%, preferably less than or equal to about 7 wt%, preferably less than or equal to about 6 wt%, preferably less than or equal to about 5 wt%, preferably less than or equal to about 4 wt%, preferably less than or equal to about 3 wt%, preferably less than or equal to about 2 wt%, preferably less than or equal to about 1 wt%, preferably less than or equal to about 0.9 wt%, preferably less than or equal to about 0.8 wt%, preferably less than or equal to about 0.7 wt%, preferably less than or equal to about 0.6 wt%, preferably less than or equal to about 0.5 wt%, preferably less than or equal to about 0.4 wt%, preferably less than or equal to about 0.3 wt%, preferably less than or equal to about 0.2 wt%, preferably less than or equal to about 0.1 wt%, preferably less than or equal to about 0.09 wt%, preferably less than or equal to about 0.08 wt%, preferably less than or equal to about 0.07 wt%, preferably less than or equal to about 0.06 wt%, preferably less than or equal to about 0.05 wt%, preferably less than or equal to about 0.04 wt%, preferably less than or equal to about 0.03 wt%, preferably less than or equal to about 0.02 wt%, preferably less than or equal to about 0.015 wt%, preferably less than or equal to about 0.01 wt%, preferably less than or equal to about 0.005 wt%, based on the total amount of the crosslinking reagent and the polyvinyl amine copolymer present.

Is it important to mention that the mechanical properties of the instant barrier layer are related to the ability to control crosslinking, which in view of the instant barrier layer composition, do not significantly impacting tensile, modulus and elongation. This unexpected property of the instant barrier layer is demonstrated in the accompanying examples.

In an embodiment, the instant barrier layer comprises one or more oxygen scavengers, which are chemicals that react with oxygen (O₂) to reduce the concentration of oxygen. Examples include sulfite (SO₃⁻²), bisulfite (HSO₃⁻) ions that combine with oxygen to form sulfate (SO₄⁻²) and a nickel or cobalt catalyst. Various oxygen scavenging systems which include various polymers in combination with active components may also be used.

### Other Polymers

In addition to the polyvinyl amine copolymer, the instant barrier layer may include various homopolymers and/or copolymers that improve particular properties of the barrier layer performance. In an embodiment, the barrier layer may include water-soluble copolymers of N-vinyl pyridine, ethylenically unsaturated mono, di, or trialkyl ammonium salts, such as vinylbenzene trimethyl ammonium chloride, aminoethyl acrylate hydrochloride, N-methylamino ethylacrylate, N,N-dimethylaminoethyl methacrylate, N,N-dimethylaminomethyl-N-acrylamide and (N,N-dimethylaminoethyl-N-acrylamide. Preferred are polymers containing a plurality of aminoalkyl nitrogen-substituted acrylamide mers, preferably wherein the aminoalkyl substituent is hydrophilic, e.g., contains less than about 8 carbons.

In an embodiment, the barrier coating may include polyvinyl alcohol polymers of various levels of hydrolysis. Suitable polyvinyl alcohol copolymers have a level of hydrolysis preferably greater than or equal to about 85% up to about 99.9%, with a level of hydrolysis of between 86.0-89.0% preferred, 91.0-93.0% still more preferred, 92.0-94.0% still more preferred, 95.5-96.5% still more preferred, 92.5-95.5% still more preferred, 98.0-98.8% still more preferred, with greater than or equal to about 99.3+ being still more preferred.

In an embodiment, the barrier coating may further include alpha-olefin-vinyl alcohol copolymers, wherein the alpha-olefin has from 2 to 10 carbon atoms; preferably EVOH.

The viscosity of a 4% solution of the polyvinyl alcohol polymer may be from about 2 to about 80 cps at 20 C. In an embodiment, the polyvinyl alcohol polymer has a viscosity of about 45-72 cps, a degree of polymerization of about 1600 to 2200, and a Mw of about 146,000 to 186,000. In another embodiment, the polyvinyl alcohol polymer has a viscosity of about 5-6 cps, a degree of polymerization of about 350 to 650, and a Mw of about 31,000 to 50,000. In another embodiment, the polyvinyl alcohol polymer has a viscosity of about 22-30 cps, a degree of polymerization of about 1000 to 1500, and a Mw of about 85,000 to 124,000. In a preferred embodiment, the polyvinyl alcohol polymer has a viscosity of about 3-4 cps, a degree of polymerization of about 150 to 300, and a Mw of about 13,000 to 23,000.

In an embodiment, the barrier layer may also include aqueous soluble or dispersible polymers such as latex, polyurethane or polyester, inorganic oxide dispersions, aqueous solutions containing polymers such as cellulose derivatives (e.g., cellulose esters), monosaccharides, disaccharides, polysaccharides, casein, and synthetic water permeable colloids include poly(vinyl lactams), acrylamide polymers, poly(vinyl alcohol) and its derivatives, hydrolyzed polyvinyl acetates, polymers of alkyl and sulfoalkyl acrylates and methacrylates, polyamides, polyvinyl pyridine, acrylic acid polymers, maleic anhydride copolymers, polyalkylene oxide, methacrylamide copolymers, polyvinyl oxazolidinones, maleic acid copolymers, other vinyl amine copolymers, methacrylic acid copolymers, acryloyloxyalkyl sulfonic acid copolymers, vinyl imidazole copolymers, vinyl sulfide copolymers, homopolymer or copolymers containing styrene sulfonic acid.

Further additives may also be included in the composition to impart properties desired for the particular article being manufactured. Such additives include, but are not necessarily limited to, fillers, pigments, dyestuffs, antioxidants, stabilizers, processing aids, plasticizers, fire retardants, anti-fog agents, scavengers. In an embodiment, the barrier layer includes nano platelets.

The barrier layer may include up to about 99 wt% of materials other than the polyvinyl amine copolymer.

The instant barrier layer may have a thickness of about 0.1 micrometers to about 1000 micrometers. Within this range, the barrier layer thickness is preferably greater than or equal to about 1, preferably greater than or equal to about 2, preferably greater than or equal to about 2.5, preferably greater than or equal to about 3, preferably greater than or equal to about 3.5, preferably greater than or equal to about 4, preferably greater than or equal to about 4.5, preferably greater than or equal to about 5, preferably greater than or equal to about 10, preferably greater than or equal to about 20, preferably greater than or equal to about 30, preferably greater than or equal to about 35, preferably greater than or equal to about 40 micrometers, preferably greater than or equal to about 50, preferably greater than or equal to about 60, preferably greater than or equal to about 70, preferably greater than or equal to about 80, preferably greater than or equal to about 90, preferably greater than or equal to about 100 micrometers, preferably greater than or equal to about 200, preferably greater than or equal to about 300, preferably greater than or equal to about 400, preferably greater than or equal to about 500, preferably greater than or equal to about 600, preferably greater than or equal to about 700 micrometers, preferably greater than or equal to about 800, preferably greater than or equal to about 900 micrometers. Also within this range, the barrier layer thickness is preferably less than or equal to about 900, preferably less than or equal to about 800, preferably less than or equal to about 700, preferably less than or equal to about 600, preferably less than or equal to about 500, preferably less than or equal to about 400, preferably less than or equal to about 300 micrometers, preferably less than or equal to about 200, preferably less than or equal to about 100, preferably less than or equal to about 90, preferably less than or equal to about 80, preferably less than or equal to about 70, preferably less than or equal to about 60 micrometers, preferably less than or equal to about 50, preferably less than or equal to about 40, preferably less than or equal to about 30, preferably less than or equal to about 20, preferably less than or equal to about 10, preferably less than or equal to about 5, preferably less than or equal to about 4.5, preferably less than or equal to about 4, preferably less than or equal to about 3.5, preferably less than or equal to about 3, preferably less than or equal to about 2.5, preferably less than or equal to about 2, preferably less than or equal to about 1.5, preferably less than or equal to about 1 micrometer.

### Coating Composition

The barrier layer is formed by contacting a coating composition comprising the components and/or the precursors of the components of the barrier layer with the substrate. In an embodiment, the coating composition is preferably an aqueous solution, dispersion, or slurry comprising the polyvinyl amine copolymer. In another embodiment, the coating composition is preferably a nonaqueous solution, dispersion, or slurry comprising the polyvinyl amine copolymer. In addition to the polyvinyl amine copolymer, the coating composition may include the herein described crosslinking reagent(s), other polymers and additives. In addition, the aqueous coating composition may include one more co-solvents. Preferred co-solvents include lower alkyl (i.e., C₁-C₁₀) alcohols, esters, ethers, ketones and alkanes.

The viscosity of the coating composition is preferably about 5 to about 200 cps @20°C. Within this range, the viscosity is preferably greater than or equal to about 10, preferably greater than or equal to about 20, preferably greater than or equal to about 30, preferably greater than or equal to about 40, preferably greater than or equal to about 50, preferably greater than or equal to about 60, preferably greater than or equal to about 70 cps at 20°C. Also within this range, the viscosity is preferably less than or equal to about 190, preferably less than or equal to about 180, preferably less than or equal to about 170, preferably less than or equal to about 160, preferably less than or equal to about 150, preferably less than or equal to about 140, preferably less than or equal to about 130 cps at 20°C.

The coating composition may have a total solids content of about 1 to about 90 wt%. Within this range, the total solids content is preferably greater than or equal to about 2, preferably greater than or equal to about 5, preferably greater than or equal to about 10, preferably greater than or equal to about 15, preferably greater than or equal to about 20, preferably greater than or equal to about 25, preferably greater than or equal to about 30%. Also within this range, the total solids content is preferably less than or equal to about 80, preferably less than or equal to about 85, preferably less than or equal to about 70, preferably less than or equal to about 60, preferably less than or equal to about 50, preferably less than or equal to about 40, preferably less than or equal to about 35 wt%.

The coating composition may further include surfactants, preservatives, and/or other processing aids to improve the application and/or adhesion of the coating composition onto a particular substrate.

In an embodiment, the instant barrier layer has improved adhesion properties over barrier layers known in the art. In an embodiment, the adhesion of the instant barrier layer to a particular substrate is at least 10% greater than the adhesion of a comparative barrier layer when determined under the "Washed Adhesion Test" as described herein. Preferably, the adhesion of the instant barrier layer to a particular substrate is at least 20% greater, preferably at least 30% greater, preferably at least 40% greater, preferably at least 50% greater, preferably at least 60% greater, preferably at least 70% greater, preferably at least 80% greater, preferably at least 90% greater, preferably at least 100% greater, preferably at least 150% greater, preferably at least 200% greater, preferably at least 250% greater, preferably at least 300% greater, than the adhesion of a comparative barrier layer when determined under the "Washed Adhesion Test."

In the Wash Adhesion Test, a test substrate is coated with a barrier layer in a manner consistent with processes known in the art, and/or which mimics a particular end use. The amount of a barrier layer is determined on a substrate coated with the barrier layer using HPLC, FTIR, NMR, and/or wet chemical methods. The coated substrate is then washed with an aqueous washing solution, e.g., water, consistent with washing steps of commercial processes known in the art, and/or which mimics a particular end use. The amount of barrier layer on the substrate is once again determined and calculated as a percentage of retained barrier layer to measure the adhesion properties of the barrier layer to the substrate. However, other comparable methods of determining adhesion may be used.

### Formation of the Barrier Layer

The coating composition may be produced by simple mixing, melt-blending, kneading, and or the like, depending on the intended application. The coating composition is preferably prepared at a temperature in the range of 20°C up to about 300°C. The blending may immediately precede the formation of the finished article or preform or precede the formation of a feedstock or masterbatch for later use in the production of finished packaging articles. When film layers or multi-layer articles are produced, (co)extrusion, solvent casting, injection molding, stretch blow molding, orientation, thermoforming, extrusion coating, coating and curing, lamination, extrusion-lamination, blow-molding, co-extrusion injection molding or combinations thereof would typically follow the blending.

The coating composition may comprise about 1 wt% up to about 99 wt% polyvinyl amine copolymer, based on the total amount of the coating composition present. Within this range, the coating composition may comprise greater than or equal to about 10 wt%, preferably greater than or equal to about 20 wt%, preferably greater than or equal to about 30 wt%, preferably greater than or equal to about 40 wt%, preferably greater than or equal to about 50 wt%, preferably greater than or equal to about 60 wt%, preferably greater than or equal to about 70 wt%, preferably greater than or equal to about 80 wt%, preferably greater than or equal to about 90 wt% polyvinyl amine copolymer, based on the total amount of the coating composition present.

Also within this range, the coating composition may comprise less than or equal to about 90 wt%, preferably less than or equal to about 80 wt%, preferably less than or equal to about 70 wt%, preferably less than or equal to about 60 wt%, preferably less than or equal to about 50 wt%, preferably less than or equal to about 40 wt%, preferably less than or equal to about 30 wt%, preferably less than or equal to about 20 wt%, preferably less than or equal to about 10 wt% polyvinyl amine copolymer, based on the total amount of the coating composition present.

In a preferred embodiment, the coating composition may be applied to the substrate by dipping (dip coating), spraying (spray coating), roller coating, curtain coating, metering rod coating, reverse roll coating, gravure coating, extrusion/co-extrusion, injection molding, blow molding, and/or the like. In a preferred embodiment, the coating composition is applied to the substrate followed by solvent evaporation, and/or heating, and/or irradiation, and/or the like to fix the coating composition to the substrate and/or induce crosslinking to produce the barrier layer.

### Substrates

In an embodiment, the coating composition is applied to a substrate comprising one or more polymeric resins and/or inorganic substrates. Preferred polymeric resins include polyolefin resins and/or polyester resins. Substrates may thus include high density polyethylene, linear low-density polyethylene, super-low-density polyethylene; ethylene-vinyl acetate copolymer, ethylene-acrylate copolymer, ethylene-acrylic acid copolymer, ethylene-methacrylic acid copolymer, ethylene-carbon monoxide copolymer, amorphous polystyrene, crystalline polystyrene, vinyl chloride resin, polyamide resin, polyacetal resin, polycarbonate resin, ethylene-propylene rubber, ethylene-1-butene rubber, propylene-1-butene rubber, styrene-butadiene rubber, styrene-butadiene block copolymer, paper, resin-coated paper, poly(ethylene terephthalate) (PET), cellulose diacetate, cellulose triacetate, poly(ethylene naphthalate), polyester diacetate, poly(ethylene vinyl alcohol) ("EVOH)"), polyacrylonitrile, polyvinyl chloride, poly(vinylidene dichloride), polyvinylchloride ("PVC"), poly(vinylidene dichloride) ("PVDC"), and/or the like.

Preferred inorganic substrates may comprise SiO₂ glass, TiO₂ glass, various metal layers comprising Group 1 to Group 16 metals and/or metal alloys thereof, preferably layers comprising aluminum, and combinations thereof.

Suitable substrates include flexible and/or rigid single layer or multilayer laminated articles. The layers comprising the composition may be in several forms. They may be in the form of stock films, including "oriented" or "heat shrinkable" films, which may ultimately be processed as bags or coverings. The layers may also be in the form of sheet inserts to be placed in a packaging cavity. In rigid articles such as beverage containers, thermoformed trays or cups, the layer may be within the container's walls and may furthermore be foamed. Even further, the layer may also be in the form of a liner placed with or in the container's lid or cap. The layer may even be coated or laminated onto any one of the articles mentioned above.

The substrates may be surface treated and/or untreated. Surface treatments include flame treatment, corona treatment, irradiation and/or physical abradement.

In an embodiment, the barrier layer is present within an article such that the barrier layer is disposed between at least two layers. For example, the barrier layer may be present in-between the substrate and an outer layer or between one or more layers disposed on the substrate. In an embodiment, the barrier layer is present in at least two layers of the article.

The additional layers may also include one or more layers which are permeable and/or impermeable to various gases including oxygen and carbon dioxide.

In an embodiment, the substrate is a blank which after having the barrier coating applied to it, is subsequently blow molded to produce a final article. In another embodiment, the substrate is a previously blow molded article.

### Barrier Layer Properties

The instant barrier layer provides barrier properties to prevent effusion of carbon dioxide and/or oxygen there through. The improvement in CO₂ barrier properties may be measured in terms of a CO₂ reduction index, wherein the CO₂ effusion through a coated substrate is expressed as a percentage of the CO₂ effusion through an essentially identical uncoated substrate under essentially identical conditions. Accordingly, a barrier coating with a CO₂ reduction index of 1% represents a barrier wherein the CO₂ effusion rate is 1% of an uncoated substrate. A barrier coating with a CO₂ reduction index greater than 100% indicates a substrate which is more permeable to CO₂ than the uncoated substrate. Likewise, a barrier coating with a CO₂ reduction index of zero (0) represents a substrate which is impermeable to CO₂ under the test conditions. In an embodiment, the instant barrier layer has a CO₂ reduction index of less than 100% on a particular substrate under a particular set of conditions. Preferably, the instant barrier layer has a CO₂ reduction index of less than or equal to about 95%, preferably less than or equal to about 90%, preferably less than or equal to about 85%, preferably less than or equal to about 80%, preferably less than or equal to about 75%, preferably less than or equal to about 70%, preferably less than or equal to about 65%, preferably less than or equal to about 60%, preferably less than or equal to about 55%, preferably less than or equal to about 50%, preferably less than or equal to about 45%, preferably less than or equal to about 40%, preferably less than or equal to about 35%, preferably less than or equal to about 30%, preferably less than or equal to about 25%, preferably less than or equal to about 20%, preferably less than or equal to about 15%, preferably less than or equal to about 10%, preferably less than or equal to about 5%, preferably less than or equal to about 4%, preferably less than or equal to about 3%, preferably less than or equal to about 2%, preferably less than or equal to about 1%, preferably less than or equal to about 0.9%, preferably less than or equal to about 0.8%, preferably less than or equal to about 0.7%, preferably less than or equal to about 0.6%, preferably less than or equal to about 0.5%, preferably less than or equal to about 0.4%, preferably less than or equal to about 0.3%, preferably less than or equal to about 0.2%, preferably less than or equal to about 0.1%, preferably less than or equal to about 0.05%, preferably less than or equal to about 0.01% under similar conditions.

In another embodiment, the instant barrier layer has a CO₂ reduction index sufficient to provide the same or better level of barrier properties to a particular substrate when the thickness of the substrate is reduced relative to a comparative substrate without the barrier layer disposed thereon. In other words, application of the barrier layer allows for a reduction in the thickness of the substrate. In an embodiment, the instant barrier layer has a CO₂ reduction index sufficient to provide CO₂ permeability of less than or equal to an uncoated substrate wherein the coated substrate has a thickness which is 90% the thickness of the uncoated substrate, preferably wherein the coated substrate has a thickness which is 80% the thickness of the uncoated substrate, preferably wherein the coated substrate has a thickness which is 70% the thickness of the uncoated substrate, preferably wherein the coated substrate has a thickness which is 60% the thickness of the uncoated substrate, preferably wherein the coated substrate has a thickness which is 50% the thickness of the uncoated substrate, preferably wherein the coated substrate has a thickness which is 40% the thickness of the uncoated substrate, preferably wherein the coated substrate has a thickness which is 30% the thickness of the uncoated substrate, preferably wherein the coated substrate has a thickness which is 20% the thickness of the uncoated substrate, preferably wherein the coated substrate has a thickness which is 10% the thickness of the uncoated substrate.

In an embodiment, the instant barrier layer has at least one of the above disclosed CO₂ reduction indexes at greater than or equal to about 0% Relative Humidity (RH) at room temperature (i.e., a temperature between about 20 and 25°C), preferably greater than or equal to about 25% RH at room temperature, more preferably greater than or equal to about 50% RH at room temperature, more preferably greater than or equal to about 75% RH at room temperature, with greater than or equal to about 90% RH at room temperature being more preferred.

Likewise, the improvement in O₂ barrier properties may be measured in terms of an O₂ reduction index, wherein the O₂ effusion through a coated substrate is expressed as a percentage of the O₂ effusion through an essentially identical uncoated substrate under essentially identical conditions. Accordingly, a barrier coating with an O₂ reduction index of 1% represents a barrier wherein the O₂ effusion rate is 1% of an uncoated substrate. A barrier coating with an O₂ reduction index greater than 100% indicates a substrate which is more permeable to O₂ than the uncoated substrate. Likewise, a barrier coating with an O₂ reduction index of zero (0) represents a substrate which is impermeable to O₂ under the test conditions. In an embodiment, the instant barrier layer has an O₂ reduction index of less than 100% on a particular substrate under a particular set of conditions. Preferably, the instant barrier layer has an O₂ reduction index of less than or equal to about 95%, preferably less than or equal to about 90%, preferably less than or equal to about 85%, preferably less than or equal to about 80%, preferably less than or equal to about 75%, preferably less than or equal to about 70%, preferably less than or equal to about 65%, preferably less than or equal to about 60%, preferably less than or equal to about 55%, preferably less than or equal to about 50%, preferably less than or equal to about 45%, preferably less than or equal to about 40%, preferably less than or equal to about 35%, preferably less than or equal to about 30%, preferably less than or equal to about 25%, preferably less than or equal to about 20%, preferably less than or equal to about 15%, preferably less than or equal to about 10%, preferably less than or equal to about 5%, preferably less than or equal to about 4%, preferably less than or equal to about 3%, preferably less than or equal to about 2%, preferably less than or equal to about 1%,, preferably less than or equal to about 0.9%, preferably less than or equal to about 0.8%, preferably less than or equal to about 0.7%, preferably less than or equal to about 0.6%, preferably less than or equal to about 0.5%, preferably less than or equal to about 0.4%, preferably less than or equal to about 0.3%, preferably less than or equal to about 0.2%, preferably less than or equal to about 0.1%, preferably less than or equal to about 0.05%, preferably less than or equal to about 0.01% under similar conditions.

In another embodiment, the instant barrier layer has an O₂ reduction index sufficient to provide the same or better level of barrier properties to a particular substrate when the thickness of the substrate is reduced relative to a comparative substrate without the barrier layer disposed thereon. In other words, application of the barrier layer allows for a reduction in the thickness of the substrate. In an embodiment, the instant barrier layer has an O₂ reduction index sufficient to provide O₂ permeability of less than or equal to an uncoated substrate wherein the coated substrate has a thickness which is 90% the thickness of the uncoated substrate, preferably wherein the coated substrate has a thickness which is 80% the thickness of the uncoated substrate, preferably wherein the coated substrate has a thickness which is 70% the thickness of the uncoated substrate, preferably wherein the coated substrate has a thickness which is 60% the thickness of the uncoated substrate, preferably wherein the coated substrate has a thickness which is 50% the thickness of the uncoated substrate, preferably wherein the coated substrate has a thickness which is 40% the thickness of the uncoated substrate, preferably wherein the coated substrate has a thickness which is 30% the thickness of the uncoated substrate, preferably wherein the coated substrate has a thickness which is 20% the thickness of the uncoated substrate, preferably wherein the coated substrate has a thickness which is 10% the thickness of the uncoated substrate.

In an embodiment, the instant barrier layer has at least one of the above disclosed O₂ reduction indexes at greater than or equal to about 0% Relative Humidity (RH) at room temperature (i.e., a temperature between about 20 and 25°C), preferably greater than or equal to about 25% RH at room temperature, more preferably greater than or equal to about 50% RH at room temperature, more preferably greater than or equal to about 75% RH at room temperature, with greater than or equal to about 90% RH at room temperature being more preferred.

### Examples

Testing was conducted to determine the ability to decrease the re-solubility of PVOH-VAm films (the polyvinyl amine copolymer) in a water-based solution.

### Method:

A PVOH-VAm polymer was produced according to the Improved NVF Copolymer Process as described infra. The PVOH-VAm solution at 5% solids was contacted with variety of crosslinking reagents. The solution was then cast as a film with a thickness of 100um. Water was removed in a 30°C oven for 24 hours. A heat history was then applied to the dried film samples as a residence time of 60 seconds under an IR oven wherein the surface of the film reached about 200°F during this time.

### Film Testing

In these tests, the dissolution times is used to determine the solubility of the film comprising the PVOH-VAm polymer produced according to the Improved NVF Copolymer Process. Tensile testing was used to determine any embrittlement of the film.
Color testing was used to determine the acceptability of film appearance.

The Inventive PVOH-VAm copolymer used for testing was selected from grades M6 and L12, (Sekisui Specialty Chemicals America, LLC), and was produced using the Improved NVF

Copolymer Process unless otherwise noted. In addition, a comparative co-polymer was produced by Comparative Process D and Comparative Process E as discussed herein. The Inventive and Comparative copolymers utilized herein had the following characteristics:

| Grade | Reaction Solids Wt% | 4% Viscosity at 20°C (cps) | 15% Viscosity at 20°C (cps) | Ash (% Na₂O) | Amine Mol% |
|---|---|---|---|---|---|
| Inventive M6 | 52.04 | 13.37 | 35.58 | 0.89 | 5.0 |
| Inventive L12 | 56.28 | 7.30 | 13.54 | 1.02 | 10.5 |
| M6 Comparative Process D | ~52 | ~13 | ~35 | ~1 | 5.0 |
| M6 Comparative Process E | ~52 | ~13 | ~35 | ~1 | ~5 |

Crosslinking reagents used were:
Curesan 199 - Blocked Glyoxal (BASF)
Carbodilite - Carbodiimide
SMA - Styrene Malaic Anyhydride
Borate - Boric acid (Lab Stock).

The crosslinking reagents are presented as a ratio of crosslinking reagent to molar amine functional groups on the PVOH-VAm copolymer.
0.001:1
0.01:1
0.1:1
1:1
The PVOH-VAm copolymer without crosslinking reagent was used as a standard control. In addition, a 50/50 by weight blend of L12 PVOH grade C-325 was used, along with L12 in combination with glyoxal.

### Film Dissolution Time Procedure

500mL of water were placed in a glass beaker;
Adjust temperature to 25°C;
Adjust pH to 9;
Set a controlled stirring rate;
Submerge a 1"x1" sample in water (supported); and
Record the time when a hole forms in the film to represent the break time; and
Record the time when 95% of the film dissolves as the Dissolution time. The results are shown in Figures 1 and 2.

Accordingly, Curesan 199 (blocked glyoxal) outperformed all other crosslinking reagents insoluble even after 15 minutes at all crosslinker levels below 10%. Control L-12 was 3.61 minutes. No Film break with crosslinker level of 1% and above 130% improvement in film break at crosslinker level of 0.1%. Control L-12 was 0.80 minutes. Other crosslinkers showed only a minor improvement. However, 50/50 Blend of L12 and C-325 had no break or dissolution at 15 minutes (not shown.)

As the data shows, Curesan 199 (Blocked Glyoxal) with L12 PVOH-VAm had the largest impact on improving film dissolution time. Addition levels of 1% and above (based on polymer amine functional groups) were completely insoluble. Other crosslinkers only showed minor improvements in dissolution time and higher levels of addition were needed.

Color Testing: Curesan 199 showed no significant color difference than L12 Control with films of 100um thickness with 1% and lower addition levels.

Mechanical Testing: Curesan 199 had similar mechanical properties to L12 control at addition levels of 1% and lower.

Blending PVOH with PVOH-VAm is an alternative option to adding a crosslinker. Adding a fully hydrolyzed grade of PVOH (ex. C325, C107) can greatly improve the solubility of PVOH-VAm.

Film dissolution testing was conducted using M6 grade PVOH-VAm copolymer produced according to the Improved NVF Copolymer Process. An 100um film was used herein as the standard of comparison.

| | |
|---|---|
| M6:C325 | **Over 400% improvement** |
| 90:10 | of solubility break time (min) |
| M6:C325 | Totally insoluble |
| 75:25 | **Over 600% improvement** |
| M6:C325 | Totally insoluble |
| 50:50 | **Over 600% improvement** |

At 25% added PVOH the film is completely insoluble. Simply adding 10% of fully hydrolyzed PVOH can have a 400% improvement in the re-solubility of the PVOH-VAm film.

### Barrier Properties Testing

An inventive polyvinyl alcohol - polyvinyl amine copolymer (PVOH-PVAm) was produced using the Improved NVF Copolymer Process (Inventive M6). Two comparative M6 PVOH-PVAm copolymers were produced using Comparative Process' D and E. Comparative Process D is essentially the same as Comparative Process E, yet produced using different equipment.

In the Inventive Improved NVF Copolymer Process, the initiator is fed for 30 minutes followed by the delay feeds of initiator and monomer feeds for a total of 180 minutes followed by another 120 minutes of reaction after the feeds have finished. Total lab reaction time is 5 hours. Importantly, the Inventive Improved NVF Copolymer Process does not stop the initiator feed during the initial polymerization phase.

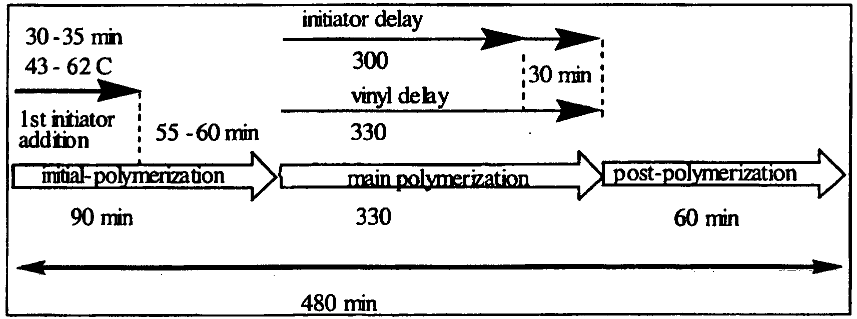

The Comparative Process D and E are shown above and referred to herein as Comparative Process D for simplicity. In the Comparative Process D, the initiator is fed for 30-35 minutes then stopped for 55-60 minutes then the initiator and monomer feeds are started. The initiator feed is stopped after 300 minutes and the monomer feed is continued for another 30 minutes (330 minutes). At this time all feeds are stopped and the reaction is heated for another 60 minutes, which results in a total reaction time of 8 hours.

Films of the PVOH-PVAm copolymers were produced and subjected to 02 barrier testing by MOCON Inc., 7500 Boone Ave. N. Minneapolis. MN 55428 U.S. according to barrier testing parameters well known to one of minimal skill in the art. The PVOH-PVAm copolymers were cross-linked using Polycup 172 (Hercules/Ashland) which is an adduct of epichlorohydrin well known in the art.

### Method of Preparing Films for Oxygen Barrier Testing

A 7% wt/wt solution of the PVOH-PVAm copolymer was heated to ensure complete dissolution, cooled to room temperature, and then filtered through a 140 mesh screen to remove unsolubilized gels.

The cross-linking compound Polycup 172 was then added to the filtered solutions under gentle agitation. The cross-linking compound was added at 2.5% and 5% wt/wt, based on calculations relative to the activity of the cross-linking compound and the composition of the PVOH-PVAm copolymer.

The solutions were then centrifuged 10' @ 1200 rpm to remove entrapped air bubbles and then cast on a 3 mil PET film (the test substrate) using a Gardco 1.5 wet mil bar applicator.

The films were dried in a forced air oven for 2 minutes at 121°C.

The coated PET films were then tested for oxygen transmission rate (OTR) according to MOCON testing standards using a MOCON Oxtran 2/21 Instrument according to:
ASTM-F3985 used to determine the rate of transmission of oxygen gas, at steady-state, at 23°C 0% RH;
ASTM-F-1927 used to determine the rate of transmission of oxygen gas, at steady-state, at a given temperature and %RH level, through film, sheeting, laminates, co-extrusions, or plastic-coated papers or fabrics;
DIN 53380 used to determine gas transmission rate through plastic films or other materials depending on temperature and testing gas;
JIS-7126 used to determine the gas transmission rate of any plastic material in the form of film, sheeting, laminate, co-extruded material or flexible plastic-coated material under a differential pressure;

ISO CD 15105-2 used to determine the gas transmission rate of any plastic material in the form of film, sheeting, laminate, co-extruded material or flexible plastic-coated material; and/or an equivalent standard testing procedure.

In a first round of testing, the samples were evaluated for OTR at 40°C and 50% RH as follows:

| **OTR (Oxygen Transmission Rate) MOCON Testing** | **OTR @ 40°C 50% RH [cm³/(100 in²**-**day)]** | **Film Thickness [microns]** |
|---|---|---|
| Comparative PET substrate (no coating) 3 mils | 1.8900 | 2.67 |
| Inventive Copolymer Neat | 0.0029 | 2.67 |
| Comparative Celvol 310 | 0.0086 | 2.67 |
| Comparative Oxibloc 1322 | 1.4424 | 2.67 |
| Comparative AQ-4104 EVOH | 0.3395 | 2.67 |
| Inventive Copolymer + C-310 (50/50) | 0.0029 | 2.67 |
| Inventive Copolymer + AQ-4104 (70/30) pH=10.5 | 0.0038 | 2.67 |
| Inventive Copolymer + AQ-4104 (70/30) pH=5.1 | 0.0086 | 2.67 |

In a second round of testing, the effect of humidity on the oxygen transmission rate was determined using the Inventive copolymer film as follows:

| | OTR 23°C 0% RH [cm³/ (100 in²-day)] | OTR 23 °C 50% RH [cm³ / (100 in²-day)] | OTR 23 °C 75% RH [cm³/ (100 in²-day)] | OTR 23 °C 85% RH [cm³ / (100 in²-day)] | Film Thickness [microns] |
|---|---|---|---|---|---|
| Inventive Copolymer Neat | 0.0034 | 0.0055 | 0.0036 | 0.0063 | 2.67 |
| Inventive Copolymer + 0.5% P172 | 0.0021 | 0.0014 | 0.0009 | 0.0069 | 2.67 |
| Inventive Copolymer + 1.5% P172 | 0.0006 | 0.0003 | 0.0003 | 0.0066 | 2.67 |
| Comparative AQ-4104 EVOH | 0.0241 | 0.0245 | 0.0263 | 0.0260 | 2.67 |
| Inventive Copolymer + AQ-4104 (70/30) | 0.0029 | 0.0005 | 0.0029 | 0.0063 | 2.67 |

| | | | | | |
|---|---|---|---|---|---|
| OTR Lower End Detection Limit < 0.0003 cm³/100in²-day Test Gas concentration 100% O₂ Test Gas Pressure: 760 mm Hg Carrier gas 98% N₂, 2% H₂ | | | | | |

As the data shows, the instant barrier layer may further comprise an additional polymer or copolymer (e.g., ethylene-vinyl alcohol, EVOH) which provides a further benefit over the individual components alone.

In a third round of testing, the OTR of PVOH-PVAm polymers produced by different processes were evaluated.

| | **OTR 23C 50% RH [cm³/ (100 in²-day)]** | **OTR 23C 75% RH [cm³/ (100 in²-day)]** | **OTR 23C 90% RH [cm³/ (100 in²-day)]** | **Film Thickness [microns]** |
|---|---|---|---|---|
| M6 Inventive Copolymer Neat | 0.0016 | 0.0016 | 0.0014 | 2.67 |
| M6 Comparative Process D Neat | 0.0030 | 0.0178 | 0.0298 | 2.67 |
| M6 Comparative Process E Neat | 0.0034 | 0.0164 | 0.0253 | 2.67 |

In addition, the viscosity of the PVOH-PVAm solutions cross-linked with epichlorohydrin (Polycup 172) was evaluated over time.

| **Brookfield Viscosity, cps at 25°C** | **Day 1** | **Day 2** | **Day 3** | **Day 4** | **Day 5** |
|---|---|---|---|---|---|
| M6 Inventive Copolymer + 5% P172 | 70 | 120 | 270 | 1100 | gelled/cuttable |
| M6 Comparative Process D+5%P172 | 70 | 100 | 160 | 360 | almost gelled/very thick |

As the data show, the Inventive copolymer produced according to the Improved NVF Copolymer Process shows a marked improvement in OTR relative to the untreated substrate, and an improvement in properties relative to the Comparative Process D and E materials. In addition, the Inventive copolymer produced via the "improved NVF copolymer process" demonstrates higher reactivity with crosslinkers as compared to Process D. In addition to barrier properties, the inventive copolymer films have greatly improved color properties. To demonstrate this, the APHA color of an 8% solution of the copolymer was measured using a Hunter Lab Colorquest colorimeter. The data are as follows:
APHA Color Analysis using Hunter Lab
Colorquest equipment - 10mm sample size
diluted to 8% TS

| | | |
|---|---|---|
| M6 Inventive Copolymer Neat | 3.88 | clear white |
| M6 Comparative Process D Neat | 128.52 | very yellow |
| M6 Comparative Process E Neat | 93.6 | yellow |

| | | |
|---|---|---|
| *The lower the number - the less yellow in color. | | |

Accordingly, the inventive copolymer produces an essentially "water white" film, whereas the comparative films have an unacceptable yellow color.

## Claims

1. A barrier layer comprising a polyvinyl amine-polyvinyl alcohol copolymer applied to a substrate as a water-soluble composition, wherein the polyvinyl amine-polyvinyl alcohol copolymer is formed by copolymerizing:
(a) from 99 to 1 mol% of N-vinylformamide and
(b) from 1 to 99 mol% of one or more vinyl C₁-C₁₀ alkyl esters, and then hydrolyzing from 30 to 100 mol% of the formyl groups from the copolymerized units (a) to form amino groups and from 30 to 100 mol% of the C₁-C₁₀ alkyl ester groups from the copolymerized units (b) to form hydroxyl groups,
wherein the copolymer has a unimodal compositional distribution as evidenced by essentially one peak in a gel permeation gradient elution chromatographic analysis
and wherein further the copolymer is essentially free of amidine rings as evidenced by a lack of absorption in a ¹³C NMR spectrum consistent with an amidine carbon atom absorption.

2. The barrier layer of Claim 1, wherein an aqueous 4% solution of the polyvinyl amine-polyvinyl alcohol copolymer measured at 10 mm cell has an APHA color value of less than or equal to 10 APHA units determined according to ASTM D1209 or a comparable method.

3. The barrier layer of Claim 1, wherein the vinyl C₁-C₁₀ alkyl esters are vinyl acetate, vinyl propionate, or a combination thereof.

4. The barrier layer of Claim 1, wherein the polyvinyl amine-polyvinyl alcohol copolymer comprises from 0.5 mol% to 20 mol% amine functional groups.

5. The barrier layer of Claim 1, wherein a 4 wt% aqueous solution of the polyvinyl amine-polyvinyl alcohol copolymer at 20°C has a turbidity of less than 100 NTU.

6. The barrier layer of Claim 1 further comprising at least one additional polymer selected from the group consisting of copolymers of N-vinyl pyridine, ethylenically unsaturated mono, di, or trialkyl ammonium salts, N-methylamino ethylacrylate, N,N-dimethylaminoethyl methacrylate, N,N-dimethylaminomethyl-N-acrylsmide, N,N-dimethylaminoethyl-N-acrylamide, polyvinyl alcohol, latex, polyurethane, polyesters, polyamides, polyvinyl pyridine, acrylic acid polymers, maleic anhydride copolymers, polyalkylene oxide, methacrylamide copolymers, polyvinyl oxazolidinones, maleic acid copolymers, vinyl amine copolymers, methacrylic acid copolymers, acryloyloxyailkyl sulfonic acid copolymers; vinyl imidazole copolymers, vinyl sulfide copolymers, homopolymer or copolymers containing styrene sulfonic acid, alpha-olefin-vinyl acetate copolymers, alpha-olefin-vinyl alcohol copolymers, and combinations thereof.

7. The barrier layer of Claim 6, wherein the barrier layer comprises ethylene-vinyl alcohol copolymer.

8. The barrier layer of Claim 1, wherein the barrier layer is present within an article such that the barrier layer is disposed between at least two layers.

9. The barrier layer of Claim 1, wherein the barrier layer is applied to a substrate, wherein further the substrate is a mold blank, which after having the barrier coating applied to it, is subsequently blow molded to produce a final article.

10. The barrier layer of Claim 1, wherein barrier layer is applied to a substrate which is a blow molded article.

11. A process for manufacturing a barrier layer according to Claim 1 comprising a polyvinyl amine-polyvinyl alcohol copolymer applied to a substrate as a water-soluble composition, wherein the polyvinyl amine-polyvinyl alcohol copolymer is formed by a process comprising the steps of:
a) charging a first portion of a total amount of N-vinylformamide into a reactor;
b) charging a first portion of a total amount of at least one vinyl C₁-C₁₀ alkyl ester into the reactor;
c) continuously feeding a first portion of a total amount of a free radical polymerization catalyst at a first catalyst flow rate into the reactor;
d) contacting the first portion of N-vinylformamide, the first portion of at least one vinyl C₁-C₁₀ alkyl ester, in the presence of the free radical polymerization catalyst under polymerization conditions for a first period of time;
e) after the first period of time, continuously feeding for a second period of time, a second portion of the n-vinylformamide at a n-vinylformamide flow rate into the reactor while simultaneously feeding a second portion of at least one vinyl C₁-C₁₀ alkyl ester into the reactor at an ester flow rate, while simultaneously feeding a second portion of the free radical polymerization catalyst at a second catalyst flow rate into the reactor under polymerization conditions until the total amount of the N-vinylformamide, the total amount of the vinyl C₁-C₁₀ alkyl ester, and the total amount of the free radical polymerization catalyst have been fed into the reactor;
f) followed by contacting for a third period of time, the n-vinylformamide and the at least one vinyl C₁-C₁₀ alkyl ester in the presence of the free radical polymerization catalyst in the reactor under polymerization conditions to produce an intermediate copolymer comprising polyvinyl formamide and one or more polyvinyl C₁-C₁₀ alkyl esters, wherein the third period of time expires when the solids content of the intermediate copolymer in the reactor is greater than or equal to 20 wt% and less than or equal to 70 wt%;
g) saponifying the intermediate copolymer under either acidic or basic conditions to produce an intermediate polyvinyl amide-polyvinyl alcohol copolymer; followed by
h) hydrolyzing the intermediate polyvinyl amide-polyvinyl alcohol copolymer under either acidic or basic conditions to produce the water-soluble polyvinyl amine-polyvinyl alcohol copolymer, and
wherein the barrier layer is formed by applying the polyvinyl amine-polyvinyl alcohol copolymer to a substrate as a water-soluble composition

12. An article comprising the barrier layer of Claim 1.

13. A rigid article comprising the barrier layer of Claim 1.

14. A flexible article comprising the barrier layer of Claim 1.

15. The article of Claim 12 having an oxygen reduction index of less than or equal to 1%, wherein the oxygen reduction index is a measure of oxygen effusion through the article expressed as a percentage of oxygen which effuses through an essentially identical uncoated substrate under essentially identical conditions.

## Patentansprüche

1. Barriereschicht, umfassend ein als wasserlösliche Zusammensetzung auf ein Substrat aufgebrachtes Polyvinylamin-Polyvinylalkohol-Copolymer, wobei das Polyvinylamin-Polyvinylalkohol-Copolymer durch Copolymerisation von
(a) 99 bis 1 Mol-% N-Vinylformamid und
(b) 1 bis 99 Mol-% eines oder mehrerer Vinyl-C₁-C₁₀-alkylester und anschließende Hydrolyse von 30 bis 100 Mol-% der Formylgruppen aus den copolymerisierten Einheiten (a) zu Aminogruppen und von 30 bis 100 Mol-% der C₁-C₁₀-Alkylestergruppen aus den copolymerisierten Einheiten (b) zu Hydroxylgruppen gebildet wird,
wobei das Copolymer eine unimodale Zusammensetzungsverteilung aufweist, wie durch im Wesentlichen einen Peak bei einer Gelpermeationschromatographie-Analyse mit Gradientenelution belegt,
und wobei das Copolymer ferner im Wesentlichen frei von Amidinringen ist, wie durch das Fehlen einer Absorption in einem ¹³C-NMR-Spektrum, die einer Amidin-Kohlenstoffatom-Absorption entspricht, belegt.

2. Barriereschicht nach Anspruch 1, wobei eine in einer 10-mm-Zelle vermessene wässrige 4%ige Lösung des Polyvinylamin-Polyvinylalkohol-Copolymers eine APHA-Farbzahl kleiner gleich 10 APHA-Einheiten, bestimmt gemäß ASTM D1209 oder einer vergleichbaren Methode, aufweist.

3. Barriereschicht nach Anspruch 1, wobei es sich bei den Vinyl-C₁-C₁₀-alkylestern um Vinylacetat, Vinylpropionat oder eine Kombination davon handelt.

4. Barriereschicht nach Anspruch 1, wobei das Polyvinylamin-Polyvinylalkohol-Copolymer 0,5 Mol-% bis 20 Mol-% aminfunktionelle Gruppen umfasst.

5. Barriereschicht nach Anspruch 1, wobei eine 4 gew.-%ige wässrige Lösung des Polyvinylamin-Polyvinylalkohol-Copolymers bei 20°C eine Trübung von weniger als 100 NTU aufweist.

6. Barriereschicht nach Anspruch 1, ferner umfassend mindestens ein zusätzliches Polymer aus der Gruppe bestehend aus Copolymeren von N-Vinylpyridin, ethylenisch ungesättigten Mono-, Di- oder Trialkylammoniumsalzen, N-Methylaminoethylacrylat, N,N-Dimethylaminoethylmethacrylat, N,N-Dimethyl-aminomethyl-N-acrylamid, N,N-Dimethylaminomethyl-N-acrylamid, Polyvinylalkohol, Latex, Polyurethan, Polyestern, Polyamiden, Polyvinylpyridin, Acrylsäurepolymeren, Maleinsäureanhydrid-Copolymeren, Polyalkylenoxid, Methacrylamid-Copolymeren, Polyvinyloxazolidinonen, Maleinsäure-Copolymeren, Vinylamin-Copolymeren, Methacrylsäure-Copolymeren, Acryloyloxyalkylsulfonsäure-Copolymeren, Vinylimidazol-Copolymeren, Vinylsulfid-Copolymeren, Homopolymeren oder Copolymeren, die Styrolsulfonsäure enthalten, alpha-Olefin-Vinylacetat-Copoly-meren, alpha-Olefin-Vinylalkohol-Copolymeren und Kombinationen davon.

7. Barriereschicht nach Anspruch 6, wobei die Barriereschicht Ethylen-Vinylalkohol-Copolymer umfasst.

8. Barriereschicht nach Anspruch 1, wobei die Barrierschicht in einem Artikel derart vorliegt, dass die Barrierschicht zwischen mindestens zwei Schichten angeordnet ist.

9. Barriereschicht nach Anspruch 1, wobei die Barriereschicht auf ein Substrat aufgebracht ist, wobei es sich ferner bei dem Substrat um einen Formrohling handelt, der nach dem Aufbringen der Barriereschicht darauf anschließend zur Herstellung eines fertigen Artikels blasgeformt wird.

10. Barriereschicht nach Anspruch 1, bei die Barriereschicht auf ein Substrat, bei dem es sich um einen blasgeformten Artikel handelt, aufgebracht ist.

11. Verfahren zur Herstellung einer Barriereschicht gemäß Anspruch 1, bei dem man ein Polyvinylamin-Polyvinylalkohol-Copolymer als wasserlösliche Zusammensetzung auf ein Substrat aufbringt, wobei das Polyvinylamin-Polyvinylalkohol-Copolymer durch ein Verfahren gebildet wird, bei dem man:
a) einen ersten Teil einer Gesamtmenge von N-Vinylformamid in einen Reaktor einträgt;
b) einen ersten Teil einer Gesamtmenge mindestens eines Vinyl-C₁-C₁₀-alkylesters in den Reaktor einträgt;
c) einen ersten Teil einer Gesamtmenge eines radikalischen Polymerisationskatalysators mit einer ersten Katalysatorströmungsrate kontinuierlich in den Reaktor einspeist;
d) den ersten Teil von N-Vinylformamid und den ersten Teil mindestens eines Vinyl-C₁-C₁₀-alkyl-esters in Gegenwart des radikalischen Polymerisationskatalysators über einen ersten Zeitraum unter Polymerisationsbedingungen kontaktiert;
e) nach dem ersten Zeitraum über einen zweiten Zeitraum einen zweiten Teil des N-Vinylformamid mit einer N-Vinylformamid-Strömungsrate kontinuierlich in den Reaktor einspeist und gleichzeitig einen zweiten Teil mindestens eines Vinyl-C₁-C₁₀-alkylesters mit einer Ester-Strömungsrate in den Reaktor einspeist und gleichzeitig einen zweiten Teil des radikalischen Polymerisationskatalysators bei einer zweiten Katalysatorströmungsrate unter Polymerisationsbedingungen in den Reaktor einspeist, bis die Gesamtmenge des N-Vinylformamids, die Gesamtmenge des Vinyl-C₁-C₁₀-alkyl-esters und die Gesamtmenge des radikalischen Polymerisationskatalysators in den Reaktor eingespeist worden sind;
f) danach über einen dritten Zeitraum das N-Vinylformamid und den mindestens einen Vinyl-C₁-C₁₀-alkylester in Gegenwart des radikalischen Polymerisationskatalysators unter Polymerisationsbedingungen in dem Reaktor kontaktiert, wobei man ein intermediäres Copolymer, das Polyvinylformamid und einen oder mehrere Polyvinyl-C₁-C₁₀-alkylester umfasst, erhält, wobei der dritte Zeitraum endet, wenn der Feststoffgehalt des intermediären Copolymers in dem Reaktor größer gleich 20 Gew.-% und kleiner gleich 70 Gew.-% ist;
g) das intermediäre Copolymer entweder unter sauren oder basischen Bedingungen zu einem intermediären Polyvinylamid-Polyvinylalkohol-Copolymer verseift und dann
h) das intermediäre Polyvinylamid-Polyvinylalkohol-Copolymer unter sauren oder basischen Bedingungen zu dem wasserlöslichen Polyvinylamin-Polyvinylalkohol-Copolymer hydrolysiert, und
wobei die Barriereschicht durch Aufbringen des Polyvinylamin-Polyvinylalkohol-Copolymers auf ein Substrat als wasserlösliche Zusammensetzung gebildet wird.

12. Artikel, umfassend die Barrierschicht nach Anspruch 1.

13. Steifer Artikel, umfassend die Barrierschicht nach Anspruch 1.

14. Flexibler Artikel, umfassend die Barrierschicht nach Anspruch 1.

15. Artikel nach Anspruch 12 mit einem Sauerstoffreduktionsindex kleiner gleich 1%, wobei der Sauerstoffreduktionsindex ein Maß für das Ausströmen von Sauerstoff durch den Artikel, ausgedrückt als Prozentanteil von Sauerstoff, der unter im Wesentlichen identischen Bedingungen durch ein im Wesentlichen identisches unbeschichtetes Substrat ausströmt, ist.

## Revendications

1. Couche barrière comprenant un copolymère de polyvinylamine-alcool de polyvinyle appliqué sur un substrat en tant que composition hydrosoluble, dans laquelle le copolymère de polyvinylamine-alcool de polyvinyle est formé en copolymérisant :
(a) 99 à 1 % en mole de N-vinylformamide, et
(b) 1 à 99 % en mole d'un ou de plusieurs alkyl(en C₁-C₁₀)esters de vinyle, puis en hydrolysant 30 à 100 % en mole des groupes formyle des motifs copolymérisés (a) pour former des groupes amino et 30 à 100 % en mole des groupes alkyl(en C₁-C₁₀)-ester des motifs copolymérisés (b) pour former des groupes hydroxyle,
où le copolymère a une distribution unimodale de composition telle que montrée par essentiellement un pic dans une analyse chromatographique à gradient d'élution par perméation du gel,
et où de plus le copolymère est essentiellement exempt de cycles amidine, tel que montré par un manque d'absorption dans un spectre de RMN ¹³C qui est en adéquation avec l'absorption d'un atome de carbone d'amidine.

2. Couche barrière de la revendication 1, dans laquelle une solution aqueuse à 4 % du copolymère de polyvinylamine-alcool de polyvinyle mesurée au niveau d'une cellule de 10 mm a une valeur de couleur APHA inférieure ou égale à 10 unités APHA, déterminée conformément à ASTM D 1209 ou à une méthode comparable.

3. Couche barrière de la revendication 1, dans laquelle les alkyl(en C₁-C₁₀)esters de vinyle sont de l'acétate de vinyle, du propionate de vinyle ou une combinaison de ceux-ci.

4. Couche barrière de la revendication 1, dans laquelle le copolymère de polyvinylamine-alcool de polyvinyle comprend 0,5 % en mole à 20 % en mole de groupes fonctionnels amine.

5. Couche barrière de la revendication 1, dans laquelle une solution aqueuse à 4 % du copolymère de polyvinylamine-alcool de polyvinyle à 20 °C a une turbidité inférieure à 100 NTU.

6. Couche barrière de la revendication 1, comprenant en outre au moins un polymère supplémentaire sélectionné dans le groupe composé de copolymères de N-vinyl-pyridine, de sels de mono-, di- ou tri-alkylammonium insaturés en éthylène, de N-méthylaminoéthylacrylate, de N,N-diméthylaminoéthyl-méthacrylate, de N,N-diméthylaminométhyl-N-acrylamide, de N,N-diméthylaminoéthyl-N-acrylamide, d'alcool de polyvinyle, de latex, de polyuréthane, de polyesters, de polyamides, de polyvinylpyridine, de polymères d'acide acrylique, de copolymères d'anhydride maléique, d'oxyde de polyalkylène, de copolymères de méthacrylamide, de polyvinyl-oxazolidinones, de copolymères d'acide maléique, de copolymères de vinylamine, de copolymères d'acide méthacrylique, de copolymères d'acryloyloxyalkyl-acide sulfonique, de copolymères de vinylimidazole, de copolymères de sulfure de vinyle, d'homopolymères ou de copolymères contenant de l'acide styrènesulfonique, de copolymères d'alphaoléfine-acétate de vinyle, de copolymères d'alphaoléfine-alcool de vinyle, et de leurs combinaisons.

7. Couche barrière de la revendication 6, dans laquelle la couche barrière comprend un copolymère d'éthylène-alcool de vinyle.

8. Couche barrière de la revendication 1, dans laquelle la couche barrière est présente au sein d'un article de façon telle que la couche barrière est disposée entre au moins deux couches.

9. Couche barrière de la revendication 1, dans laquelle la couche barrière est appliquée sur un substrat, dans laquelle en outre le substrat est une ébauche qui, après que le revêtement barrière est appliqué dessus, est ensuite moulée par soufflage pour produire un article final.

10. Couche barrière de la revendication 1, dans laquelle la couche barrière est appliquée sur un substrat qui est un article moulé par soufflage.

11. Procédé de fabrication d'une couche barrière selon la revendication 1, comprenant un copolymère de polyvinylamine-alcool de polyvinyle appliqué sur un substrat en tant que composition hydrosoluble, où le copolymère de polyvinylamine-alcool de polyvinyle est formé par un procédé comprenant les étapes consistant à :
a) charger une première portion d'une quantité totale de N-vinylformamide dans un réacteur ;
b) charger une première portion d'une quantité totale d'au moins un alkyl(en C₁-C₁₀)ester de vinyle dans le réacteur ;
c) alimenter en continu le réacteur avec une première portion d'une quantité totale d'un catalyseur de polymérisation radicalaire selon une première vitesse d'écoulement du catalyseur ;
d) mettre en contact la première portion de N-vinylformamide, la première portion d'au moins un alkyl(en C₁-C₁₀)ester de vinyle, en présence du catalyseur de polymérisation radicalaire dans des conditions de polymérisation pendant une première période de temps ;
e) suite à la première période de temps, alimenter le réacteur en continu pendant une seconde période de temps avec une seconde portion du n-vinylformamide selon une vitesse d'écoulement du n-vinylformamide tout en alimentant simultanément le réacteur avec une seconde portion d'au moins un alkyl(en C₁-C₁₀)ester de vinyle selon une vitesse d'écoulement de l'ester, en alimentant simultanément le réacteur avec une seconde portion du catalyseur de polymérisation radicalaire selon une seconde vitesse d'écoulement du catalyseur, dans des conditions de polymérisation, jusqu'à ce que la quantité totale du N-vinylformamide, la quantité totale de l'alkyl(en C₁-C₁₀)ester de vinyle et la quantité totale du catalyseur de polymérisation radicalaire aient été amenés dans le réacteur ;
f) puis mettre en contact pendant une troisième période de temps le n-vinylformamide et l'alkyl(en C₁-C₁₀)ester de vinyle, au moins au nombre de un, en présence du catalyseur de polymérisation radicalaire dans le réacteur dans des conditions de polymérisation afin de produire un copolymère intermédiaire comprenant du polyvinylformamide et un ou plusieurs alkyl(en C₁-C₁₀)esters de vinyle, où la troisième période de temps expire lorsque la teneur en solides du copolymère intermédiaire dans le réacteur est supérieure ou égale à 20 % en poids et inférieure ou égale à 70 % en poids ;
g) saponifier le copolymère intermédiaire dans des contions acides ou basiques pour produire un copolymère intermédiaire de polyvinylamide-alcool de polyvinyle ; suivi par l'étape consistant à
h) hydrolyser le copolymère intermédiaire de polyvinylamide-alcool de polyvinyle dans des conditions acides ou basiques pour produire le copolymère hydrosoluble de polyvinylamine-alcool de polyvinyle, et
dans lequel la couche barrière est formée en appliquant le copolymère de polyvinylamine-alcool de polyvinyle sur un substrat en tant que composition hydrosoluble.

12. Article comprenant la couche barrière de la revendication 1.

13. Article rigide comprenant la couche barrière de la revendication 1.

14. Article flexible comprenant la couche barrière de la revendication 1.

15. Article selon la revendication 12, présentant un indice de réduction d'oxygène inférieur ou égal à 1 %, où l'indice de réduction d'oxygène est une mesure de l'effusion d'oxygène par l'article, exprimé en pourcentage d'oxygène qui passe à travers un substrat non revêtu essentiellement identique dans des conditions essentiellement identiques.
